# EUROPEAN PATENT APPLICATION

(11) **EP 4 838 822 A1**
(43) Date of publication of application: **11.11.2026**
(21) Application number: 25744523.9
(22) Date of filing: 17.01.2025
(51) Int. Cl.: H04L 5/00, H04W 72/0453, H04W 72/0446

(54) **COMMUNICATION METHOD AND COMMUNICATION APPARATUS**

(30) Priority: 22.01.2024 CN 202410093371
(71) Applicant: Huawei Technologies Co., Ltd., Shenzhen, Guangdong 518129 (CN)
(72) Inventor: LI, Kexin, Shenzhen, Guangdong 518129 (CN); WU, Fangzhou, Shenzhen, Guangdong 518129 (CN); ZHU, Huiying, Shenzhen, Guangdong 518129 (CN); DONG, Pengpeng, Shenzhen, Guangdong 518129 (CN)
(74) Representative: Pfenning, Meinig & Partner mbB
(86) International application number: PCT/CN2025/073009
(87) International publication number: WO 2025/157082

(57) **Abstract**

The present application discloses a communication method and a communication apparatus. The present application is applicable to communication scenarios supporting simultaneous wireless information and power transfer (SWIPT). The method comprises: receiving a third signal, the third signal comprising a first OFDM symbol and a second OFDM symbol, the time-frequency resource occupied by the first OFDM symbol and the time-frequency resource occupied by the second OFDM symbol being the same, the first OFDM symbol carrying a first modulation symbol block, the second OFDM symbol carrying a second modulation symbol block, and an intersection of a set of subcarriers corresponding to modulation symbols in the first modulation symbol block and a set of subcarriers corresponding to modulation symbols in the second modulation symbol block being an empty set; performing energy harvesting using the third signal; and obtaining a bit sequence based on the third signal. The present application can provide support for achieving both energy harvesting efficiency and data demodulation performance while implementing coexistence of wireless energy transfer and data transmission.

## Description

This application claims priority to the Chinese patent application No. 202410093371.2, entitled "Communication Method and Communication Apparatus", filed with the China National Intellectual Property Administration on January 22, 2024, the entire contents of which are incorporated herein by reference.

### TECHNICAL FIELD

The present application relates to the communication field, and in particular, to a communication method and a communication apparatus.

### BACKGROUND

With the development of wireless networks and the increase in service demand, a massive number of Internet of Things (IoT) devices exist in networks. These IoT devices are low in cost and compact in size, are unable to carry high-capacity batteries, and have the problem of short standby time. In order to solve the problem of short standby time of IoT devices, it has been proposed to provide energy to IoT devices by means of ambient energy harvesting. Wireless radio frequency (RF) energy is one of the candidate energy sources, having the advantages that the magnitude and source of the energy are controllable, and that it possesses a certain penetration capability and a relatively long transmission distance.

Current RF energy harvesting schemes mainly consider harvesting wireless electromagnetic waves that exist naturally in the environment. However, because the energy source is not matched and coordinated for optimization, the efficiency of energy harvesting is extremely low and cannot meet the daily usage demands of IoT devices. A large number of base stations are deployed in cellular mobile communication networks; these base stations are typically equipped with multiple antennas, and are capable of transmitting designed electromagnetic waves in different frequency bands and/or time periods and providing directional beams to enhance RF energy in certain directions, thereby improving the efficiency of energy transmission to a certain extent. Therefore, achieving wireless power transfer (WPT) via base stations is one of the important approaches for solving the problem of short standby time of IoT devices in the future.

Since the resources of cellular mobile communication networks are limited, if a large amount of resources is used for charging IoT devices, the resources available for communication will be restricted. If energy harvesting for an IoT device can be performed simultaneously while data is being transmitted to the IoT device, resource utilization can be improved. Accordingly, there is a need to study schemes for simultaneously performing energy harvesting for an IoT device while transmitting data to the IoT device.

### SUMMARY

The embodiments of the present application disclose a communication method and a communication apparatus, with a view to providing support for, while achieving coexistence of wireless energy transmission and data transmission, balancing energy harvesting efficiency with data demodulation performance, such that it becomes possible to balance energy harvesting efficiency with data demodulation performance while achieving coexistence of wireless energy transmission and data transmission.

According to a first aspect, an embodiment of the present application provides a communication method, the method comprising: receiving a third signal, the third signal comprising a first orthogonal frequency division multiplexing (OFDM) symbol and a second OFDM symbol, the time-frequency resource occupied by the first OFDM symbol and the time-frequency resource occupied by the second OFDM symbol being the same, the first OFDM symbol carrying a first modulation symbol block, the second OFDM symbol carrying a second modulation symbol block, a set of subcarriers corresponding to the modulation symbols in the first modulation symbol block being a part of the subcarriers comprised in said time-frequency resource, a set of subcarriers corresponding to the modulation symbols in the second modulation symbol block being a part of the subcarriers comprised in said time-frequency resource, and an intersection of the set of subcarriers corresponding to the modulation symbols in the first modulation symbol block and the set of subcarriers corresponding to the modulation symbols in the second modulation symbol block being an empty set, and the first modulation symbol block and the second modulation symbol block each carrying at least one of data information and control information; performing energy harvesting by using the third signal; and obtaining, based on the third signal, a bit sequence, the bit sequence comprising the data information or the control information carried by the first modulation symbol block. The expression "the third signal comprises a first OFDM symbol and a second OFDM symbol" may be replaced with: the third signal is obtained from a plurality of signals, comprising a first signal and a second signal, transmitted by a transmitting end and occupying the same time-frequency resource; or the third signal is a signal received by a receiving end after a plurality of signals, comprising a first signal and a second signal, transmitted by a transmitting end and occupying the same time-frequency resource have been transmitted through a channel, wherein the first signal carries the first OFDM symbol and the second signal carries the second OFDM symbol. The third signal may be obtained by superposing two or more signals, comprising the first signal and the second signal, that occupy the same time-frequency resource; these signals may be transmitted by the same transmitting end via different physical antennas or virtual antennas, or may be transmitted by different transmitting ends, wherein the first signal carries the first OFDM symbol and the second signal carries the second OFDM symbol. The expression "the time-frequency resource occupied by the first OFDM symbol and the time-frequency resource occupied by the second OFDM symbol are the same" may be replaced with: the time-frequency resource occupied by the first signal and the time-frequency resource occupied by the second signal are the same.

Wherein, "the time-frequency resource occupied by the first OFDM symbol and the time-frequency resource occupied by the second OFDM symbol are the same" may mean that the time-frequency resources to which the first OFDM symbol and the second OFDM symbol are mapped are the same. An OFDM symbol may be regarded as one symbol comprising N subcarriers on one time-domain symbol, and may also be regarded as the time-frequency resource represented by N resource elements (REs) on one time-domain symbol. Alternatively, an OFDM symbol is a frequency-domain sequence on one time-domain symbol, wherein the so-called frequency-domain sequence may comprise different frequency components and the amplitude and/or phase contained by such frequency components.

In the embodiments of the present application, by performing energy harvesting using the third signal and obtaining the bit sequence based on the third signal, coexistence of wireless energy transmission and data transmission can be achieved. A plurality of signals (for example, the first signal and the second signal) that occupy the same time-frequency resource and have a relatively low peak-to-average power ratio (PAPR) can be superposed in wireless channel transmission (or in the air) into a signal having a relatively high PAPR, such as the third signal. Since the third signal is obtained based on the first signal and the second signal, the third signal can have a relatively high PAPR, and performing energy harvesting using the third signal can improve energy harvesting efficiency. In the prior art, the transmission of a signal having a relatively high PAPR by a transmitting end reduces the efficiency of the power amplifier of its transmitter, and also reduces the signal-to-quantization-noise ratio of its digital-to-analog converter (DAC) and analog-to-digital converter (ADC), thereby deteriorating the data demodulation performance at the receiving end with respect to that signal. In other words, the prior art is unable, while achieving coexistence of wireless energy transmission and data transmission, to balance energy harvesting efficiency with data demodulation performance. Because the third signal is obtained based on the first signal and the second signal, rather than the transmitting end directly transmitting a signal having a relatively high PAPR, performing energy harvesting using the third signal and obtaining the bit sequence based on the third signal can balance energy harvesting efficiency with data demodulation performance while achieving coexistence of wireless energy transmission and data transmission.

In a possible implementation manner, the modulation symbol sequence corresponding to the first modulation symbol block and the modulation symbol sequence corresponding to the second modulation symbol block are each a part of a first modulation symbol sequence; or, the modulation symbol sequence corresponding to the first modulation symbol block and the modulation symbol sequence corresponding to the second modulation symbol block each correspond to a first logical channel or physical channel.

In this implementation manner, the modulation symbol sequence corresponding to the first modulation symbol block and the modulation symbol sequence corresponding to the second modulation symbol block are each a part of the first modulation symbol sequence, which can improve the efficiency of transmitting the first modulation symbol sequence.

In a possible implementation manner, the bit sequence further comprises data information or control information carried by the second modulation symbol block, and the bit sequence corresponding to the first modulation symbol block and the bit sequence corresponding to the second modulation symbol block are each a part of said bit sequence.

In this implementation manner, the bit sequence corresponding to the first modulation symbol block and the bit sequence corresponding to the second modulation symbol block are each a part of the bit sequence, which can improve the efficiency of receiving the bit sequence.

In a possible implementation manner, the modulation symbols corresponding to the bit sequence are all or some of the modulation symbols carried by the subcarriers comprised in the time-frequency resource.

In a possible implementation manner, the PAPR of the third signal is higher than a preset threshold, i.e., a predefined threshold. Optionally, the PAPR of the first signal and the PAPR of the second signal are both lower than the preset threshold. The preset threshold may be set according to actual requirements so as to ensure the energy harvesting efficiency of the signal.

In this implementation manner, the PAPR of the third signal being higher than the preset threshold can improve the energy harvesting efficiency of the third signal.

In a possible implementation manner, the first signal corresponds to a first spatial layer, the second signal corresponds to a second spatial layer, and the first spatial layer and the second spatial layer are different.

In a possible implementation manner, obtaining the bit sequence based on the third signal comprises: obtaining the bit sequence based on the third signal and positions, in a first modulation symbol sequence, of modulation symbols carried by the subcarriers comprised in the time-frequency resource, the modulation symbols carried by the subcarriers comprised in the time-frequency resource comprising the modulation symbols in the first modulation symbol block and the modulation symbols in the second modulation symbol block. The modulation symbols carried by the subcarriers comprised in the time-frequency resource may further comprise modulation symbols in other modulation symbol blocks, which is not limited in the present application. In the present application, one modulation symbol block comprises one or more modulation symbols, and one modulation symbol sequence comprises a plurality of modulation symbol blocks. For example, one modulation symbol sequence may be split into a plurality of modulation symbol blocks. Equivalently, a plurality of modulation symbol blocks may be merged into one modulation symbol sequence.

In this implementation manner, obtaining the bit sequence based on the positions, in the first modulation symbol sequence, of the modulation symbols carried by the subcarriers comprised in the time-frequency resource can accurately obtain the bit sequence corresponding to the first modulation symbol sequence.

In a possible implementation manner, the method further comprises: receiving first information; and determining, based on the first information, positions, in the first modulation symbol sequence, of the modulation symbols carried by the subcarriers comprised in the time-frequency resource.

In this implementation manner, the positions, in the first modulation symbol sequence, of the modulation symbols carried by the subcarriers comprised in the time-frequency resource are determined based on the first information, so that the bit sequence can be obtained based on the positions, in the first modulation symbol sequence, of the modulation symbols carried by the subcarriers comprised in the time-frequency resource.

In a possible implementation manner, the first information comprises a first index value, the first index value being used to indicate respective positions, in the first modulation symbol sequence, of the modulation symbols carried by the subcarriers comprised in the time-frequency resource; or, the first index value is used to indicate at least one of: numbers of a plurality of first subcarriers, among the subcarriers comprised in the time-frequency resource, that carry the modulation symbols in the first modulation symbol block; and respective positions, in the first modulation symbol sequence, of the modulation symbols carried by the plurality of first subcarriers.

In this implementation manner, the first information comprises the first index value, which is used to indicate the positions, in the first modulation symbol sequence, of the modulation symbols carried by the subcarriers comprised in the time-frequency resource, or to indicate at least one of: the numbers of the plurality of first subcarriers, among the subcarriers comprised in the time-frequency resource, that carry the modulation symbols in the first modulation symbol block; and the respective positions, in the first modulation symbol sequence, of the modulation symbols carried by the plurality of first subcarriers; signaling overhead can thereby be saved.

In a possible implementation manner, the first information comprises a first transmission parameter, the first transmission parameter being used for at least one of: determining the numbers of the plurality of first subcarriers, among the subcarriers comprised in the time-frequency resource, that carry the modulation symbols in the first modulation symbol block; and determining the respective positions, in the first modulation symbol sequence, of the modulation symbols carried by the plurality of first subcarriers.

In this implementation manner, the first transmission parameter is used for at least one of: determining the numbers of the plurality of first subcarriers, among the subcarriers comprised in the time-frequency resource, that carry the modulation symbols in the first modulation symbol block; and determining the respective positions, in the first modulation symbol sequence, of the modulation symbols carried by the plurality of first subcarriers; signaling overhead can thereby be saved.

In a possible implementation manner, the first transmission parameter comprises at least one of: a number of the plurality of first subcarriers, and an order parameter, the order parameter being used for determining the positions, in the first modulation symbol sequence, of the modulation symbols in the first modulation symbol block.

In a possible implementation manner, the first transmission parameter further comprises numbering information, and the numbering information and the number of the plurality of first subcarriers are used for determining the numbers of the plurality of first subcarriers, among the subcarriers comprised in the time-frequency resource, that carry the modulation symbols in the first modulation symbol block.

In this implementation manner, the numbering information and the number of the plurality of first subcarriers are used for determining the numbers of the plurality of first subcarriers, among the subcarriers comprised in the time-frequency resource, that carry the modulation symbols in the first modulation symbol block, whereby signaling overhead can be saved.

In a possible implementation manner, the method further comprises: receiving first indication information from a first transmitting end; and determining, based on the first indication information, the numbers of a plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers.

In a possible implementation manner, the method further comprises: receiving first indication information from a first transmitting end; determining, based on the first indication information, the numbers of a plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers; receiving second indication information from a second transmitting end; and determining, based on the second indication information, the numbers of a plurality of second subcarriers, among the subcarriers comprised in the time-frequency resource, that carry the modulation symbols in the second modulation symbol block, and the respective positions, in the first modulation symbol sequence, of the modulation symbols carried by the plurality of second subcarriers.

In a possible implementation manner, the first indication information comprises a second index value, the second index value being used to indicate at least one of: the numbers of the plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers.

In this implementation manner, the second index value comprised in the first information can save signaling overhead.

In a possible implementation manner, the first indication information comprises a second transmission parameter, the second transmission parameter being used for at least one of: determining the numbers of the plurality of first subcarriers, among the subcarriers comprised in the time-frequency resource, that carry the modulation symbols in the first modulation symbol block; and determining the respective positions, in the first modulation symbol sequence, of the modulation symbols carried by the plurality of first subcarriers; the second transmission parameter comprises at least one of: a number of the plurality of first subcarriers, and an order parameter, the order parameter being used for determining the positions, in the first modulation symbol sequence, of the modulation symbols in the first modulation symbol block.

In this implementation manner, the second transmission parameter is used for at least one of: determining the numbers of the plurality of first subcarriers, among the subcarriers comprised in the time-frequency resource, that carry the modulation symbols in the first modulation symbol block; and determining the respective positions, in the first modulation symbol sequence, of the modulation symbols carried by the plurality of first subcarriers; whereby signaling overhead can be saved.

In a possible implementation manner, the second indication information comprises a third index value, the third index value being used to indicate at least one of: the numbers of the plurality of second subcarriers, among the subcarriers comprised in the time-frequency resource, that carry the modulation symbols in the second modulation symbol block, and the respective positions, in the first modulation symbol sequence, of the modulation symbols carried by the plurality of second subcarriers.

In this implementation manner, the third index value comprised in the first information can save signaling overhead.

In a possible implementation manner, the second indication information comprises a third transmission parameter, the third transmission parameter being used for at least one of: determining the numbers of the plurality of second subcarriers, among the subcarriers comprised in the time-frequency resource, that carry the modulation symbols in the second modulation symbol block; and determining the respective positions, in the first modulation symbol sequence, of the modulation symbols carried by the plurality of second subcarriers; the third transmission parameter comprises at least one of: a number of the plurality of second subcarriers, and an order parameter, the order parameter being used for determining the positions, in the first modulation symbol sequence, of the modulation symbols in the second modulation symbol block.

In this implementation manner, the third transmission parameter is used for at least one of: determining the numbers of the plurality of second subcarriers, among the subcarriers comprised in the time-frequency resource, that carry the modulation symbols in the second modulation symbol block; and determining the respective positions, in the first modulation symbol sequence, of the modulation symbols carried by the plurality of second subcarriers; whereby signaling overhead can be saved.

In a possible implementation manner, obtaining the bit sequence based on the third signal comprises: obtaining the bit sequence based on the numbers of the plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers, the first modulation symbol block being obtained based on the first modulation symbol sequence.

In this implementation manner, the bit sequence corresponding to the first modulation symbol sequence can be accurately obtained.

In a possible implementation manner, prior to obtaining the bit sequence based on the numbers of the plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers, the method further comprises: receiving second information; and determining, based on the second information, the positions, in the first modulation symbol sequence, of the modulation symbols in the first modulation symbol block that are carried by the subcarriers comprised in the time-frequency resource.

In this implementation manner, the positions, in the first modulation symbol sequence, of the modulation symbols in the first modulation symbol block that are carried by the subcarriers comprised in the time-frequency resource are determined based on the second information, so that the bit sequence can be obtained based on said positions.

In a possible implementation manner, the second information comprises a second index value, the second index value being used to indicate at least one of: the numbers of the plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers.

In this implementation manner, the second index value comprised in the first information can save signaling overhead.

In a possible implementation manner, the second information comprises a second transmission parameter, the second transmission parameter being used for at least one of: determining the numbers of the plurality of first subcarriers, among the subcarriers comprised in the time-frequency resource, that carry the modulation symbols in the first modulation symbol block; and determining the respective positions, in the first modulation symbol sequence, of the modulation symbols carried by the plurality of first subcarriers; the second transmission parameter comprises at least one of: a number of the plurality of first subcarriers, and an order parameter, the order parameter being used for determining the positions, in the first modulation symbol sequence, of the modulation symbols in the first modulation symbol block.

In this implementation manner, the second transmission parameter is used for at least one of: determining the numbers of the plurality of first subcarriers, among the subcarriers comprised in the time-frequency resource, that carry the modulation symbols in the first modulation symbol block; and determining the respective positions, in the first modulation symbol sequence, of the modulation symbols carried by the plurality of first subcarriers; whereby signaling overhead can be saved.

According to a second aspect, an embodiment of the present application provides a communication method, the method comprising: generating a first signal and a second signal, the first signal carrying a first OFDM symbol, the second signal carrying a second OFDM symbol, the time-frequency resource occupied by the first OFDM symbol and the time-frequency resource occupied by the second OFDM symbol being the same, the first OFDM symbol carrying a first modulation symbol block, the second OFDM symbol carrying a second modulation symbol block, a set of subcarriers corresponding to the modulation symbols in the first modulation symbol block being a part of the subcarriers comprised in said time-frequency resource, a set of subcarriers corresponding to the modulation symbols in the second modulation symbol block being a part of the subcarriers comprised in said time-frequency resource, and an intersection of the set of subcarriers corresponding to the modulation symbols in the first modulation symbol block and the set of subcarriers corresponding to the modulation symbols in the second modulation symbol block being an empty set, and the first modulation symbol block and the second modulation symbol block each carrying at least one of data information and control information; and transmitting the first signal and the second signal.

In the embodiments of the present application, the first OFDM symbol carried by the first signal and the second OFDM symbol carried by the second signal occupy the same time-frequency resource. After transmitting the first signal and the second signal, the first signal and the second signal will be superposed in wireless channel transmission (or in the air) into a signal having a relatively high PAPR, which can improve the efficiency with which the receiving end performs energy harvesting using the signal obtained after the first signal and the second signal have been transmitted through the wireless channel. In the prior art, the transmission of a signal having a relatively high PAPR by a transmitting end reduces the efficiency of the power amplifier of its transmitter, and also reduces the signal-to-quantization-noise ratio of its DAC and ADC, thereby deteriorating the data demodulation performance at the receiving end with respect to that signal. In other words, the prior art is unable, while achieving coexistence of wireless energy transmission and data transmission, to balance energy harvesting efficiency with data demodulation performance. Because the transmitted first signal and second signal will be superposed in wireless channel transmission into a signal having a relatively high PAPR, rather than a signal having a relatively high PAPR being transmitted directly, i.e., the PAPR of the first signal and the PAPR of the second signal are both relatively low, energy harvesting efficiency and data demodulation performance can be balanced while achieving coexistence of wireless energy transmission and data transmission.

In a possible implementation manner, the first signal and the second signal correspond to different RF chains.

In this implementation manner, the first signal and the second signal correspond to different RF chains, so that the signals of the RF chains, i.e., the first signal and the second signal, have a relatively low PAPR.

In a possible implementation manner, the first signal corresponds to a first antenna port group, and the second signal corresponds to a second antenna port group, the first antenna port group comprising one or more first antenna ports, the second antenna port group comprising one or more second antenna ports, and the first antenna port and the second antenna port being different. An antenna port group and an RF chain may be in a one-to-one correspondence.

Because an antenna port group and an RF chain are in a one-to-one correspondence, the first antenna port group and the second antenna port group correspond to different RF chains, so as to support the signals of the RF chains, i.e., the first signal and the second signal, having a relatively low PAPR, thereby balancing energy harvesting efficiency with data demodulation performance while achieving coexistence of wireless energy transmission and data transmission.

In a possible implementation manner, the first signal and the second signal are used for energy harvesting.

In a possible implementation manner, the PAPR of the first signal and the PAPR of the second signal are both lower than a preset threshold. The preset threshold may be set according to actual requirements, so as to avoid the adverse effects caused by the transmitting end transmitting a signal of high PAPR on the efficiency of its transmitter's power amplifier and on the signal-to-quantization-noise ratio of its DAC and ADC.

In a possible implementation manner, at most h subcarriers among the subcarriers comprised in the time-frequency resource carry modulation symbols in the first modulation symbol block, where h equals (n/m + r) or the ceiling of (n/m + r), m is an integer greater than 1, m is less than or equal to the number of antenna port groups available for the time-frequency resource, r is an integer greater than or equal to 0, n is the total number of subcarriers comprised in the time-frequency resource, and the antenna port groups corresponding to the time-frequency resource comprise the first antenna port group and the second antenna port group.

In this implementation manner, at most h subcarriers among the subcarriers comprised in the time-frequency resource carry modulation symbols in the first modulation symbol block, so that the subcarriers comprised in the time-frequency resource can carry modulation symbols of a plurality of modulation symbol blocks.

In a possible implementation manner, the modulation symbols in the first modulation symbol block and the modulation symbols in the second modulation symbol block are obtained based on the same bit sequence; or, the modulation symbols in the first modulation symbol block and the modulation symbols in the second modulation symbol block are obtained based on bit sequences to be transmitted to different receiving ends.

In a possible implementation manner, the first OFDM symbol further carries a third modulation symbol block, and the third modulation symbol block and the first modulation symbol block are obtained based on bit sequences to be transmitted to different receiving ends.

In this implementation manner, the first OFDM symbol further carries the third modulation symbol block, which can improve resource utilization.

In a possible implementation manner, the modulation symbols in the first modulation symbol block and the modulation symbols in the second modulation symbol block are obtained based on the same bit sequence; the method further comprises: transmitting first information, the first information being used for determining positions, in a first modulation symbol sequence, of modulation symbols carried by subcarriers comprised in the time-frequency resource, the modulation symbols carried by the subcarriers comprised in the time-frequency resource comprising the modulation symbols in the first modulation symbol block and the modulation symbols in the second modulation symbol block, and the first modulation symbol block and the second modulation symbol block being obtained based on the first modulation symbol sequence.

In this implementation manner, the first information is transmitted, so that the receiving end can determine, based on the first information, the positions, in the first modulation symbol sequence, of the modulation symbols carried by the subcarriers comprised in the time-frequency resource.

In a possible implementation manner, the first information comprises a first index value, the first index value being used to indicate respective positions, in the first modulation symbol sequence, of the modulation symbols carried by the subcarriers comprised in the time-frequency resource; or, the first index value is used to indicate at least one of: the numbers of a plurality of first subcarriers, among the subcarriers comprised in the time-frequency resource, that carry the modulation symbols in the first modulation symbol block; and the respective positions, in the first modulation symbol sequence, of the modulation symbols carried by the plurality of first subcarriers.

In this implementation manner, the first information comprises the first index value, which is used to indicate the positions, in the first modulation symbol sequence, of the modulation symbols carried by the subcarriers comprised in the time-frequency resource, or to indicate at least one of: the numbers of the plurality of first subcarriers, among the subcarriers comprised in the time-frequency resource, that carry the modulation symbols in the first modulation symbol block; and the respective positions, in the first modulation symbol sequence, of the modulation symbols carried by the plurality of first subcarriers; signaling overhead can thereby be saved.

In a possible implementation manner, the first information comprises a first transmission parameter, the first transmission parameter being used for at least one of: determining the numbers of the plurality of first subcarriers, among the subcarriers comprised in the time-frequency resource, that carry the modulation symbols in the first modulation symbol block; and determining the respective positions, in the first modulation symbol sequence, of the modulation symbols carried by the plurality of first subcarriers.

In this implementation manner, the first transmission parameter is used for at least one of: determining the numbers of the plurality of first subcarriers, among the subcarriers comprised in the time-frequency resource, that carry the modulation symbols in the first modulation symbol block; and determining the respective positions, in the first modulation symbol sequence, of the modulation symbols carried by the plurality of first subcarriers; whereby signaling overhead can be saved.

In a possible implementation manner, the first transmission parameter comprises at least one of: a number of the plurality of first subcarriers, and an order parameter, the order parameter being used for determining the positions, in the first modulation symbol sequence, of the modulation symbols in the first modulation symbol block.

In a possible implementation manner, the first transmission parameter further comprises numbering information, and the numbering information and the number of the plurality of first subcarriers are used for determining the numbers of the plurality of first subcarriers, among the subcarriers comprised in the time-frequency resource, that carry the modulation symbols in the first modulation symbol block.

In a possible implementation manner, the modulation symbols in the first modulation symbol block and the modulation symbols in the second modulation symbol block are obtained based on bit sequences to be transmitted to different receiving ends; the method further comprises: transmitting second information, the second information being used for determining positions, in a first modulation symbol sequence, of the modulation symbols in the first modulation symbol block that are carried by the subcarriers comprised in the time-frequency resource, the first modulation symbol block being obtained based on the first modulation symbol sequence, and the first modulation symbol sequence being obtained based on a bit sequence to be transmitted to a first receiving end; and transmitting third information, the third information being used for determining positions, in a second modulation symbol sequence, of the modulation symbols in the second modulation symbol block that are carried by the subcarriers comprised in the time-frequency resource, the second modulation symbol block being obtained based on the second modulation symbol sequence, the second modulation symbol sequence being obtained based on a bit sequence to be transmitted to a second receiving end, and the second receiving end and the first receiving end being different.

In this implementation manner, the second information is transmitted so that the first receiving end can determine, based on the second information, the positions, in the first modulation symbol sequence, of the modulation symbols in the first modulation symbol block that are carried by the subcarriers comprised in the time-frequency resource; and the third information is transmitted so that the second receiving end can determine, based on the third information, the positions, in the second modulation symbol sequence, of the modulation symbols in the second modulation symbol block that are carried by the subcarriers comprised in the time-frequency resource.

In a possible implementation manner, the second information comprises a second index value, the second index value being used to indicate at least one of: the numbers of the plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers.

In this implementation manner, the second information comprises the second index value, which can save signaling overhead.

In a possible implementation manner, the second information comprises a second transmission parameter, the second transmission parameter being used for at least one of: determining the numbers of the plurality of first subcarriers, among the subcarriers comprised in the time-frequency resource, that carry the modulation symbols in the first modulation symbol block; and determining the respective positions, in the first modulation symbol sequence, of the modulation symbols carried by the plurality of first subcarriers; the second transmission parameter comprises at least one of: a number of the plurality of first subcarriers, and an order parameter, the order parameter being used for determining the positions, in the first modulation symbol sequence, of the modulation symbols in the first modulation symbol block.

In this implementation manner, the second information comprises the second transmission parameter, which can save signaling overhead.

In a possible implementation manner, the method further comprises: obtaining a first modulation symbol sequence; splitting the first modulation symbol sequence into v sub-sequences, v being an integer greater than 1, v being less than or equal to the number of antenna port groups available for the time-frequency resource, the v sub-sequences comprising a first sub-sequence and a second sub-sequence, the first sub-sequence corresponding to the first modulation symbol block, and the second sub-sequence corresponding to the second modulation symbol block; obtaining the first OFDM symbol based on the first modulation symbol block, and obtaining the second OFDM symbol based on the second modulation symbol block. Illustratively, the first sub-sequence is the first modulation symbol block, and the second sub-sequence is the second modulation symbol block.

In this implementation manner, the first OFDM symbol is obtained based on the first modulation symbol block, and the second OFDM symbol is obtained based on the second modulation symbol block; so that the first OFDM symbol and the second OFDM symbol can be carried respectively by the first signal and the second signal having a relatively low PAPR, thereby avoiding direct transmission of a signal having a relatively high PAPR.

In a possible implementation manner, splitting the first modulation symbol sequence into v sub-sequences comprises: mapping the first modulation symbol sequence to v layers (spatial layers) to obtain the v sub-sequences, the vector corresponding to the v layers being x(i) = [*x*⁽⁰⁾(*i*),*··· , x*^{(*v-*1)}(*i*)] *,* $i = 0 , 1 , … , {M}_{symb}^{layer} - 1 , { M}_{symb}^{layer} = {M}_{symb}$, *M*_{symb} being the length of the first modulation symbol sequence (i.e., the number of modulation symbols in the first modulation symbol sequence), v being an integer greater than 1, and the v layers being in one-to-one correspondence with the v sub-sequences. *x*⁽⁰⁾(*i*) denotes the modulation symbol of layer 0, and *x*^{*(v-*1)}(*i*) denotes the modulation symbol of layer (*v* - 1).

In this implementation manner, the first modulation symbol sequence is mapped to v layers, so that different sub-sequences correspond to different layers.

In a possible implementation manner, the first modulation symbol sequence and the vector *x*(*i*) corresponding to the v layers satisfy the following first mapping rule: $\left[\begin{matrix}{x}^{\left(0\right)} \left(vk\right) = d \left(vk\right) \\ {x}^{\left(1\right)} \left(vk+1\right) = d \left(vk+1\right) \\ … = ⋯ \\ {x}^{\left(v-1\right)} \left(vk+v-1\right) = d \left(vk+v-1\right)\end{matrix}\right]$ (1); wherein *d*(*vk*) denotes the (*vk*)-th modulation symbol in the first modulation symbol sequence, *d*(*vk +* 1) denotes the (*vk +* 1)-th modulation symbol in the first modulation symbol sequence, *d*(*vk + v -* 1) denotes the (*vk + v* - 1)-th modulation symbol in the first modulation symbol sequence, k is an integer greater than or equal to 0, the range of k is 0 to ((*M*_{symb}/*v*) - 1), said first mapping rule indicates that the (v*k* + *j*)-th modulation symbol in the first modulation symbol sequence is mapped to the (v*k* + j)-th symbol of layer j, j is an integer greater than or equal to 0, *x*⁽⁰⁾(*vk*) denotes the (*vk*)-th symbol of layer 0, corresponding to the (*vk*)-th modulation symbol in the first modulation symbol sequence, *x*⁽¹⁾(*vk +* 1) denotes the (*vk +* 1)-th symbol of layer 1, corresponding to the (*vk* + 1)-th modulation symbol in the first modulation symbol sequence, and *x*^{(*v-*1)}(*vk + v -* 1) denotes the ( *vk + v -* 1 )-th symbol of layer ( *v* - 1 ), corresponding to the (*vk + v* - 1)-th modulation symbol in the first modulation symbol sequence.

In this implementation manner, the above first mapping rule is used to map the first modulation symbol sequence to v layers, so that different sub-sequences correspond to different layers of different resources.

In a possible implementation manner, obtaining the first OFDM symbol based on the first modulation symbol block comprises: mapping (antenna port mapping) the modulation symbols in the first modulation symbol block to the first antenna port group; and mapping (mapping to a resource block) the modulation symbols corresponding to the first antenna port group sequentially in order onto a plurality of subcarriers of the first antenna port group, so as to obtain the first OFDM symbol.

In this implementation manner, the modulation symbols in the first modulation symbol block corresponding to a certain spatial layer are mapped to the first antenna port group, i.e., the modulation symbols of the same spatial layer are mapped to the same antenna port group, which can improve spatial utilization.

In a possible implementation manner, obtaining the first OFDM symbol based on the first modulation symbol block comprises: mapping the vector [*x*⁽⁰⁾(*i*), ··· *, x*^{(*v*-1)}(*i*)] corresponding to the v layers onto v antenna port groups, where the vector [*x*⁽⁰⁾(*i*), ··· , *x*^{(*v*-1)}(*i*)] corresponding to the v layers and the modulation symbols corresponding to the v antenna port groups satisfy the following second mapping rule: $\left[\begin{matrix}{y}^{\left({p}_{0}\right)} \left(i\right) = {x}^{\left(0\right)} \left(i\right) \\ {y}^{\left({p}_{1}\right)} \left(i\right) = {x}^{\left(1\right)} \left(i\right) \\ ⋯ = ⋯ \\ {y}^{\left({p}_{v - 1}\right)} \left(i\right) = {x}^{\left(v-1\right)} \left(i\right)\end{matrix}\right]$ (2); wherein *x*⁽⁰⁾(*i*) denotes the i-th modulation symbol of layer 0, *y*^{(*p*⁰)}(*i*) denotes the i-th modulation symbol of antenna port group *p*₀*, x*^{(*v-*1)}(*i*) denotes the i-th modulation symbol of layer (*v* - 1), *y*^{(*pv*}-1)(*i*) denotes the i-th modulation symbol of antenna port group *p*_{*v-*1}, said second mapping rule indicates that the i-th modulation symbol of layer s is mapped onto the i-th modulation symbol of antenna port group *pₛ*, s is greater than or equal to 0 and less than or equal to (*v* - 1), {*p*₀, ... , *p*_{*v-*1}} is a set of antenna port groups, $i = 0 , 1 , … , {M}_{symb}^{ap} - 1 , {M}_{symb}^{ap} = {M}_{symb}^{layer}$; and the ${M}_{symb}^{ap}$ symbols ${y}^{\left(p\right)} \left(0\right) , … , {y}^{\left(p\right)} \left({M}_{symb}^{ap}-1\right)$ are sequentially mapped in order onto the ${M}_{symb}^{ap}$ subcarriers of the corresponding p-th antenna port group, so as to obtain the first OFDM symbol, p being greater than or equal to 0 and less than or equal to *(v* - 1).

In this implementation manner, different antenna port groups correspond to different layers, and different layers occupy different portions of the same time-frequency resource, so that signals transmitted by different antenna port groups can occupy different portions of the same time-frequency resource.

In a possible implementation manner, the first modulation symbol sequence and the vector *x*(*i*) corresponding to the v layers satisfy the following third mapping rule: $\left[\begin{matrix}{x}^{\left(0\right)} \left(i\right) = d \left(vi\right) \\ {x}^{\left(1\right)} \left(i\right) = d \left(vi+1\right) \\ … = ⋯ \\ {x}^{\left(v-1\right)} \left(i\right) = d \left(vi+v-1\right)\end{matrix}\right]$ (3); wherein *d*(*vi*) denotes the (*vi*)-th modulation symbol in the first modulation symbol sequence, d(*vi* + 1) denotes the (*vi* + 1)-th modulation symbol in the first modulation symbol sequence, d(*vi* + *v* - 1) denotes the (*vi + v* - 1)-th modulation symbol in the first modulation symbol sequence, i is an integer greater than or equal to 0, the range of i is 0 to ${M}_{symb}^{layer} , {M}_{symb}^{layer} = {M}_{symb} / v$ , said third mapping rule indicates that the (*vi* + *j*)-th modulation symbol in the first modulation symbol sequence is mapped to the i-th symbol of layer j, j is an integer greater than or equal to 0, *x*⁽⁰⁾(*i*) denotes the i-th symbol of layer 0, corresponding to the (vi)-th modulation symbol in the first modulation symbol sequence, and *x*^{(*v*-1)}(*i*) denotes the i-th symbol of layer *(v* - 1), corresponding to the (*vi + v* - 1)-th modulation symbol in the first modulation symbol sequence.

In this implementation manner, on the same time-frequency resource, modulation symbols exist in each spatial layer, which can improve the utilization of the time-frequency resource.

In a possible implementation manner, obtaining the first OFDM symbol based on the first modulation symbol block comprises: mapping the vector [*x*⁽⁰⁾(i), ··· , *x*^{(*v*-1)}(*i*)] corresponding to the v layers onto v antenna port groups, where the vector [*x*⁽⁰⁾(*i*)*,* ··· , *x*^{(*v-*1)}(i)] corresponding to the v layers and the modulation symbols corresponding to the v antenna port groups satisfy the following fourth mapping rule: $\left[\begin{matrix}{y}^{\left({p}_{0}\right)} \left(vi\right) = {x}^{\left(0\right)} \left(i\right) \\ {y}^{\left({p}_{1}\right)} \left(vi+1\right) = {x}^{\left(1\right)} \left(i\right) \\ ⋯ = ⋯ \\ {y}^{\left({p}_{v - 1}\right)} \left(vi+v-1\right) = {x}^{\left(v-1\right)} \left(i\right)\end{matrix}\right]$ (4); wherein *x*⁽⁰⁾*(i)* denotes the i-th modulation symbol of layer 0, *y*^{(*p*⁰)}(*vi*) denotes the (*vi*)-th modulation symbol of antenna port group *p*₀*, x*^{(*v*-1)}(*i*) denotes the i-th modulation symbol of layer (*v* - 1), *y*^{(*pv-*}1)(*vi* + *v* - 1) denotes the (*vi + v* - 1)-th modulation symbol of antenna port group *p*_{*v-*1}*,* i is an integer greater than or equal to 0, $i = 0 , 1 , … , \left({M}_{symb}^{layer}-1\right)$, said fourth mapping rule indicates that the i-th modulation symbol of layer s is mapped onto the (*vi*+*s*)-th modulation symbol of antenna port group *pₛ*, s is greater than or equal to 0 and less than or equal to *(v* - 1), {*p*₀*,* ... , *p*_{*v-*1}} is a set of antenna port groups, ${M}_{symb}^{ap} = {M}_{symb}^{layer} ∗ v$; and the ${M}_{symb}^{ap}$ symbols ${y}^{\left(p\right)} \left(0\right) , … , {y}^{\left(p\right)} \left({M}_{symb}^{ap}-1\right)$ are sequentially mapped in order onto the ${M}_{symb}^{ap}$ subcarriers of the corresponding p-th antenna port group, so as to obtain the first OFDM symbol, p being greater than or equal to 0 and less than or equal to *(v* - 1).

In a possible implementation manner, the method further comprises: transmitting fourth information, the fourth information being used for determining a set of subcarriers, among the subcarriers comprised in the time-frequency resource, that carry the first modulation symbol block and the second modulation symbol block.

In this implementation manner, the fourth information is transmitted, so that negotiation can be performed with other transmitting ends regarding which subcarriers of the time-frequency resource are to be occupied, such that different subcarriers of the same time-frequency resource are respectively occupied with other transmitting ends.

According to a third aspect, an embodiment of the present application provides a communication apparatus having the function of implementing the behavior in the method embodiments of the first aspect described above. The communication apparatus may be a network device, or may be a component of a network device (such as a processor, a chip, or a chip system, etc.), or may be a logic module or software capable of implementing all or part of the functions of the network device. Alternatively, the communication apparatus may be a terminal device, or may be a component of a terminal device (such as a processor, a chip, or a chip system, etc.), or may be a logic module or software capable of implementing all or part of the functions of the terminal device. The functions of the communication apparatus may be implemented by hardware, or may be implemented by hardware executing corresponding software, the hardware or software comprising one or more modules or units corresponding to the above functions. In a possible implementation manner, the communication apparatus comprises a transceiver module and a processing module, wherein: the transceiver module is configured to receive a third signal, the third signal comprising a first OFDM symbol and a second OFDM symbol, the time-frequency resource occupied by the first OFDM symbol and the time-frequency resource occupied by the second OFDM symbol being the same, the first OFDM symbol carrying a first modulation symbol block, the second OFDM symbol carrying a second modulation symbol block, the set of subcarriers corresponding to the modulation symbols in the first modulation symbol block being a part of the subcarriers comprised in said time-frequency resource, the set of subcarriers corresponding to the modulation symbols in the second modulation symbol block being a part of the subcarriers comprised in said time-frequency resource, and the intersection of the set of subcarriers corresponding to the modulation symbols in the first modulation symbol block and the set of subcarriers corresponding to the modulation symbols in the second modulation symbol block being an empty set, and the first modulation symbol block and the second modulation symbol block each carrying at least one of data information and control information; the processing module is configured to perform energy harvesting using the third signal; and to obtain, based on the third signal, a bit sequence, the bit sequence comprising the data information or the control information carried by the first modulation symbol block.

In a possible implementation manner, the processing module is specifically configured to obtain the bit sequence based on the third signal and the positions, in a first modulation symbol sequence, of modulation symbols carried by the subcarriers comprised in the time-frequency resource, the modulation symbols carried by the subcarriers comprised in the time-frequency resource comprising the modulation symbols in the first modulation symbol block and the modulation symbols in the second modulation symbol block, and the first modulation symbol block and the second modulation symbol block being obtained based on the first modulation symbol sequence.

In a possible implementation manner, the transceiver module is further configured to receive first information; and the processing module is further configured to determine, based on the first information, the positions, in the first modulation symbol sequence, of the modulation symbols carried by the subcarriers comprised in the time-frequency resource.

In a possible implementation manner, the transceiver module is further configured to receive first indication information from a first transmitting end; and the processing module is further configured to determine, based on the first indication information, the numbers of a plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers.

In a possible implementation manner, the transceiver module is further configured to receive first indication information from a first transmitting end; the processing module is further configured to determine, based on the first indication information, the numbers of a plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers; the transceiver module is further configured to receive second indication information from a second transmitting end; and the processing module is further configured to determine, based on the second indication information, the numbers of a plurality of second subcarriers, among the subcarriers comprised in the time-frequency resource, that carry the modulation symbols in the second modulation symbol block, and the respective positions, in the first modulation symbol sequence, of the modulation symbols carried by the plurality of second subcarriers.

In a possible implementation manner, the processing module is specifically configured to obtain the bit sequence based on the numbers of the plurality of first subcarriers, among the subcarriers comprised in the time-frequency resource, that carry the modulation symbols in the first modulation symbol block, and the respective positions, in the first modulation symbol sequence, of the modulation symbols carried by the plurality of first subcarriers, the first modulation symbol block being obtained based on the first modulation symbol sequence.

In a possible implementation manner, the transceiver module is further configured to receive second information; and the processing module is further configured to determine, based on the second information, the positions, in the first modulation symbol sequence, of the modulation symbols in the first modulation symbol block that are carried by the subcarriers comprised in the time-frequency resource.

The possible implementation manners of the communication apparatus of the third aspect may be referred to in the various possible implementation manners of the first aspect.

Regarding the technical effects brought about by the various possible implementation manners of the third aspect, reference may be made to the introduction of the technical effects of the various possible implementation manners of the first aspect.

According to a fourth aspect, an embodiment of the present application provides a communication apparatus having the function of implementing the behavior in the method embodiments of the second aspect described above. The communication apparatus may be a network device, or may be a component of a network device (such as a processor, a chip, or a chip system, etc.), or may be a logic module or software capable of implementing all or part of the functions of the network device. Alternatively, the communication apparatus may be a terminal device, or may be a component of a terminal device (such as a processor, a chip, or a chip system, etc.), or may be a logic module or software capable of implementing all or part of the functions of the terminal device. The functions of the communication apparatus may be implemented by hardware, or may be implemented by hardware executing corresponding software, the hardware or software comprising one or more modules or units corresponding to the above functions. In a possible implementation manner, the communication apparatus comprises a transceiver module and a processing module, wherein: the processing module is configured to generate a first signal and a second signal, the first signal carrying a first OFDM symbol, the second signal carrying a second OFDM symbol, the time-frequency resource occupied by the first OFDM symbol and the time-frequency resource occupied by the second OFDM symbol being the same, the first OFDM symbol carrying a first modulation symbol block, the second OFDM symbol carrying a second modulation symbol block, the set of subcarriers corresponding to the modulation symbols in the first modulation symbol block being a part of the subcarriers comprised in said time-frequency resource, the set of subcarriers corresponding to the modulation symbols in the second modulation symbol block being a part of the subcarriers comprised in said time-frequency resource, and the intersection of the set of subcarriers corresponding to the modulation symbols in the first modulation symbol block and the set of subcarriers corresponding to the modulation symbols in the second modulation symbol block being an empty set, and the first modulation symbol block and the second modulation symbol block each carrying at least one of data information and control information; and the transceiver module is configured to transmit the first signal and the second signal.

In a possible implementation manner, the first signal corresponds to a first antenna port group, and the second signal corresponds to a second antenna port group, the first antenna port group comprising one or more first antenna ports, the second antenna port group comprising one or more second antenna ports, and the first antenna port and the second antenna port being different.

In a possible implementation manner, the transceiver module is further configured to transmit first information, the first information being used for determining positions, in a first modulation symbol sequence, of modulation symbols carried by subcarriers comprised in the time-frequency resource, the modulation symbols carried by the subcarriers comprised in the time-frequency resource comprising the modulation symbols in the first modulation symbol block and the modulation symbols in the second modulation symbol block, and the first modulation symbol block and the second modulation symbol block being obtained based on the first modulation symbol sequence.

In a possible implementation manner, the transceiver module is further configured to transmit second information, the second information being used for determining positions, in a first modulation symbol sequence, of the modulation symbols in the first modulation symbol block that are carried by the subcarriers comprised in the time-frequency resource, the first modulation symbol block being obtained based on the first modulation symbol sequence, and the first modulation symbol sequence being obtained based on a bit sequence to be transmitted to a first receiving end; and to transmit third information, the third information being used for determining positions, in a second modulation symbol sequence, of the modulation symbols in the second modulation symbol block that are carried by the subcarriers comprised in the time-frequency resource, the second modulation symbol block being obtained based on the second modulation symbol sequence, the second modulation symbol sequence being obtained based on a bit sequence to be transmitted to a second receiving end, and the second receiving end and the first receiving end being different.

In a possible implementation manner, the processing module is further configured to: obtain a first modulation symbol sequence; split the first modulation symbol sequence into v sub-sequences, v being an integer greater than 1, v being less than or equal to the number of antenna port groups available for the time-frequency resource, the v sub-sequences comprising a first sub-sequence and a second sub-sequence, the first sub-sequence corresponding to the first modulation symbol block, and the second sub-sequence corresponding to the second modulation symbol block; obtain the first OFDM symbol based on the first modulation symbol block, and obtain the second OFDM symbol based on the second modulation symbol block.

In a possible implementation manner, the transceiver module is further configured to transmit fourth information, the fourth information being used for determining a set of subcarriers, among the subcarriers comprised in the time-frequency resource, that carry the first modulation symbol block and the second modulation symbol block.

The possible implementation manners of the communication apparatus of the fourth aspect may be referred to in the various possible implementation manners of the second aspect.

Regarding the technical effects brought about by the various possible implementation manners of the fourth aspect, reference may be made to the introduction of the technical effects of the various possible implementation manners of the second aspect.

According to a fifth aspect, an embodiment of the present application provides another communication apparatus, the communication apparatus comprising one or more processors, the one or more processors being configured to process data and/or signaling so as to implement the method as in the first aspect or the second aspect described above.

Optionally, the communication apparatus further comprises a memory, the memory storing a program or instructions, which, when executed by the processor, cause the communication apparatus to perform the method as shown in the first aspect or the second aspect described above. Illustratively, the communication apparatus may be a chip, the processor being a processing circuit in the chip, and the memory being a random access memory or a cache in the chip.

In the embodiments of the present application, in the course of performing the methods described above, processes relating to transmitting information (or a signal) in the methods described above may be understood as processes of outputting information based on instructions of the processor. When outputting information, the processor outputs the information to a transceiver such that the transceiver transmits the information. After being output by the processor, the information may further undergo other processing before reaching the transceiver. Similarly, when the processor receives input information, the transceiver receives the information and inputs it to the processor. Furthermore, after the transceiver has received the information, the information may further undergo other processing before being input to the processor.

With respect to operations such as transmitting and/or receiving involving the processor, unless otherwise specifically described, or unless contradictory with their actual role or inherent logic in the relevant description, they may generally be understood as being output based on instructions of the processor.

In implementation, the processor described above may be a processor dedicated to performing these methods, or may be a processor executing computer instructions in a memory to perform these methods, such as a general-purpose processor. For example, the processor may also be configured to execute a program stored in the memory, which, when executed, causes the communication apparatus to perform the method as shown in the first aspect or any possible implementation manner of the first aspect described above.

In a possible implementation manner, the memory is located outside the communication apparatus. In a possible implementation manner, the memory is located inside the communication apparatus.

In a possible implementation manner, the processor and the memory may also be integrated into one device, i.e., the processor and the memory may also be integrated together.

In a possible implementation manner, the communication apparatus further comprises a transceiver, the transceiver being configured to receive signals or transmit signals, etc.

According to a sixth aspect, the present application provides another communication apparatus, the communication apparatus comprising a processing circuit and an interface circuit, the interface circuit being configured to obtain signals or output signals; and the processing circuit being configured to perform the method as in the first aspect or the second aspect described above.

According to a seventh aspect, the present application provides a computer-readable storage medium, having stored thereon a computer program comprising program instructions, which, when executed, cause a computer to perform the method as in the first aspect or the second aspect described above.

According to an eighth aspect, the present application provides a computer program product, the computer program product comprising a computer program comprising program instructions, which, when executed, cause a computer to perform the method as in the first aspect or the second aspect described above.

According to a ninth aspect, the present application provides a chip, comprising a communication interface and a processor; the communication interface being configured for signal transmission and reception of the chip; the processor being configured to execute computer program instructions such that a communication apparatus comprising the chip performs the method as in the first aspect or the second aspect described above.

According to a tenth aspect, an embodiment of the present application provides a communication system, comprising the communication apparatus for implementing the third aspect or any possible implementation manner of the third aspect described above and the communication apparatus for implementing the fourth aspect or any possible implementation manner of the fourth aspect described above.

### BRIEF DESCRIPTION OF THE DRAWINGS

FIG. 1 is a schematic diagram of an application scenario provided by an embodiment of the present application;
FIG. 2 is a schematic diagram of a possible application framework in a communication system;
FIG. 3 is a schematic diagram of an energy harvesting circuit provided by an embodiment of the present application;
FIG. 4 is a flowchart of a communication method provided by an embodiment of the present application;
FIG. 5 is an example of a set of subcarriers corresponding to each of 4 OFDM symbols provided by an embodiment of the present application;
FIG. 6 is a flowchart of another communication method provided by an embodiment of the present application;
FIG. 7A is an example of the frequency-domain resources occupied by each of 4 groups of subcarriers comprised in a time-frequency resource occupied by a group of SWIPT signals transmitted by a transmitting end, provided by an embodiment of the present application;
FIG. 7B is another example of the frequency-domain resources occupied by each of 4 groups of subcarriers comprised in a time-frequency resource occupied by a group of SWIPT signals transmitted by a transmitting end, provided by an embodiment of the present application;
FIG. 7C is another example of the frequency-domain resources occupied by each of 4 groups of subcarriers comprised in a time-frequency resource occupied by a group of SWIPT signals transmitted by a transmitting end, provided by an embodiment of the present application;
FIG. 7D is another example of the frequency-domain resources occupied by each of 4 groups of subcarriers comprised in a time-frequency resource occupied by a group of SWIPT signals transmitted by a transmitting end, provided by an embodiment of the present application;
FIG. 8 is a flowchart of another communication method provided by an embodiment of the present application;
FIG. 9A is an example diagram of a process in which a transmitting end generates and transmits a group of SWIPT signals, provided by an embodiment of the present application;
FIG. 9B is a schematic flow diagram of symbol mapping and OFDM symbol generation provided by an embodiment of the present application;
FIG. 10 is a flowchart of another communication method provided by an embodiment of the present application;
FIG. 11 is a flowchart of another communication method provided by an embodiment of the present application;
FIG. 12 is a flowchart of another communication method provided by an embodiment of the present application;
FIG. 13 is a flowchart of another communication method provided by an embodiment of the present application;
FIG. 14 is a flowchart of another communication method provided by an embodiment of the present application;
FIG. 15 is a flowchart of another communication method provided by an embodiment of the present application;
FIG. 16 is a flowchart of another communication method provided by an embodiment of the present application;
FIG. 17 is a schematic structural diagram of a communication apparatus 1700 provided by an embodiment of the present application;
FIG. 18 is a schematic structural diagram of another apparatus 180 provided by an embodiment of the present application.

### DETAILED DESCRIPTION

The terms "first" and "second" and the like used in the specification, claims and drawings of the present application are merely used to distinguish different objects and are not used to describe a particular order. It is to be understood that the various numerical designations referred to in the embodiments of the present application are distinguished merely for ease of description and are not intended to limit the scope of the embodiments of the present application. The magnitude of the sequence numbers of the various processes described above does not imply an order of execution; the order of execution of the various processes shall be determined according to their functions and inherent logic. Furthermore, the terms "comprise" and "have" and any variation thereof are intended to cover non-exclusive inclusion. For example, a process, method, system, product or device that comprises a series of steps or units is not limited to the steps or units listed, but optionally further comprises steps or units not listed, or optionally further comprises other steps or units inherent to such processes, methods, products or devices.

In the embodiments of the present application, the term "wireless communication" may be abbreviated as "communication", and the term "communication" may also be described as "data transmission", "information transmission", or "information exchange", etc. The term "wireless energy harvesting" may also be abbreviated as "energy harvesting", "power transfer", or "charging", etc. The term "energy harvesting" may also be described as "wireless power transfer", "wireless charging", "wireless energy transmission", "RF energy transmission", "RF power transfer", "RF energy harvesting", or "RF charging", etc.

The term "embodiment" referred to herein means that a particular feature, structure or characteristic described in connection with the embodiment may be included in at least one embodiment of the present application. The appearance of this phrase in various places in the specification does not necessarily refer to the same embodiment, nor is it a separate or alternative embodiment that is mutually exclusive of other embodiments. It will be explicitly and implicitly understood by those skilled in the art that the embodiments described herein can be combined with other embodiments. In the present application, the naming of messages is merely used to distinguish different messages and should not be construed as a limitation. That is, the name of any message in the present application may be replaced with another designation, which is not limited in the present application.

The terms used in the following embodiments of the present application are intended solely for the purpose of describing particular embodiments and are not intended as a limitation of the present application. As used in the specification and the appended claims of the present application, the singular forms "a", "an", "said", "the above", "the" and "this" are intended to also include the plural forms, unless the context clearly indicates otherwise. It is also to be understood that the term "and/or" as used in the present application refers to and includes any and all possible combinations of one or more of the listed items. For example, "A and/or B" may indicate the three cases: A alone exists, B alone exists, or A and B exist simultaneously, where A and B may be singular or plural. The term "a plurality of" as used in the present application means two or more. In the textual description of the present application, the character "/" generally indicates that the objects associated before and after are in an "or" relationship.

It is to be understood that, in the embodiments of the present application, "B corresponding to A" indicates that there is a correspondence between A and B, from which B may be determined according to A. However, it is also to be understood that determining (or generating) B according to (or based on) A does not mean that B is determined (or generated) only according to (or based on) A; B may also be determined (or generated) according to (or based on) A and/or other information.

It shall be understood that, in the present application, indication includes direct indication (also referred to as explicit indication) and implicit indication. Specifically, directly indicating information A means including the information A; implicitly indicating information A means indicating information A by means of a correspondence between information A and information B and direct indication of information B. The correspondence between information A and information B may be predefined, pre-stored, pre-burned, or pre-configured.

It shall be understood that, in the present application, "information C is used for the determination of information D" includes both the case where information D is determined solely based on information C and the case where information D is determined based on information C and other information. Furthermore, "information C is used for the determination of information D" may also encompass indirect determination, for example, the case where information D is determined based on information E, and information E is determined based on information C.

Furthermore, "a network element A transmits information A to a network element B" in the various embodiments of the present application may be understood as the destination end of the information A or the intermediate network element on the transmission path between the destination end is the network element B, and may include directly or indirectly transmitting information to the network element B. "A network element B receives information A from a network element A" may be understood as the source end of the information A or the intermediate network element on the transmission path between the source end is the network element A, and may include directly or indirectly receiving information from the network element A. Information may be subjected to necessary processing, such as format changes, between the source end and destination end of the information transmission, but the destination end can understand the effective information from the source end. Similar expressions in the present application may be understood similarly and will not be elaborated upon herein.

As described in the background section, if energy harvesting for an IoT device can be performed simultaneously while data is being transmitted to the IoT device, resource utilization can be improved. Accordingly, there is a need to study schemes for simultaneously performing energy harvesting for an IoT device while transmitting data to the IoT device. In other words, there is a need to study schemes for transmitting data to an IoT device while energy harvesting is being performed for the IoT device.

The present application provides a technical solution that utilizes simultaneous wireless information and power transfer (SWIPT) technology to simultaneously perform energy harvesting for an IoT device (which may be other energy-harvestable devices) while data is being transmitted to the IoT device. SWIPT technology refers to a technology that, by utilizing the feature that a wireless RF signal can simultaneously carry information and energy, simultaneously receives information and energy from one RF signal. SWIPT may also be described as "simultaneous data and energy transmission", "information-bearing energy transfer", "energy-bearing information transfer", "integrated data-and-energy transmission", "integrated energy-and-data transmission", or "coordinated wireless data and energy transmission", etc., which is not limited in the present application. The technical solution provided by the present application may be applied to wireless communication/energy harvesting between communication devices. Wireless communication/energy harvesting between communication devices may comprise: wireless communication/energy harvesting between a network device and a terminal device, wireless communication/energy harvesting between network devices, and wireless communication/energy harvesting between terminal devices.

The application scenarios of the technical solution of the present application are first introduced below.

The application scenarios of the technical solution of the present application include, but are not limited to: SWIPT between a network device (e.g., a base station or access point) and a terminal device, SWIPT between network devices, SWIPT between terminal devices, SWIPT between a network device and a relay device, SWIPT between relay devices, or SWIPT between a relay device and a terminal device. The present application takes SWIPT between a network device and a terminal device as an example for description; SWIPT between other devices may be referred to in the description of SWIPT between a network device and a terminal device. SWIPT between a network device and a terminal device includes, but is not limited to: the network device transmitting to the terminal device an RF signal carrying information and energy, the network device transmitting to the terminal device an RF signal carrying information and energy via a relay device, the same RF signal carrying information and energy transmitted by the network device being used by a plurality of terminal devices to acquire data and perform energy harvesting, a plurality of network devices simultaneously transmitting to one or more terminal devices an RF signal carrying information and energy, or the terminal device transmitting to the network device (e.g., access point) an RF signal carrying information and energy.

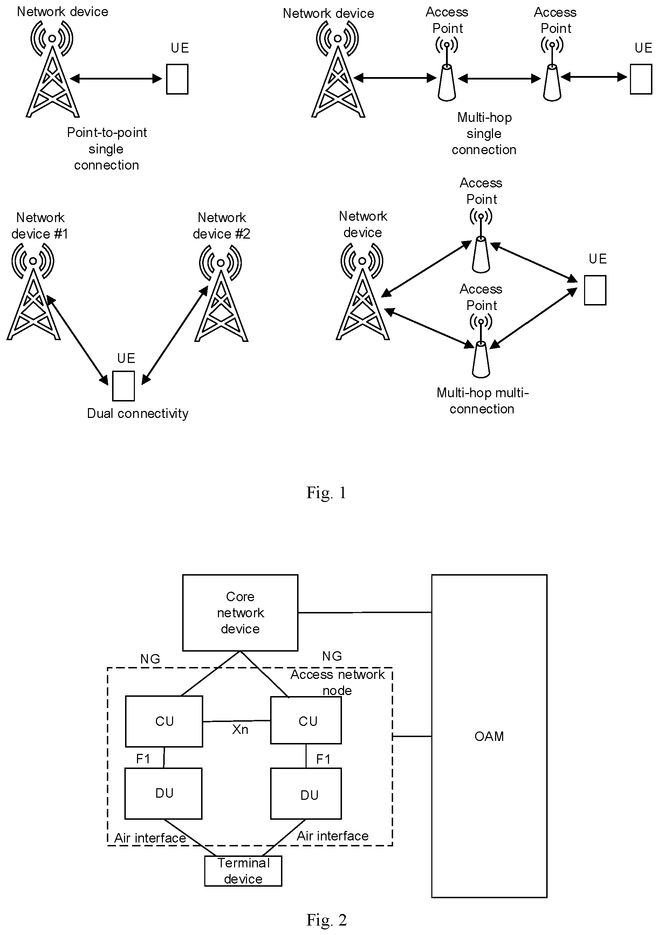

The technical solution of the present application may be applied to a variety of communication scenarios. FIG. 1 is a schematic diagram of an application scenario provided by an embodiment of the present application. As shown in FIG. 1, the application scenarios of the technical solution of the present application may comprise: direct communication between a network device and a user equipment (UE) (i.e., point-to-point single connection between the network device and the UE), multi-hop/multi-relay transmission between the network device and the UE (i.e., multi-hop single connection), dual connectivity (DC) between a plurality of network devices and the UE, or multi-hop multi-connection, and the like. FIG. 1 is merely illustrative and does not constitute a limitation on the network architectures applicable to the present application; wireless SWIPT between any two devices is a network architecture available for use with the present application.

The technical solution provided by the present application may be applied to various communication systems, for example: 5th generation (5G) or new radio (NR) systems, long term evolution (LTE) systems, LTE frequency division duplex (FDD) systems, LTE time division duplex (TDD) systems, wireless local area network (WLAN) systems, satellite communication systems, future communication systems such as the 6th generation (6G) mobile communication system, or converged systems of multiple systems, etc. The technical solution provided by the present application may further be applied to device-to-device (D2D) communications, vehicle-to-everything (V2X) communications, machine-to-machine (M2M) communications, machine type communication (MTC), and Internet of Things (IoT) communication systems or other communication systems.

In the present application, the technical solution of the present application is described by taking a cellular system related to the 3rd Generation Partnership Project (3GPP) as an example, but this should not constitute any limitation on the present application. Based on the same concept, the technical method of the present application may also be applied to other communication networks such as Zigbee, long range radio (LoRa), Bluetooth (BT), and wireless fidelity (Wi-Fi). The technical solution provided by the embodiments of the present application is also applicable to other communication systems supporting SWIPT. The above communication systems to which the technical solution provided by the embodiments of the present application is applicable are merely illustrative; communication systems to which the technical solution provided by the present application is applicable are not limited thereto, which is stated here together and will not be elaborated upon below.

A first device in the communication system may transmit signals to a second device or receive signals from a third device. The signals may comprise information, signaling or data, etc. The device may also be replaced with an entity, a network entity, a communication device, a communication module, a node, a communication node, etc.; in the present disclosure, a network element is taken as an example for description. The first device may be a network device or a terminal device, the second device may be a network device or a terminal device, and the third device may be a network device or a terminal device. For example, the communication system may comprise at least one terminal device and at least one network device. The network device may transmit downlink signals to the terminal device, and/or the terminal device may transmit uplink signals to the network device. It is to be understood that the terminal device in the present disclosure may be replaced with the first device, the network device may be replaced with the second device, and the two perform the corresponding communication methods in the present disclosure.

In the embodiments of the present application, a terminal device (terminal equipment) may also be referred to as a user equipment (UE), an access terminal, a subscriber unit, a subscriber station, a mobile station (MS), a mobile terminal, a remote station, a remote terminal, a mobile device, a user terminal, a terminal, a wireless communication device, a user agent, or a user apparatus.

A terminal device may be a device that provides wireless communication functionality, for example, a handheld device or vehicle-mounted device with wireless connection functionality. Currently, some examples of terminal devices are: a mobile phone, a cellular phone, a smart phone, a tablet computer, a notebook computer, a palm computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, a cellular phone, a cordless phone, a session initiation protocol (SIP) phone, a wireless local loop (WLL) station, a personal digital assistant (PDA), a handheld device with wireless communication functionality, a computing device or another processing device connected to a wireless modem, a wearable device, a terminal device in a 5G network or a terminal device in a future evolved public land mobile network (PLMN), etc.; the embodiments of the present application are not limited thereto. A terminal device may also be a device in a Zigbee network, a device in a LoRa network, a Bluetooth slave (BT slave), a Bluetooth low energy (BLE) slave (BLE slave), a Wi-Fi station (STA), and so on.

By way of example and not limitation, in the embodiments of the present application, a terminal device may further be a terminal device in an IoT system, and may also be referred to as an IoT node. IoT is an important component of the future development of information technology, the main technical feature of which is to connect items to a network by means of communication technology, thereby realizing an intelligent network of human-to-machine and machine-to-machine interconnection. The connection may be via broadband technology or via narrowband technology. IoT technology may, for example, by means of narrowband (NB) technology, achieve massive connections, deep coverage, and power saving for terminals. IoT technology may comprise backscatter communication technology, spread spectrum technology, ultra wide band (UWB), etc., which will not be elaborated upon herein.

By way of example and not limitation, in the embodiments of the present application, the terminal device may further be a wearable device. A wearable device, which may also be referred to as a wearable smart device, is a general term for devices that may be worn, developed by applying wearable technology to intelligently design daily wear, such as glasses, gloves, watches, clothing, and shoes. A wearable device is a portable device that is worn directly on the body, or integrated into a user's clothing or accessories. A wearable device is not only a hardware device, but also realizes powerful functionality through software support and data interaction and cloud interaction. Broadly defined wearable smart devices comprise devices that are full-featured and large in size and can realize complete or partial functions independently of a smart phone, for example: smart watches or smart glasses, etc.; and devices that focus only on a particular type of application function and need to be used in conjunction with other devices such as smart phones, for example: various types of smart bracelets or smart ornaments for physical sign monitoring.

In the embodiments of the present application, an apparatus for implementing the functions of a terminal device may be the terminal device itself, or may be an apparatus capable of supporting the terminal device in implementing such functions, such as a chip system; the apparatus may be installed in the terminal device or may be used in conjunction with the terminal device. In the embodiments of the present application, a chip system may be composed of chips, or may comprise chips and other discrete components. In the embodiments of the present application, the description is given by taking the apparatus for implementing the functions of the terminal device as the terminal device itself as an example only, which does not constitute a limitation on the solutions of the embodiments of the present application.

A network device in the embodiments of the present application may be a device for communicating with a terminal device; such a network device may also be referred to as an access network device or a radio access network device; for example, the network device may be a base station. A network device in the embodiments of the present application may refer to a radio access network (RAN) node (or device) that connects a terminal device to a wireless network. A base station may broadly cover the various names below, or be substituted with the names below, such as: a RAN node, a NodeB, an evolved NodeB (eNB), a next generation NodeB (gNB), a base station controller (BSC), a base transceiver station (BTS), a home base station (for example, home evolved NodeB, or home Node B, HNB), a baseband unit (BBU), a wireless relay node, a wireless backhaul node, a relay station, a transmitting and receiving point (TRP), an IAB node, a transmitting point (TP), a master station, a secondary station, a multi-standard radio (motor slide retainer, MSR) node, a network controller, an access node, a wireless node, an access point (AP), a transmission node, a transceiving node, a remote radio unit (RRU), an active antenna unit (AAU), a remote radio head (RRH), a central unit (CU), a distributed unit (DU), a radio unit (RU), a positioning node, one antenna panel or one group of antenna panels (comprising a plurality of antenna panels) of a base station in a 5G system, etc. A network device in the embodiments of the present application may also be a Zigbee base station, a Bluetooth master (BT master), a BLE master, a LoRa base station, or a Wi-Fi access point.

A base station may be a macro base station, a micro base station, a relay node, a donor node or the like, or any combination thereof. A base station may also refer to a communication module, a modem or a chip provided in the foregoing devices or apparatuses. A base station may also be a mobile switching center, and a device assuming a base station function in D2D, V2X, or M2M communications, a network-side device in a 6G network, a device assuming a base station function in a future communication system, etc. A base station may support networks of the same or different access technologies. Optionally, a RAN node may also be a server, a wearable device, a vehicle or vehicle-mounted device, etc. For example, an access network device in V2X technology may be a road side unit (RSU). The embodiments of the present application do not limit the specific technology and specific device form adopted by the network device.

A base station may be stationary or mobile. For example, a helicopter or drone may be configured to act as a mobile base station, with one or more cells moving according to the position of such mobile base station. In other examples, a helicopter or drone may be configured to act as a device that communicates with another base station.

In some deployments, a network device referred to in the embodiments of the present application may be a device comprising a CU, or a DU, or a device comprising both a CU and a DU, or a device comprising a control-plane CU node (central unit-control plane, CU-CP) and a user-plane CU node (central unit-user plane, CU-UP) and a DU node. For example, the network device may comprise a gNB-CU-CP, a gNB-CU-UP and a gNB-DU.

In some deployments, multiple RAN nodes cooperate to assist a terminal in achieving wireless access, with different RAN nodes implementing different portions of the base station function. For example, a RAN node may be a CU, a DU, a CU-CP, a CU-UP, or an RU, etc. The CU and DU may be set up separately, or may be included in the same network element, such as a BBU. The RU may be included in a radio frequency device, such as in an RRU, AAU or RRH.

A RAN node may support one or more types of fronthaul interfaces, with different fronthaul interfaces corresponding respectively to DUs and RUs having different functions. If the fronthaul interface between the DU and the RU is the common public radio interface (CPRI), the DU is configured to implement one or more of the baseband functions, and the RU is configured to implement one or more of the radio frequency functions. If the fronthaul interface between the DU and the RU is another interface, which, relative to CPRI, moves some downlink and/or uplink baseband functions, for example, for downlink, one or more of precoding, digital beamforming (BF), or inverse fast Fourier transform (IFFT)/adding cyclic prefix (CP), from the DU into the RU for implementation; and for uplink, moves one or more of digital beamforming (BF), or fast Fourier transform (FFT)/removing cyclic prefix (CP), from the DU into the RU for implementation. In a possible implementation manner, the interface may be an enhanced common public radio interface (eCPRI). Under this eCPRI architecture, the splitting modes between the DU and the RU differ, corresponding to different categories (Cat) of eCPRI, such as eCPRI Cat A, B, C, D, E, F.

Taking eCPRI Cat A as an example, for downlink transmission, with layer mapping as the split, the DU is configured to implement one or more functions including layer mapping and those preceding it (i.e., one or more of encoding, rate matching, scrambling, modulation, and layer mapping), while other functions following layer mapping (for example, one or more of resource element (RE) mapping, digital beamforming (BF), or inverse fast Fourier transform (IFFT)/adding cyclic prefix (CP)) are moved into the RU for implementation. For uplink transmission, with RE de-mapping as the split, the DU is configured to implement one or more functions including de-mapping and those preceding it (i.e., one or more functions including decoding, de-rate-matching, descrambling, demodulation, inverse discrete Fourier transform (IDFT), channel equalization, and RE de-mapping), while other functions following de-mapping (for example, one or more of digital BF or fast Fourier transform (FFT)/removing CP) are moved into the RU for implementation. It is to be understood that the description of the DU and RU functions corresponding to various types of eCPRI may be referred to in the eCPRI protocol, which will not be elaborated upon herein.

In one possible design, the processing unit in the BBU for implementing baseband functions is called the base band high (BBH) unit, and the processing unit in the RRU/AAU/RRH for implementing baseband functions is called the base band low (BBL) unit.

In different systems, the CU (or CU-CP and CU-UP), DU or RU may also have different names, but those skilled in the art can understand their meanings. For example, in an open radio access network (ORAN/O-RAN) system, the CU may also be referred to as O-CU (Open CU), the DU may also be referred to as O-DU, the CU-CP may also be referred to as O-CU-CP, the CU-UP may also be referred to as O-CU-UP, and the RU may also be referred to as O-RU. Any of the CU (or CU-CP, CU-UP), DU and RU in the present application may be implemented by means of a software module, a hardware module, or a combination of a software module and a hardware module.

In the embodiments of the present application, an apparatus for implementing the functions of a network device may be the network device itself; or it may be an apparatus capable of supporting the network device in implementing such functions, such as a chip system, a hardware circuit, a software module, or a hardware circuit plus a software module. The apparatus may be installed in the network device or may be used in conjunction with the network device. In the embodiments of the present application, the description is given by taking the apparatus for implementing the functions of the network device as the network device itself as an example only, which does not constitute a limitation on the solutions of the embodiments of the present application.

The network device and/or terminal device may be deployed on land, including indoors or outdoors, hand-held or vehicle-mounted; may also be deployed on water; and may further be deployed on aircraft, balloons and satellites in the air. The embodiments of the present application do not limit the scenarios in which the network device and the terminal device are situated. Further, the terminal device and the network device may be hardware devices, or may be software functions running on dedicated hardware, software functions running on general-purpose hardware, for example, virtualization functions instantiated on a platform (e.g., a cloud platform), or entities comprising dedicated or general-purpose hardware devices and software functions; the present application does not limit the specific forms of the terminal device and the network device.

It is to be noted that the network architectures described in the embodiments of the present application are provided in order to more clearly illustrate the technical solutions of the embodiments of the present application, and do not constitute a limitation on the technical solutions provided by the embodiments of the present application. Those of ordinary skill in the art will understand that, as network architectures evolve and new service scenarios emerge, the technical solutions provided by the embodiments of the present application are also applicable to similar technical problems. In the following embodiments, the technical solutions provided by the embodiments of the present application are described by taking the apparatus for implementing the functions of the network device as the network device itself and taking the network device as the base station as an example.

FIG. 2 is a schematic diagram of a possible application framework in a communication system. As shown in FIG. 2, the communication system comprises: a core network device, an access network node, an operation administration and maintenance (OAM) network element, and a terminal device. The network elements in the communication system are connected via interfaces (for example, NG, Xn) or via an air interface. The access network node may serve as a separate RAN node, or may comprise a plurality of RAN nodes, for example, comprising a CU and a DU. Optionally, the CU may further be split into a CU-CP and a CU-UP.

It will be appreciated that the present application does not particularly limit the specific structure of the execution subject of the methods provided by the embodiments of the present application, so long as the subject can perform SWIPT according to the methods provided by the embodiments of the present application by executing a program in which code for the methods provided by the embodiments of the present application is recorded. The methods provided by the embodiments of the present application may be applicable to SWIPT between a terminal device and a network device. The following description is given by taking the interaction between a terminal device and a network device (taking the base station as an example) as an example.

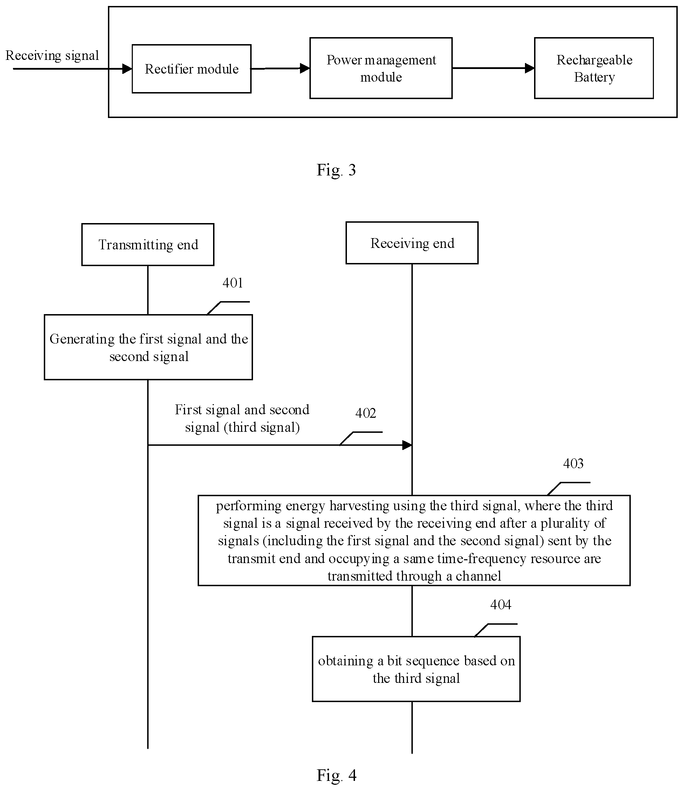

The principle of the SWIPT scheme currently adopted is: the transmitting end transmits an RF signal carrying information and energy, the receiving end acquires the information carried by the RF signal, and absorbs the energy carried by the RF signal via an energy harvesting circuit for energy harvesting. FIG. 3 is a schematic diagram of an energy harvesting circuit provided by an embodiment of the present application. As shown in FIG. 3, the energy harvesting circuit comprises a rectifying module, a power management module and a rechargeable battery. The power management module is configured to manage the battery, for example, to charge the rechargeable battery; the rectifying module mainly comprises a diode, and under a given turn-on voltage of the diode in the rectifying module, an RF signal having a high PAPR (higher than a certain threshold) can cause more energy to be absorbed by the rectifier, thereby improving the energy harvesting efficiency. Therefore, the PAPR of the RF signal affects the energy harvesting efficiency, and an RF signal with a high PAPR is generally required to obtain a high (above a certain threshold) energy harvesting efficiency. In order to improve energy harvesting efficiency, one existing SWIPT scheme is for a base station to generate, by means of controlling the modulation scheme and the like, an RF signal (or SWIPT waveform) satisfying a PAPR constraint (i.e., PAPR higher than a certain threshold).

However, although an RF signal with a high PAPR provides additional gains for energy harvesting, it is a disadvantageous factor for data transmission. The generation and transmission of an RF signal with a high PAPR by the transmitting end (e.g., the base station) reduces the efficiency of the power amplifier of the transmitter at the transmitting end, and also reduces the signal-to-quantization-noise ratio of its DAC and ADC, thereby deteriorating the data demodulation performance at the receiving end with respect to that signal. In other words, the prior art is unable, while achieving coexistence of wireless energy transmission and data transmission, to balance energy harvesting efficiency with data demodulation performance. The technical solution of the present application aims to balance energy harvesting efficiency with data demodulation performance while achieving coexistence of wireless energy transmission and data transmission. In other words, the SWIPT scheme provided by the present application can balance energy harvesting efficiency with data demodulation performance.

One possible implementation of the technical solution of the present application is as follows: the transmitting end (e.g., one base station) transmits, via a plurality of antenna port groups, a plurality of RF signals with low PAPR (lower than a certain threshold); the plurality of low-PAPR RF signals occupy the same time-frequency resource and will be superposed in wireless channel transmission (or in the air) into a signal with relatively high PAPR (higher than a certain threshold), and one or more receiving ends (e.g., terminal devices) receive said high-PAPR signal. Another possible implementation of the technical solution of the present application is as follows: a plurality of transmitting ends (e.g., two base stations) respectively transmit, via one or more antenna port groups, one or more low-PAPR RF signals to the same receiving end; the plurality of low-PAPR RF signals transmitted by the plurality of transmitting ends occupy the same time-frequency resource and will be superposed in wireless channel transmission (or in the air) into a signal with relatively high PAPR, and the receiving end (e.g., the terminal device) receives said high-PAPR signal. Because the transmitting end transmits low-PAPR RF signals, rather than directly transmitting RF signals with a relatively high PAPR, this does not affect the efficiency of the power amplifier of its transmitter, nor cause a reduction in the signal-to-quantization-noise ratio of its DAC and ADC, thereby avoiding adverse effects on the data demodulation performance of the receiving end with respect to the received signal. The receiving end receives a signal having a relatively high PAPR, and the energy harvesting efficiency at the receiving end is relatively high. Accordingly, the technical solution of the present application can balance energy harvesting efficiency with data demodulation performance while achieving coexistence of wireless energy transmission and data transmission. The technical solution of the present application is described below in conjunction with the drawings.

FIG. 4 is a flowchart of a communication method provided by an embodiment of the present application. As shown in FIG. 4, the method comprises:
401. The transmitting end generates a first signal and a second signal.

In the present application, the transmitting end may be a network device or may be a UE. In one possible implementation, the transmitting end is a base station and the receiving end is a UE. In one possible implementation, the transmitting end and the receiving end are different UEs. In one possible implementation, the transmitting end is a UE and the receiving end is a base station. The above-mentioned first signal carries a first OFDM symbol, and the above-mentioned second signal carries a second OFDM symbol. The time-frequency resource occupied by the above-mentioned first OFDM symbol and the time-frequency resource occupied by the above-mentioned second OFDM symbol are the same. The resource occupied by an OFDM symbol refers to the resource to which the OFDM symbol is mapped, for example, the subcarriers to which the modulation symbols carried by the OFDM symbol are mapped, the time-frequency resource, or one or more REs. Equivalently, the time-frequency resource occupied by the first signal and the time-frequency resource occupied by the second signal are the same. The above-mentioned first OFDM symbol carries a first modulation symbol block, and the above-mentioned second OFDM symbol carries a second modulation symbol block. In the present application, any modulation symbol block comprises one or more modulation symbols. The intersection of the set of subcarriers corresponding to the modulation symbols in the above-mentioned first modulation symbol block and the set of subcarriers corresponding to the modulation symbols in the above-mentioned second modulation symbol block is an empty set. Illustratively, the time-frequency resource occupied by the first signal and the second signal comprises 1024 subcarriers, i.e., subcarrier #0 to subcarrier #1023, the set of subcarriers corresponding to the modulation symbols in the first modulation symbol block is subcarrier #0 to subcarrier #511 (i.e., subcarrier #0 to subcarrier #511 carry the modulation symbols in the first modulation symbol block), and the set of subcarriers corresponding to the modulation symbols in the second modulation symbol block is subcarrier #512 to subcarrier #1023 (i.e., subcarrier #512 to subcarrier #1023 carry the modulation symbols in the second modulation symbol block). Illustratively, the time-frequency resource occupied by the first signal and the second signal comprises 1024 subcarriers, i.e., subcarrier #0 to subcarrier #1023, the set of subcarriers corresponding to the modulation symbols in the first modulation symbol block is subcarrier #0 to subcarrier #255, and the set of subcarriers corresponding to the modulation symbols in the second modulation symbol block is subcarrier #512 to subcarrier #767. The above-mentioned first modulation symbol block and the above-mentioned second modulation symbol block each carry at least one of data information and control information. Equivalently, the above-mentioned first signal and the above-mentioned second signal each carry at least one of data information and control information. Neither the first signal nor the second signal is a reference signal.

In a possible implementation manner, the above-mentioned first signal and the above-mentioned second signal are used for energy harvesting. Illustratively, the first signal and the second signal are each an RF signal carrying control information and energy. Illustratively, the first signal and the second signal are each an RF signal carrying data information and energy. Illustratively, one of the first signal and the second signal is an RF signal carrying control information and energy, while the other is an RF signal carrying data information and energy. Illustratively, one of the first signal and the second signal is an RF signal carrying control information or data information, and energy, while the other is an RF signal carrying only energy. Illustratively, the first signal and the second signal are each an RF signal carrying data information, control information and energy. In one possible implementation, the PAPR of the above-mentioned first signal and the PAPR of the second signal are both lower than a preset threshold. The preset threshold may be set according to actual requirements, so as to avoid the adverse effects caused by the transmitting end transmitting a signal of high PAPR on the efficiency of its transmitter's power amplifier and on the signal-to-quantization-noise ratio of its DAC and ADC.

In a possible implementation manner, at most h subcarriers among the subcarriers comprised in the above-mentioned time-frequency resource carry modulation symbols in the above-mentioned first modulation symbol block, where h equals (n/m + r) or the ceiling of (n/m + r), m is an integer greater than 1, m is less than or equal to the number of antenna port groups available for the above-mentioned time-frequency resource, r is an integer greater than or equal to 0, n is the total number of subcarriers comprised in the above-mentioned time-frequency resource, and the antenna port groups corresponding to the above-mentioned time-frequency resource comprise the above-mentioned first antenna port group and the above-mentioned second antenna port group. The above-mentioned time-frequency resource is a time-frequency resource that the transmitting end can use to transmit the first signal and the second signal. The frequency-domain resources in the above-mentioned time-frequency resource may be continuous or non-continuous. r may be predefined, for example, r is 1, 2, 5, etc. When the subcarriers comprised in the above-mentioned time-frequency resource are divided into w groups (for example, one group of subcarriers being subcarriers among those comprised in the above-mentioned time-frequency resource that carry the modulation symbols in the above-mentioned first modulation symbol block) and the number of subcarriers in each group is the same, r equals 0 and h equals (n/m) or the ceiling of (n/m). w is an integer greater than 1. When the subcarriers comprised in the above-mentioned time-frequency resource are divided into w groups and the number of subcarriers in at least two groups among the w groups is different, r is greater than 0 and h equals (n/m + r) or the ceiling of (n/m + r). In this implementation manner, at most h subcarriers among the subcarriers comprised in the time-frequency resource carry modulation symbols in the first modulation symbol block, so that the subcarriers comprised in said time-frequency resource can carry modulation symbols of a plurality of modulation symbol blocks.

402. The transmitting end transmits the first signal and the second signal.

Correspondingly, one or more receiving ends receive a third signal. The third signal is obtained based on the first signal and the second signal. Equivalently, the third signal is a signal received by the receiving end after a plurality of signals, comprising the first signal and the second signal, transmitted by the transmitting end and occupying the same time-frequency resource have been transmitted through a channel. By way of example, the transmitting end transmits the first signal via its first antenna port and transmits the second signal via its second antenna port; the first signal and the second signal are superposed (or coupled) into the third signal in the course of wireless channel transmission (or in the air), and the receiving end receives the third signal, where the third signal is the signal received by the receiving end after the first signal and the second signal have been transmitted through the wireless channel. In one possible implementation, the first signal and the second signal correspond to information of the same logical channel or physical channel, for example, both being information of the physical downlink shared channel (PDSCH). Equivalently, the modulation symbol sequence corresponding to the first modulation symbol block and the modulation symbol sequence corresponding to the second modulation symbol block correspond to information of a first logical channel or physical channel, for example, both being information of the PDSCH.

In a possible implementation manner, the first signal and the second signal correspond to different RF chains. In this implementation manner, the first signal and the second signal correspond to different RF chains, so that the signals of the RF chains of the transmitting end, i.e., the first signal and the second signal, have a relatively low PAPR.

In a possible implementation manner, the above-mentioned first signal corresponds to a first antenna port group, the above-mentioned second signal corresponds to a second antenna port group, the above-mentioned first antenna port group comprises one or more first antenna ports, the above-mentioned second antenna port group comprises one or more second antenna ports, and the above-mentioned first antenna port and the above-mentioned second antenna port are different. In one possible implementation, different antenna port groups correspond to different physical antennas; further, different antenna port groups correspond to different RF chains. In one possible implementation, when one physical antenna corresponds to two or more RF chains, different antenna port groups correspond to the same physical antenna, and different antenna port groups correspond to different RF chains of the same physical antenna. The first antenna port group and the second antenna port group correspond to different RF chains, so as to support the signals of the RF chains, i.e., the first signal and the second signal, having a relatively low PAPR, thereby balancing energy harvesting efficiency with data demodulation performance while achieving coexistence of wireless energy transmission and data transmission.

In one possible implementation, the transmitting end transmits the first signal via the first antenna port group and transmits the second signal via the second antenna port group; the first signal and the second signal are transmitted via different spatial layers, and the first antenna port group and the second antenna port group correspond to different spatial layers. Illustratively, the modulation symbols in the above-mentioned first modulation symbol block are the modulation symbols mapped to the first spatial layer, the modulation symbols in the above-mentioned second modulation symbol block are the modulation symbols mapped to the second spatial layer, and the transmitting end transmits the above-mentioned first signal via the first spatial layer, and transmits the second signal via the second spatial layer. In one possible implementation, the transmitting end transmits the first signal via the first antenna port group and transmits the second signal via the second antenna port group; the first signal and the second signal are transmitted via the same spatial layer, and the first antenna port group and the second antenna port group correspond to the same spatial layer. Illustratively, the transmitting end splits the first modulation symbol sequence to obtain the first modulation symbol block and the second modulation symbol block; generates the first signal based on the first modulation symbol block and generates the second signal based on the second modulation symbol block; and transmits the first signal and the second signal; wherein, in the course of generating and transmitting the first signal and the second signal, the transmitting end need not perform layer mapping.

Steps 401 to 402 may be an example of the transmitting end generating and transmitting v low-PAPR signals, i.e., generating and transmitting v signals having a PAPR lower than the preset threshold, where v is an integer greater than 1. For example, v is 2, 3, 4, 5, 6, 8, 9, 10, 12, 16, etc., which is not limited in the present application. The above-mentioned third signal may be obtained by superposing v low-PAPR signals transmitted by the transmitting end in the course of wireless channel transmission (or in the air). In one possible implementation, v is less than or equal to the number of antenna port groups available at the transmitting end, i.e., the number of antenna port groups available for the above-mentioned time-frequency resource. In one possible implementation, v is less than or equal to the number of RF chains at the transmitting end. An example of the transmitting end generating and transmitting 4 low-PAPR signals is: the transmitting end generates a first signal, a second signal, a signal #3, and a signal #4, the first signal carrying OFDM symbol #1 (the first OFDM symbol), the second signal carrying OFDM symbol #2 (the second OFDM symbol), the signal #3 carrying OFDM symbol #3, and the signal #4 carrying OFDM symbol #4, OFDM symbol #1, OFDM symbol #2, OFDM symbol #3, and OFDM symbol #4 occupying the same time-frequency resource, OFDM symbol #1 carrying modulation symbol block #1 (i.e., the first modulation symbol block), OFDM symbol #2 carrying modulation symbol block #2 (i.e., the second modulation symbol block), OFDM symbol #3 carrying modulation symbol block #3, and OFDM symbol #4 carrying modulation symbol block #4, the intersection of the sets of subcarriers corresponding to any two of modulation symbol block #1, modulation symbol block #2, modulation symbol block #3, and modulation symbol block #4 being an empty set; and transmits the first signal, the second signal, the signal #3 and the signal #4. The first signal, the second signal, the signal #3 and the signal #4 correspond respectively to different antenna port groups, i.e., are transmitted via different antenna port groups, with each antenna port group comprising one or more antenna ports.

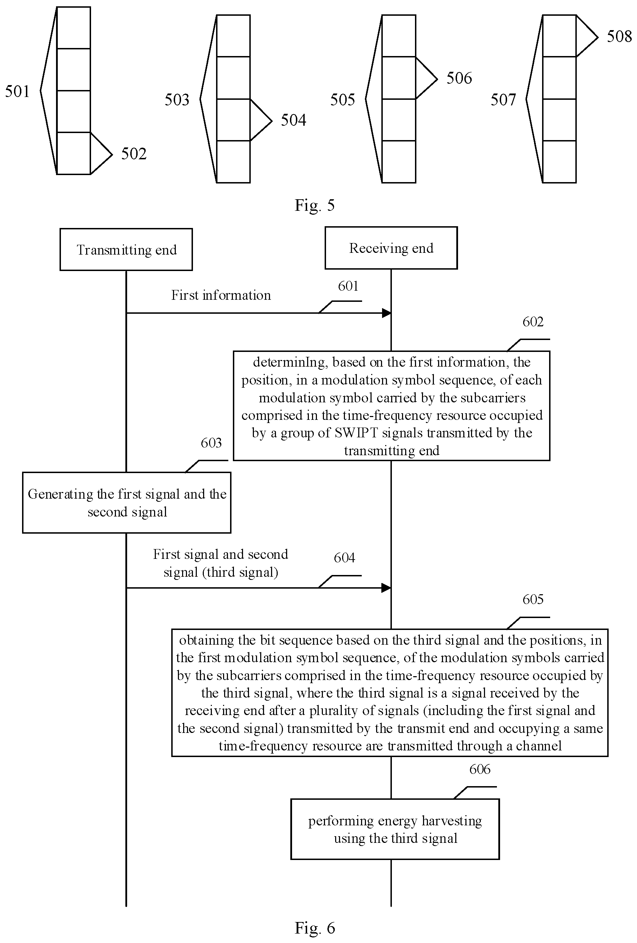

FIG. 5 is an example of a set of subcarriers corresponding to each of 4 OFDM symbols provided by an embodiment of the present application. As shown in FIG. 5, 501 represents the subcarriers comprised in the time-frequency resource occupied by OFDM symbol #1, i.e., subcarrier #0 to subcarrier #(N-1); 502 represents the set of subcarriers corresponding to the modulation symbols in modulation symbol block #1, i.e., subcarrier #0 to subcarrier #(N/4-1); 503 represents the subcarriers comprised in the time-frequency resource occupied by OFDM symbol #2, i.e., subcarrier #0 to subcarrier #(N-1); 504 represents the set of subcarriers corresponding to the modulation symbols in modulation symbol block #2, i.e., subcarrier #(N/4) to subcarrier #(N/2-1); 505 represents the subcarriers comprised in the time-frequency resource occupied by OFDM symbol #3, i.e., subcarrier #0 to subcarrier #(N-1); 506 represents the set of subcarriers corresponding to the modulation symbols in modulation symbol block #3, i.e., subcarrier #(N/2) to subcarrier #(3N/4-1); 507 represents the subcarriers comprised in the time-frequency resource occupied by OFDM symbol #4, i.e., subcarrier #0 to subcarrier #(N-1); and 508 represents the set of subcarriers corresponding to the modulation symbols in modulation symbol block #4, i.e., subcarrier #(3N/4) to subcarrier #(N-1). N is an integer multiple of 4, for example, 256, 512, 1024, etc.

The implementation of the transmitting end generating and transmitting more than two low-PAPR signals is similar to that of generating and transmitting two low-PAPR signals such as the first signal and the second signal, with no substantive difference. The present application takes the transmitting end generating and transmitting the first signal and the second signal as an example to describe the transmitting end generating and transmitting v low-PAPR signals. That is, the technical solution in which the transmitting end generates and transmits more than two low-PAPR signals also falls within the protection scope of the present application.

403. The receiving end performs energy harvesting using the third signal.

In one possible implementation manner, the receiving end comprises the energy harvesting circuit as shown in FIG. 3, and the receiving end performs energy harvesting using the received third signal via the energy harvesting circuit. The receiving end may further perform energy harvesting using the third signal by other means, which is not limited in the present application.

404. The receiving end obtains a bit sequence based on the third signal.

The bit sequence comprises data information or control information carried by the above-mentioned first modulation symbol block. The bit sequence may further comprise data information or control information carried by the above-mentioned second modulation symbol block. The bit sequence may be a bit data source (i.e., a data source), and the bit sequence comprises a plurality of bits. In the present application, the bit sequence may be named as a bit block, or may have other names; the modulation symbol sequence may be named as a modulation symbol block, or may have other names. The order of step 403 and step 404 is not limited. In one optional embodiment, step 403 and step 404 may be performed in parallel, i.e., the receiving end simultaneously performs step 403 and step 404.

In one possible implementation, the receiving end obtains the above-mentioned bit sequence based on the above-mentioned third signal and the positions, in the first modulation symbol sequence, of the modulation symbols carried by the subcarriers comprised in the above-mentioned time-frequency resource, where the modulation symbols carried by the subcarriers comprised in the above-mentioned time-frequency resource comprise the modulation symbols in the above-mentioned first modulation symbol block and the modulation symbols in the above-mentioned second modulation symbol block, and the above-mentioned first modulation symbol block and the above-mentioned second modulation symbol block are obtained based on the above-mentioned first modulation symbol sequence. When the transmitting end transmits more than two low-PAPR signals comprising the first signal and the second signal, the modulation symbols carried by the subcarriers comprised in the above-mentioned time-frequency resource may further comprise modulation symbols in other modulation symbol blocks, the other modulation symbol blocks being carried by signals other than the first signal and the second signal. The embodiments of the present application are described by taking, as an example, the case where the modulation symbols carried by the subcarriers comprised in the above-mentioned time-frequency resource comprise the modulation symbols in the above-mentioned first modulation symbol block and the modulation symbols in the above-mentioned second modulation symbol block.

In one possible implementation, prior to performing step 404, the receiving end has stored the positions, in the first modulation symbol sequence, of the modulation symbols carried by the subcarriers comprised in the above-mentioned time-frequency resource. Illustratively, the transmitting end transmits configuration information to the receiving end via higher-layer signaling, and the receiving end obtains and stores, based on the configuration information, the positions, in a modulation symbol sequence, of the respective modulation symbols carried by the subcarriers comprised in the time-frequency resource occupied by a group of SWIPT signals (e.g., two or more signals comprising the first signal and the second signal) transmitted by the transmitting end, the modulation symbol sequence being the one to be obtained by the receiving end. A group of SWIPT signals refers to a plurality of signals transmitted by the transmitting end via two or more antenna port groups and occupying the same time-frequency resource, e.g., the above-mentioned first signal and second signal, at least one of the plurality of signals carrying information and energy. Illustratively, a communication protocol supported by the receiving end specifies the positions, in a modulation symbol sequence, of the modulation symbols carried by the subcarriers comprised in the time-frequency resource occupied by a group of SWIPT signals transmitted by the transmitting end. For example, the time-frequency resource occupied by a group of SWIPT signals transmitted by the transmitting end (e.g., two or more signals comprising the first signal and the second signal) comprises 1024 subcarriers, the numbers of the 1024 subcarriers being 0-1023; a communication protocol supported by the receiving end specifies the position, in the first modulation symbol sequence, of the modulation symbol carried by each numbered subcarrier. For example, the modulation symbol carried by the subcarrier numbered 0 is at the first position in the first modulation symbol sequence, the modulation symbol carried by the subcarrier numbered 1 is at the second position in the first modulation symbol sequence, the modulation symbol carried by the subcarrier numbered 2 is at the third position in the first modulation symbol sequence, and so on, the modulation symbol carried by the subcarrier numbered 1023 being at the 1024th position in the first modulation symbol sequence. As another example, the modulation symbols carried by the subcarriers numbered 0-63, 256-319, 512-575, and 768-831 are at, in order, the first position to the 256th position in the first modulation symbol sequence, where the subcarrier numbered 0 is at the first position in the first modulation symbol sequence and the subcarrier numbered 831 is at the 256th position in the first modulation symbol sequence; the modulation symbols carried by the subcarriers numbered 64-127, 320-383, 576-639, and 832-895 are at, in order, the 257th position to the 512th position in the first modulation symbol sequence; the modulation symbols carried by the subcarriers numbered 128-191, 384-447, 640-703, and 896-959 are at, in order, the 513th position to the 768th position in the first modulation symbol sequence; and the modulation symbols carried by the subcarriers numbered 192-256, 448-511, 704-767, and 960-1023 are at, in order, the 769th position to the 1024th position in the first modulation symbol sequence.

In one possible implementation, prior to performing step 404, the receiving end performs the following operations: receiving first information from the transmitting end; and determining, based on the above-mentioned first information, the positions, in the above-mentioned first modulation symbol sequence, of the modulation symbols carried by the subcarriers comprised in the above-mentioned time-frequency resource. The first information may be downlink control information. In this implementation manner, the receiving end determines, based on the first information, the positions, in the first modulation symbol sequence, of the modulation symbols carried by the subcarriers comprised in the time-frequency resource. The transmitting end may flexibly adjust, according to its own demand, the positions, in the above-mentioned first modulation symbol sequence, of the modulation symbols carried by the subcarriers comprised in the above-mentioned time-frequency resource. The receiving end may further learn, by other means, the positions, in the above-mentioned first modulation symbol sequence, of the modulation symbols carried by the subcarriers comprised in the above-mentioned time-frequency resource, which is not limited in the present application.

In the embodiments of the present application, the receiving end performs energy harvesting using the third signal, and obtains the bit sequence based on the third signal; coexistence of wireless energy transmission and data transmission can thereby be achieved. Because the third signal is obtained based on the first signal and the second signal, the third signal has a relatively high PAPR, and performing energy harvesting using the third signal can improve energy harvesting efficiency. Direct transmission by the transmitting end of a signal having a relatively high PAPR reduces the efficiency of the power amplifier of its transmitter, and also reduces the signal-to-quantization-noise ratio of its DAC and ADC, thereby deteriorating the data demodulation performance at the receiving end with respect to that signal. Because the third signal is obtained based on the first signal and the second signal, rather than the transmitting end directly transmitting a signal having a relatively high PAPR, performing energy harvesting using the third signal and obtaining the bit sequence based on the third signal can balance energy harvesting efficiency with data demodulation performance while achieving coexistence of wireless energy transmission and data transmission.

FIG. 6 is a flowchart of another communication method provided by an embodiment of the present application. The method flow in FIG. 6 is a possible implementation of the method described in FIG. 4. Specifically, in the method flow of FIG. 6, the transmitting end transmits first information to the receiving end, and the receiving end determines, based on the first information, the position, in a modulation symbol sequence, of each modulation symbol carried by the subcarriers comprised in the time-frequency resource occupied by a group of SWIPT signals transmitted by the transmitting end. As shown in FIG. 6, the method comprises:
601. The transmitting end transmits first information to the receiving end.

Correspondingly, the receiving end receives the first information from the transmitting end. The first information may be downlink control information (DCI), or may be higher-layer signaling such as radio resource control (RRC) signaling or medium access control control element (MAC-CE) signaling, which is not limited in the present application.

In one possible implementation, the above-mentioned first information comprises a first index value, the above-mentioned first index value being used to indicate the respective positions, in the first modulation symbol sequence, of the modulation symbols carried by the subcarriers comprised in the time-frequency resource occupied by a group of SWIPT signals transmitted by the transmitting end. Illustratively, what the first index value indicates is one of a plurality of patterns, where different patterns correspond to different position information, the position information referring to the respective positions, in the first modulation symbol sequence, of the modulation symbols carried by the subcarriers comprised in the time-frequency resource occupied by a group of SWIPT signals transmitted by the transmitting end. The embodiments of the present application are described by taking, as an example, the case where the transmitting end transmits a first signal, a second signal, signal #3, and signal #4 via 4 antenna port groups, to describe the respective positions, in the first modulation symbol sequence, of the modulation symbols carried by the subcarriers comprised in the above-mentioned time-frequency resource, where each signal carries one OFDM symbol; a first group of subcarriers comprised in the above-mentioned time-frequency resource carries the modulation symbols in the first modulation symbol block carried by the first signal, i.e., the first group of subcarriers is the set of subcarriers corresponding to the modulation symbols in the first modulation symbol block; a second group of subcarriers comprised in the above-mentioned time-frequency resource carries the modulation symbols in the second modulation symbol block carried by the second signal, i.e., the second group of subcarriers is the set of subcarriers corresponding to the modulation symbols in the second modulation symbol block; a third group of subcarriers comprised in the above-mentioned time-frequency resource carries the modulation symbols in the modulation symbol block #3 carried by signal #3; and a fourth group of subcarriers carries the modulation symbols in the modulation symbol block #4 carried by signal #4; the position, in the first modulation symbol sequence, of the modulation symbols carried by each group of subcarriers may be predefined, or may be indicated by the first index value. The position, in the first modulation symbol sequence, of the modulation symbols carried by each group of subcarriers may be flexibly configured, which is not limited herein. Several examples in which a possible first index value is used to indicate the numbers of 4 groups of subcarriers as well as the position, in the first modulation symbol sequence, of the modulation symbols carried by each group of subcarriers are described below, where the above-mentioned time-frequency resource comprises 1024 subcarriers numbered 0-1023. Each subcarrier comprised in the above-mentioned time-frequency resource has one number, with different subcarriers having different numbers. In the present application, the number of subcarriers comprised in the above-mentioned time-frequency resource is not limited, and the case in which the above-mentioned time-frequency resource comprises 1024 subcarriers is merely an example. The number of subcarriers comprised in the above-mentioned time-frequency resource may be an integer number of resource blocks (RBs); for example, the above-mentioned time-frequency resource comprises 1200 subcarriers.

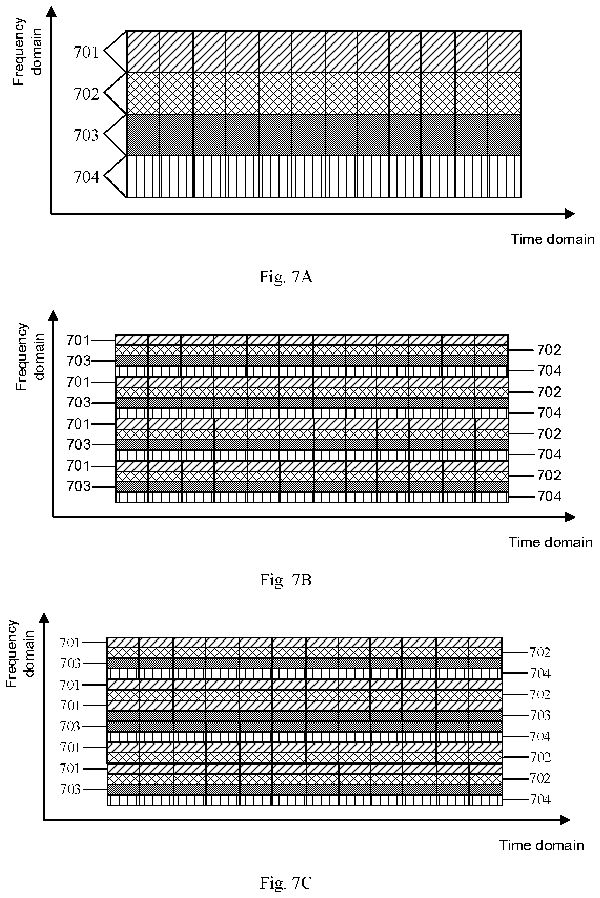

Illustratively, the above-mentioned first index value is 1, and the first index value is used to indicate (localized): the numbers of the first group of subcarriers are 0-255, the numbers of the second group of subcarriers are 256-511, the numbers of the third group of subcarriers are 512-767, and the numbers of the fourth group of subcarriers are 768-1023; the first index value is further used to indicate: the positions, in the first modulation symbol sequence, of the modulation symbols carried by the respective subcarriers in the first group of subcarriers in ascending order of the numbers are, in order, the 1st position to the 256th position, i.e., the modulation symbol carried by the subcarrier with the smallest number is at the first position in the first modulation symbol sequence; the positions, in the first modulation symbol sequence, of the modulation symbols carried by the respective subcarriers in the second group of subcarriers in ascending order of the numbers are, in order, the 257th position to the 512th position; the positions, in the first modulation symbol sequence, of the modulation symbols carried by the respective subcarriers in the third group of subcarriers in ascending order of the numbers are, in order, the 513th position to the 768th position; and the positions, in the first modulation symbol sequence, of the modulation symbols carried by the respective subcarriers in the fourth group of subcarriers in ascending order of the numbers are, in order, the 769th position to the 1024th position. FIG. 7A is an example of the frequency-domain resources respectively occupied by 4 groups of subcarriers comprised in the time-frequency resource occupied by a group of SWIPT signals transmitted by the transmitting end, provided by an embodiment of the present application. As shown in FIG. 7A, 701 represents the frequency-domain resource occupied by the first group of subcarriers (e.g., carrying the modulation symbols in the first modulation symbol block), the numbers of the first group of subcarriers being 0-255; 702 represents the frequency-domain resource occupied by the second group of subcarriers (e.g., carrying the modulation symbols in the second modulation symbol block), the numbers of the second group of subcarriers being 256-511; 703 represents the frequency-domain resource occupied by the third group of subcarriers, the numbers of the third group of subcarriers being 512-767; and 704 represents the frequency-domain resource occupied by the fourth group of subcarriers, the numbers of the fourth group of subcarriers being 768-1023.

Illustratively, the first index value is 2, and the first index value is used to indicate (equally-spaced interleaved): the numbers of the first group of subcarriers are 0-63, 256-319, 512-575, 768-831; the numbers of the second group of subcarriers are 64-127, 320-383, 576-639, 832-895; the numbers of the third group of subcarriers are 128-191, 384-447, 640-703, 896-959; and the numbers of the fourth group of subcarriers are 192-256, 448-511, 704-767, 960-1023; the first index value is further used to indicate: the positions, in the first modulation symbol sequence, of the modulation symbols carried by the respective subcarriers in the first group of subcarriers in ascending order of the numbers are, in order, the 1st position to the 256th position; the positions, in the first modulation symbol sequence, of the modulation symbols carried by the respective subcarriers in the second group of subcarriers in ascending order of the numbers are, in order, the 257th position to the 512th position; the positions, in the first modulation symbol sequence, of the modulation symbols carried by the respective subcarriers in the third group of subcarriers in ascending order of the numbers are, in order, the 513th position to the 768th position; and the positions, in the first modulation symbol sequence, of the modulation symbols carried by the respective subcarriers in the fourth group of subcarriers in ascending order of the numbers are, in order, the 769th position to the 1024th position. FIG. 7B is another example of the frequency-domain resources respectively occupied by 4 groups of subcarriers comprised in the time-frequency resource occupied by a group of SWIPT signals transmitted by the transmitting end, provided by an embodiment of the present application. As shown in FIG. 7B, 701 represents the frequency-domain resource occupied by the first group of subcarriers (e.g., carrying the modulation symbols in the first modulation symbol block); 702 represents the frequency-domain resource occupied by the second group of subcarriers (e.g., carrying the modulation symbols in the second modulation symbol block); 703 represents the frequency-domain resource occupied by the third group of subcarriers; and 704 represents the frequency-domain resource occupied by the fourth group of subcarriers.

Illustratively, the first index value is 3, and the first index value is used to indicate (non-equally-spaced interleaved): the numbers of the first group of subcarriers are 0-63, 512-575, 832-895, 960-1023; the numbers of the second group of subcarriers are 128-191, 256-319, 576-639, 896-959; the numbers of the third group of subcarriers are 192-256, 448-511, 704-767, 768-831; and the numbers of the fourth group of subcarriers are 64-127, 320-383, 384-447, 640-703; the first index value is further used to indicate: the positions, in the first modulation symbol sequence, of the modulation symbols carried by the respective subcarriers in the first group of subcarriers in ascending order of the numbers are, in order, the 1st position to the 256th position; the positions, in the first modulation symbol sequence, of the modulation symbols carried by the respective subcarriers in the second group of subcarriers in ascending order of the numbers are, in order, the 257th position to the 512th position; the positions, in the first modulation symbol sequence, of the modulation symbols carried by the respective subcarriers in the third group of subcarriers in ascending order of the numbers are, in order, the 513th position to the 768th position; and the positions, in the first modulation symbol sequence, of the modulation symbols carried by the respective subcarriers in the fourth group of subcarriers in ascending order of the numbers are, in order, the 769th position to the 1024th position. FIG. 7C is another example of the frequency-domain resources respectively occupied by 4 groups of subcarriers comprised in the time-frequency resource occupied by a group of SWIPT signals transmitted by the transmitting end, provided by an embodiment of the present application. As shown in FIG. 7C, 701 represents the frequency-domain resource occupied by the first group of subcarriers; 702 represents the frequency-domain resource occupied by the second group of subcarriers (e.g., carrying the modulation symbols in the second modulation symbol block); 703 represents the frequency-domain resource occupied by the third group of subcarriers; and 704 represents the frequency-domain resource occupied by the fourth group of subcarriers.

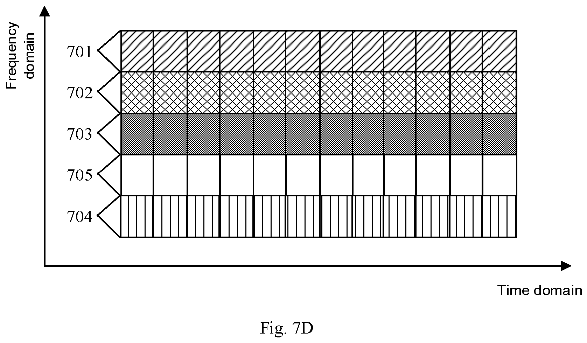

Different groups of subcarriers may be sets of different subcarriers occupied by different antenna port groups of the transmitting end within the same time-frequency resource; different antenna port groups occupy different groups of subcarriers, and the PAPRs of the signals transmitted by different antenna port groups are also different. For example, the PAPR of the signal transmitted by the transmitting end when the above-mentioned four groups of subcarriers are equally-spaced interleaved is lower than the PAPR of the signal transmitted by the transmitting end when the above-mentioned four groups of subcarriers are localized. In one possible implementation manner, the transmitting end (e.g., a base station) splits the subcarriers in the above-mentioned time-frequency resource into four groups based on the current distribution of resources available thereto. FIG. 7D is another example of the frequency-domain resources respectively occupied by 4 groups of subcarriers comprised in the time-frequency resource occupied by a group of SWIPT signals transmitted by the transmitting end, provided by an embodiment of the present application. As shown in FIG. 7D, 701 represents the frequency-domain resource occupied by the first group of subcarriers; 702 represents the frequency-domain resource occupied by the second group of subcarriers; 703 represents the frequency-domain resource occupied by the third group of subcarriers; 704 represents the frequency-domain resource occupied by the fourth group of subcarriers; and 705 represents resources that have already been used by the transmitting end, which are therefore skipped when allocating frequency-domain resources. The above schemes are merely possible examples; the first index values transmitted by the transmitting end in different time slots may be the same or different.

In one possible implementation, the above-mentioned first index value is used to indicate at least one of: the numbers of a plurality of first subcarriers, among the subcarriers comprised in the above-mentioned time-frequency resource, that carry the modulation symbols in the above-mentioned first modulation symbol block, and the respective positions, in the above-mentioned first modulation symbol sequence, of the modulation symbols carried by the above-mentioned plurality of first subcarriers. At least one of: the numbers of the plurality of first subcarriers, among the subcarriers comprised in the above-mentioned time-frequency resource, that carry the modulation symbols in the above-mentioned first modulation symbol block, and the respective positions, in the above-mentioned first modulation symbol sequence, of the modulation symbols carried by the above-mentioned plurality of first subcarriers may be predefined. In one possible implementation, the above-mentioned first index value or another first index value is further used to indicate at least one of: the numbers of a plurality of second subcarriers, among the subcarriers comprised in the above-mentioned time-frequency resource, that carry the modulation symbols in the above-mentioned second modulation symbol block, and the respective positions, in the above-mentioned first modulation symbol sequence, of the modulation symbols carried by the above-mentioned plurality of second subcarriers. The numbers of the plurality of second subcarriers, among the subcarriers comprised in the above-mentioned time-frequency resource, that carry the modulation symbols in the above-mentioned second modulation symbol block, and the respective positions, in the above-mentioned first modulation symbol sequence, of the modulation symbols carried by the above-mentioned plurality of second subcarriers, may be predefined. Illustratively, the above-mentioned first index value is used to indicate that, among the subcarriers comprised in the above-mentioned time-frequency resource, a plurality of first subcarriers numbered 0-63, 512-575, 832-895, and 960-1023 carry the modulation symbols in the above-mentioned first modulation symbol block, and that the positions, in the first modulation symbol sequence, of the modulation symbols carried by the plurality of first subcarriers in ascending order of the numbers are, in order, the 1st position to the 256th position. Illustratively, the above-mentioned first index value is used to indicate that, among the subcarriers comprised in the above-mentioned time-frequency resource, a plurality of first subcarriers numbered 0-63, 512-575, 832-895, and 960-1023 carry the modulation symbols in the above-mentioned first modulation symbol block, and the respective positions, in the above-mentioned first modulation symbol sequence, of the modulation symbols carried by the plurality of first subcarriers are predefined; for example, the positions, in the first modulation symbol sequence, of the modulation symbols carried by the plurality of first subcarriers in ascending order of the numbers are, in order, the 1st position to the 256th position. Illustratively, the above-mentioned first index value is used to indicate that the positions, in the above-mentioned first modulation symbol sequence, of the modulation symbols carried by the above-mentioned plurality of first subcarriers in ascending order of the numbers are, in order, the 1st position to the 256th position, and the numbers of the above-mentioned plurality of first subcarriers are predefined; for example, the numbers of the plurality of first subcarriers are 0-63, 256-319, 512-575, and 768-831. Illustratively, the above-mentioned first index value is used to indicate that, among the subcarriers comprised in the above-mentioned time-frequency resource, a plurality of first subcarriers numbered 0-63, 512-575, 832-895, and 960-1023 carry the modulation symbols in the above-mentioned first modulation symbol block, and that the positions, in the first modulation symbol sequence, of the modulation symbols carried by the plurality of first subcarriers in ascending order of the numbers are, in order, the 1st position to the 256th position; the above-mentioned first index value or another first index value is further used to indicate that, among the subcarriers comprised in the above-mentioned time-frequency resource, a plurality of second subcarriers numbered 128-191, 256-319, 576-639, and 896-959 carry the modulation symbols in the above-mentioned second modulation symbol block, and that the positions, in the first modulation symbol sequence, of the modulation symbols carried by the plurality of second subcarriers in ascending order of the numbers are, in order, the 257th position to the 512th position.

602. The receiving end determines, based on the first information, the position, in a modulation symbol sequence, of each modulation symbol carried by the subcarriers comprised in the time-frequency resource occupied by a group of SWIPT signals transmitted by the transmitting end.

In one possible implementation, the transmitting end periodically transmits the first information, so that the position, in the modulation symbol sequence, of each modulation symbol carried by the subcarriers comprised in the time-frequency resource occupied by a group of SWIPT signals transmitted by the transmitting end can be updated in a timely manner.

In one possible implementation, prior to transmitting a group of SWIPT signals, the transmitting end transmits indication information, e.g., first information (a first value), for indicating the position, in the modulation symbol sequence, of each modulation symbol carried by the subcarriers comprised in the time-frequency resource occupied by the group of SWIPT signals; the receiving end determines, based on the indication information, the position, in the modulation symbol sequence, of each modulation symbol carried by the subcarriers comprised in the time-frequency resource occupied by the group of SWIPT signals. In one possible implementation, when the position associated with the group of SWIPT signals to be transmitted by the transmitting end (i.e., the position, in the modulation symbol sequence, of each modulation symbol carried by the subcarriers comprised in the time-frequency resource occupied by the group of SWIPT signals) is different from the position associated with the group of SWIPT signals previously transmitted by the transmitting end to the receiving end, the transmitting end transmits the indication information again, e.g., first information (a second value), for indicating the position associated with the group of SWIPT signals to be transmitted. In this implementation, if the position associated with the group of SWIPT signals to be transmitted by the transmitting end is the same as the position associated with the group of SWIPT signals previously transmitted by the transmitting end to the receiving end, the transmitting end does not need to transmit the indication information, which can save signaling overhead.

In one possible implementation, the above-mentioned first information comprises a first transmission parameter, the above-mentioned first transmission parameter being used for at least one of: determination of the numbers of a plurality of first subcarriers, among the subcarriers comprised in the above-mentioned time-frequency resource, that carry the modulation symbols in the above-mentioned first modulation symbol block; determination of the respective positions, in the above-mentioned first modulation symbol sequence, of the modulation symbols carried by the above-mentioned plurality of first subcarriers; determination of the numbers of a plurality of second subcarriers, among the subcarriers comprised in the above-mentioned time-frequency resource, that carry the modulation symbols in the above-mentioned second modulation symbol block; and determination of the respective positions, in the above-mentioned first modulation symbol sequence, of the modulation symbols carried by the above-mentioned plurality of second subcarriers. Illustratively, the above-mentioned first transmission parameter is used for determination of the numbers of the plurality of first subcarriers, among the subcarriers comprised in the above-mentioned time-frequency resource, that carry the modulation symbols in the above-mentioned first modulation symbol block; determination of the respective positions, in the above-mentioned first modulation symbol sequence, of the modulation symbols carried by the above-mentioned plurality of first subcarriers; determination of the numbers of the plurality of second subcarriers, among the subcarriers comprised in the above-mentioned time-frequency resource, that carry the modulation symbols in the above-mentioned second modulation symbol block; and determination of the respective positions, in the above-mentioned first modulation symbol sequence, of the modulation symbols carried by the above-mentioned plurality of second subcarriers. In one possible implementation, the above-mentioned first transmission parameter comprises at least one of: a number of the above-mentioned plurality of first subcarriers, a first order parameter, a number of the above-mentioned plurality of second subcarriers, and a second order parameter; the above-mentioned first order parameter being used for determination of the positions, in the above-mentioned first modulation symbol sequence, of the modulation symbols in the above-mentioned first modulation symbol block; the above-mentioned second order parameter being further used for determination of the positions, in the above-mentioned first modulation symbol sequence, of the modulation symbols in the above-mentioned second modulation symbol block. In one possible implementation, the first transmission parameter comprises a first identifier, a number of subcarrier groups k₁, a number k₂ of subcarriers comprised in each group of subcarriers, and an order parameter 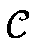 , where k₁ indicates that the subcarriers carrying modulation symbols among the subcarriers comprised in the above-mentioned time-frequency resource are divided into k₁ groups, the order parameter 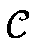 indicates the order of the k₁ groups of subcarriers, and the first identifier is used for determination of the number of each group of subcarriers.

Illustratively, the above-mentioned first transmission parameter comprises: a first identifier (e.g., having a value of 1), k₁ = 4, k₂ = 256, 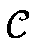 = {1,2,3,4}. The above-mentioned first transmission parameter indicates (when the value of the first identifier is 1, the first identifier indicates that the subcarriers comprised in the above-mentioned time-frequency resource are split into a plurality of groups of subcarriers in a localized manner): there are k₁ = 4 groups of subcarriers, the number of subcarriers comprised in each group being k₂ = 256, and the order of the k₁ = 4 groups is 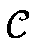 = {1,2,3,4}, i.e., group 1 of subcarriers (first group of subcarriers), group 2 of subcarriers (second group of subcarriers), group 3 of subcarriers (third group of subcarriers), and group 4 of subcarriers (fourth group of subcarriers). The receiving end may determine, based on the first transmission parameter, that the numbers of group 1 of subcarriers are 0-255, the numbers of group 2 of subcarriers are 256-511, the numbers of group 3 of subcarriers are 512-768, and the numbers of group 4 of subcarriers are 769-1024; and that the positions, in the first modulation symbol sequence, of the modulation symbols carried by the respective subcarriers in the first group of subcarriers in ascending order of the numbers are, in order, the 1st position to the 256th position; the positions, in the first modulation symbol sequence, of the modulation symbols carried by the respective subcarriers in the second group of subcarriers in ascending order of the numbers are, in order, the 257th position to the 512th position; the positions, in the first modulation symbol sequence, of the modulation symbols carried by the respective subcarriers in the third group of subcarriers in ascending order of the numbers are, in order, the 513th position to the 768th position; and the positions, in the first modulation symbol sequence, of the modulation symbols carried by the respective subcarriers in the fourth group of subcarriers in ascending order of the numbers are, in order, the 769th position to the 1024th position.

Illustratively, the above-mentioned first transmission parameter comprises: a first identifier (e.g., having a value of 2), k₁ = 4, k₂ = 256, 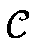 = {1,2,3,4}, k₃ = 4, L = 256. The above-mentioned first transmission parameter indicates (when the value of the first identifier is 2, the first identifier indicates that the subcarriers comprised in the above-mentioned time-frequency resource are split into a plurality of groups of subcarriers in an equally-spaced interleaved manner): there are k₁ = 4 groups of subcarriers, the number of subcarriers comprised in each group being k₂ = 256; the initial (first) subcarrier number of the i-th group is 0 + 64 * i; the order of the k₁ = 4 groups is 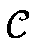 = {1,2,3,4}, i.e., group 1 of subcarriers, group 2 of subcarriers, group 3 of subcarriers, and group 4 of subcarriers; each group of subcarriers is further split into k₃ = 4 sub-groups, with each sub-group spaced apart by L = 256. The receiving end may determine, based on the first transmission parameter, that the numbers of group 1 of subcarriers are 0-63, 256-319, 512-575, 768-831; the numbers of group 2 of subcarriers are 64-127, 320-383, 576-639, 832-895; the numbers of group 3 of subcarriers are 128-191, 384-447, 640-703, 896-959; and the numbers of group 4 of subcarriers are 192-256, 448-511, 704-767, 960-1023. For the respective positions, in the above-mentioned first modulation symbol sequence, of the modulation symbols carried by each group of subcarriers, reference may be made to the above examples.

Illustratively, the above-mentioned first transmission parameter comprises: a first identifier (e.g., having a value of 3), k₁ = 4, k₂ = 256, 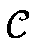 = {1,2,3,4}, k₃ = 4. The above-mentioned first transmission parameter indicates (when the value of the first identifier is 3, the first identifier indicates that the subcarriers comprised in the above-mentioned time-frequency resource are split into a plurality of groups of subcarriers in a non-equally-spaced interleaved manner): there are k₁ = 4 groups of subcarriers, the number of subcarriers comprised in each group being k₂ = 256; the order of the k₁ = 4 groups is 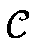 = {1,2,3,4}, i.e., group 1 of subcarriers, group 2 of subcarriers, group 3 of subcarriers, and group 4 of subcarriers; each group of subcarriers is further split into k₃ = 4 sub-groups; the initial subcarrier numbers of the k₃ = 4 sub-groups in group 1 of subcarriers are {0,512,832,960} ; the initial subcarrier numbers of the k₃ = 4 sub-groups in group 2 of subcarriers are {128,256,576,896}; the initial subcarrier numbers of the k₃ = 4 sub-groups in group 3 of subcarriers are {192,448,704,768}; and the initial subcarrier numbers of the k₃ = 4 sub-groups in group 4 of subcarriers are {64,320,384,640}. The receiving end may determine, based on the first transmission parameter, that the numbers of group 1 of subcarriers are 0-63, 512-575, 832-895, 960-1023; the numbers of group 2 of subcarriers are 128-191, 256-319, 576-639, 896-959; the numbers of group 3 of subcarriers are 192-256, 448-511, 704-767, 768-831; and the numbers of group 4 of subcarriers are 64-127, 320-383, 384-447, 640-703. For the respective positions, in the above-mentioned first modulation symbol sequence, of the modulation symbols carried by each group of subcarriers, reference may be made to the above examples.

603. The transmitting end generates a first signal and a second signal.

For step 603, reference may be made to step 401 in FIG. 4.

604. The transmitting end transmits the first signal and the second signal to the receiving end.

Correspondingly, the receiving end receives a third signal. The third signal may be a signal received by the receiving end and corresponding to a group of SWIPT signals transmitted by the transmitting end. Step 603 and step 604 may be an example of the transmitting end generating and transmitting v low-PAPR signals, v being an integer greater than or equal to 1. For the descriptions of the first signal, the second signal, and the third signal, reference may be made to the relevant descriptions in FIG. 4, which are not repeated herein. For step 604, reference may be made to step 402 in FIG. 4.

605. The receiving end obtains the bit sequence based on the third signal and the positions, in the first modulation symbol sequence, of the modulation symbols carried by the subcarriers comprised in the time-frequency resource occupied by the third signal.

The modulation symbols carried by the subcarriers comprised in the above-mentioned time-frequency resource comprise the modulation symbols in the above-mentioned first modulation symbol block and the modulation symbols in the above-mentioned second modulation symbol block, the first modulation symbol block and the second modulation symbol block being obtained based on the first modulation symbol sequence. The time-frequency resource occupied by the third signal may be the time-frequency resource occupied by a group of SWIPT signals (comprising the first signal and the second signal) transmitted by the transmitting end.

In one possible implementation, the receiving end obtains a first modulation sequence based on the third signal and the positions, in the first modulation symbol sequence, of the respective modulation symbols carried by the subcarriers comprised in the above-mentioned time-frequency resource; and demodulates the first modulation sequence to obtain the bit sequence. Illustratively, the time-frequency resource occupied by the third signal comprises 1024 subcarriers numbered 0-1023; the receiving end determines, based on the first information, that the modulation symbol carried by the subcarrier numbered 0 is at the first position in the first modulation symbol sequence, the modulation symbol carried by the subcarrier numbered 1 is at the second position in the first modulation symbol sequence, the modulation symbol carried by the subcarrier numbered 2 is at the third position in the first modulation symbol sequence, and so on, the modulation symbol carried by the subcarrier numbered 1023 being at the 1024th position in the first modulation symbol sequence; the receiving end takes the modulation symbol obtained from the subcarrier numbered 0 as the first modulation symbol in the first modulation symbol sequence, takes the modulation symbol obtained from the subcarrier numbered 1 as the second modulation symbol in the first modulation symbol sequence, and so on, takes the modulation symbol obtained from the subcarrier numbered 1023 as the 1024th modulation symbol in the first modulation symbol sequence, thereby finally obtaining the first modulation symbol sequence.

Illustratively, the time-frequency resource occupied by the third signal comprises 1024 subcarriers numbered 0-1023; the receiving end determines, based on the first information, that the positions, in the first modulation symbol sequence, of the modulation symbols (e.g., the modulation symbols in the first modulation symbol block) carried by the subcarriers numbered 0-63, 256-319, 512-575, 768-831 in ascending order of the numbers are, in order, the first position to the 256th position; the positions, in the first modulation symbol sequence, of the modulation symbols (e.g., the modulation symbols in the second modulation symbol block) carried by the subcarriers numbered 64-127, 320-383, 576-639, 832-895 in ascending order of the numbers are, in order, the 257th position to the 512th position; the positions, in the first modulation symbol sequence, of the modulation symbols carried by the subcarriers numbered 128-191, 384-447, 640-703, 896-959 in ascending order of the numbers are, in order, the 513th position to the 768th position; the positions, in the first modulation symbol sequence, of the modulation symbols carried by the subcarriers numbered 192-256, 448-511, 704-767, 960-1023 in ascending order of the numbers are, in order, the 769th position to the 1024th position; the receiving end sequentially obtains, in ascending order of the subcarrier numbers, the modulation symbols carried by the subcarriers numbered 0-63, 256-319, 512-575, 768-831 to obtain a first sub-sequence; the receiving end sequentially obtains, in ascending order of the subcarrier numbers, the modulation symbols carried by the subcarriers numbered 64-127, 320-383, 576-639, 832-895 to obtain a second sub-sequence; the receiving end sequentially obtains, in ascending order of the subcarrier numbers, the modulation symbols carried by the subcarriers numbered 128-191, 384-447, 640-703, 896-959 to obtain a third sub-sequence; the receiving end sequentially obtains, in ascending order of the subcarrier numbers, the modulation symbols carried by the subcarriers numbered 192-256, 448-511, 704-767, 960-1023 to obtain a fourth sub-sequence; the receiving end sequentially concatenates, in order, the first sub-sequence, the second sub-sequence, the third sub-sequence, and the fourth sub-sequence to obtain the first modulation symbol sequence.

606. The receiving end performs energy harvesting using the third signal.

For step 606, reference may be made to step 403 in FIG. 4. The order of step 606 and step 605 is not limited. Step 605 and step 606 may be performed in parallel.

In the embodiments of the present application, the transmitting end transmits the first information to the receiving end, and the receiving end determines, based on the first information, the position, in the modulation symbol sequence, of each modulation symbol carried by the subcarriers comprised in the time-frequency resource occupied by a group of SWIPT signals transmitted by the transmitting end. The transmitting end may flexibly adjust, according to its own demand, the position, in the modulation symbol sequence, of the modulation symbol carried by the subcarriers comprised in the time-frequency resource occupied by a group of SWIPT signals to be transmitted. The transmitting end transmits the first signal and the second signal, rather than the transmitting end directly transmitting the third signal having a relatively high PAPR; both energy harvesting efficiency and data demodulation performance can thereby be achieved while implementing coexistence of wireless energy transmission and data transmission.

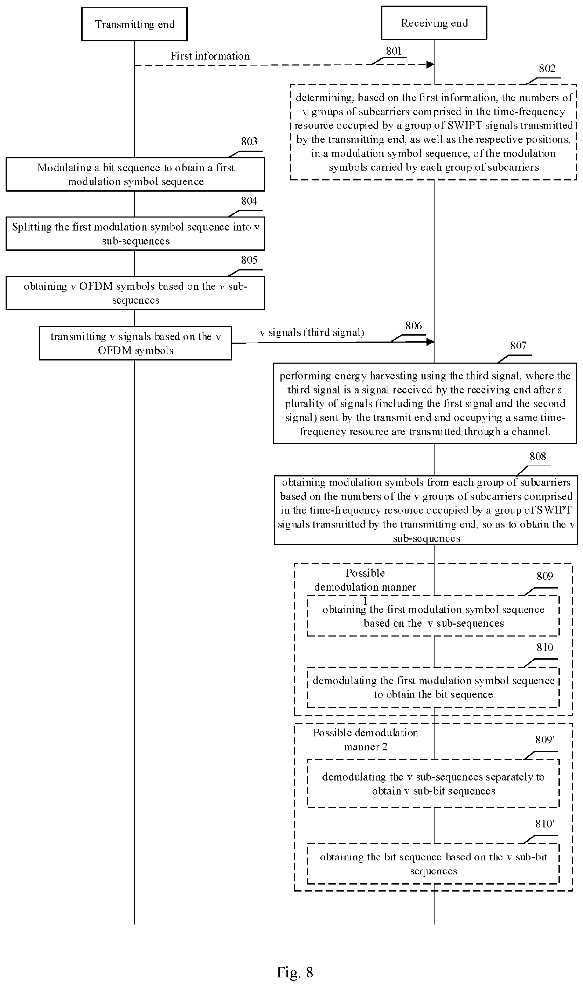

FIG. 8 is a flowchart of another communication method provided by an embodiment of the present application. The method flow in FIG. 8 is a possible implementation of the method described in FIG. 6. Specifically, FIG. 8 describes a possible manner of the process in which the transmitting end generates v OFDM symbols (comprising the above-mentioned first OFDM symbol and second OFDM symbol). As shown in FIG. 8, the method comprises:
801. The transmitting end transmits first information to the receiving end.

Correspondingly, the receiving end receives the first information from the transmitting end.

In one possible implementation, the first information comprises a first index value, the first index value being used to indicate the numbers of v groups of subcarriers comprised in the time-frequency resource occupied by a group of SWIPT signals transmitted by the transmitting end, as well as the respective positions, in a modulation symbol sequence, of the modulation symbols carried by each group of subcarriers. v may be 2, 3, 4, 5, 6, 8, 9, 10, 12, 16, etc., which is not limited in the present application. For ease of understanding, the following description takes v equal to 4 as an example. For examples of the first index value, reference may be made to step 601 in FIG. 6.

In one possible implementation, the first information comprises a first transmission parameter, the first transmission parameter being used by the receiving end to determine the numbers of v groups of subcarriers comprised in the time-frequency resource occupied by a group of SWIPT signals transmitted by the transmitting end, as well as the respective positions, in a modulation symbol sequence, of the modulation symbols carried by each group of subcarriers. For examples of the first transmission parameter, reference may be made to step 602 in FIG. 6.

802. The receiving end determines, based on the first information, the numbers of v groups of subcarriers comprised in the time-frequency resource occupied by a group of SWIPT signals transmitted by the transmitting end, as well as the respective positions, in a modulation symbol sequence, of the modulation symbols carried by each group of subcarriers.

Step 801 and step 802 are optional. The order of step 802 and step 806 below is not limited. The receiving end may have stored the numbers of v groups of subcarriers comprised in the time-frequency resource occupied by a group of SWIPT signals transmitted by the transmitting end, as well as the respective positions, in a modulation symbol sequence, of the modulation symbols carried by each group of subcarriers. Illustratively, a communication protocol supported by the receiving end specifies the numbers of v groups of subcarriers comprised in the time-frequency resource occupied by a group of SWIPT signals transmitted by the transmitting end, as well as the respective positions, in a modulation symbol sequence, of the modulation symbols carried by each group of subcarriers; that is, the numbers of v groups of subcarriers comprised in the time-frequency resource occupied by a group of SWIPT signals transmitted by the transmitting end, as well as the respective positions, in a modulation symbol sequence, of the modulation symbols carried by each group of subcarriers, are predefined.

803. The transmitting end modulates a bit sequence to obtain a first modulation symbol sequence.

The present application does not limit the manner in which the transmitting end performs modulation on the bit sequence. For example, the manner in which the transmitting end modulates the bit sequence is any one of: amplitude shift keying (ASK) modulation, frequency shift keying (FSK) modulation, phase shift keying (PSK) modulation, quadrature amplitude modulation (QAM), or on-off keying (OOK). It should be noted that, for certain modulation manners, such as OOK modulation, there are cases where the value of a modulation symbol is 0. In such cases, the transmitting end may map the modulation symbols with a value of 0 in different sub-sequences obtained based on the first modulation symbol sequence onto a same subcarrier, and then indicate the positions of the subcarriers corresponding to the modulation symbols with a value of 0 to the receiving end. For example, the bit sequence is [*b*(0), ··· , *b*(*M*_{bit} - 1)], the first modulation symbol sequence is [*d*(0), ··· , *d*(*M*_{symb} - 1)], the first modulation symbol sequence may be a complex-valued modulation symbol block, the length of the bit sequence is *M*_{bit}, and the length of the first modulation symbol sequence is *M*_{symb}.

804. The transmitting end splits the first modulation symbol sequence into v sub-sequences.

v is an integer greater than 1, and v is less than or equal to the number of antenna port groups available for the above-mentioned time-frequency resource. Alternatively, v is less than or equal to the number of RF chains currently available at the transmitting end. The above-mentioned v sub-sequences comprise a first sub-sequence and a second sub-sequence, the above-mentioned first sub-sequence corresponding to the above-mentioned first modulation symbol block, and the above-mentioned second sub-sequence corresponding to the above-mentioned second modulation symbol block. The above-mentioned first sub-sequence may comprise modulation symbols with a value of 0, and the above-mentioned second sub-sequence may comprise modulation symbols with a value of 0. The above-mentioned first modulation symbol block and the above-mentioned second modulation symbol block do not comprise modulation symbols with a value of 0. In one possible implementation, the first sub-sequence is the first modulation symbol block, and the above-mentioned second sub-sequence is the above-mentioned second modulation symbol block. In one possible implementation, the first modulation symbol block is obtained based on the first sub-sequence, e.g., comprising only the modulation symbols with non-zero values in the first sub-sequence; the second modulation symbol block is obtained based on the second sub-sequence, e.g., comprising only the modulation symbols with non-zero values in the second sub-sequence.

In one possible implementation manner, the transmitting end splits the first modulation symbol sequence into v sub-sequences based on the number of its RF chains. For example, the number of RF chains currently available at the transmitting end is v, and the transmitting end splits the first modulation symbol sequence into v sub-sequences. In one possible implementation, the transmitting end splits the first modulation symbol sequence into v sub-sequences based on the number of antenna port groups (i.e., the maximum configurable antenna port groups) available for the time-frequency resource occupied by a group of SWIPT signals to be transmitted thereby. For example, the number of antenna port groups available for the time-frequency resource occupied by a group of SWIPT signals to be transmitted by the transmitting end is v, and the transmitting end splits the first modulation symbol sequence into v sub-sequences. Assuming that the length of the first modulation symbol sequence is *M*_{symb}, taking equal splitting as an example, the number of modulation symbols comprised in each sub-sequence is (*M*_{symb}/*v*), i.e., (*M*_{symb}/4).

In one possible implementation, step 803 to step 804 are replaced with: the transmitting end splits the bit sequence into v sub-bit sequences; the transmitting end separately modulates the v sub-bit sequences to obtain v sub-sequences.

805. The transmitting end obtains v OFDM symbols based on the above-mentioned v sub-sequences.

In one possible implementation, the above-mentioned v sub-sequences comprise a first sub-sequence, a second sub-sequence, a third sub-sequence, and a fourth sub-sequence; based on the first sub-sequence, the first OFDM symbol is obtained; based on the second sub-sequence, the second OFDM symbol is obtained; based on the third sub-sequence, the third OFDM symbol is obtained; based on the fourth sub-sequence, the fourth OFDM symbol is obtained. The present application does not limit the specific implementation manner of step 805. One example of step 805 is as follows: the transmitting end maps the modulation symbols comprised in the first sub-sequence onto a first group of subcarriers comprised in the time-frequency resource occupied by a group of SWIPT signals to be transmitted thereby, to obtain the first OFDM symbol; maps the modulation symbols comprised in the second sub-sequence onto a second group of subcarriers comprised in the time-frequency resource, to obtain the second OFDM symbol; maps the modulation symbols comprised in the third sub-sequence onto a third group of subcarriers comprised in the time-frequency resource, to obtain the third OFDM symbol; and maps the modulation symbols comprised in the fourth sub-sequence onto a fourth group of subcarriers comprised in the time-frequency resource, to obtain the fourth OFDM symbol. The present application does not limit the numbering of each group of subcarriers among the subcarriers comprised in the time-frequency resource. Illustratively, the time-frequency resource occupied by a group of SWIPT signals transmitted by the transmitting end comprises 1024 subcarriers numbered 0-1023; the numbers of the first group of subcarriers comprised in the time-frequency resource are 0-63, 256-319, 512-575, 768-831; the numbers of the second group of subcarriers are 64-127, 320-383, 576-639, 832-895; the numbers of the third group of subcarriers are 128-191, 384-447, 640-803, 896-959; and the numbers of the fourth group of subcarriers are 192-256, 448-511, 804-767, 960-1023. It should be noted that the first OFDM symbol, the second OFDM symbol, the third OFDM symbol, and the fourth OFDM symbol share the time-frequency resource. As long as a subcarrier at a certain position in one of these four OFDM symbols is occupied by (i.e., carries) a modulation symbol, no modulation symbol can be placed (carried) on the subcarrier at the corresponding position in the other OFDM symbols. In other words, the intersection of the sets of subcarriers that carry modulation symbols in any two OFDM symbols is an empty set. For example, the intersection of the first group of subcarriers in the first OFDM symbol and the second group of subcarriers in the second OFDM symbol is an empty set.

806. The transmitting end transmits v signals based on the v OFDM symbols.

Correspondingly, the receiving end receives a third signal. The third signal may be a signal received by the receiving end and corresponding to a group of SWIPT signals (the above-mentioned v signals) transmitted by the transmitting end. The above-mentioned v signals may comprise the above-mentioned first signal and the above-mentioned second signal. The PAPR of any one of the above-mentioned v signals may be less than or equal to a preset first threshold. The PAPR of the above-mentioned third signal may be greater than a preset second threshold. Here, the first threshold and the second threshold may be the same, or may be different.

In one possible implementation, the v OFDM symbols comprise a first OFDM symbol, a second OFDM symbol, a third OFDM symbol, and a fourth OFDM symbol; the transmitting end up-converts the first OFDM symbol and transmits, via a first antenna port group, the first signal that carries the first OFDM symbol; up-converts the second OFDM symbol and transmits, via a second antenna port group, the second signal that carries the second OFDM symbol; up-converts the third OFDM symbol and transmits, via a third antenna port group, signal #3 that carries the third OFDM symbol; up-converts the fourth OFDM symbol and transmits, via a fourth antenna port group, signal #4 that carries the first OFDM symbol; these four signals occupy the same time-frequency resource, i.e., the time-frequency resource occupied by a group of SWIPT signals transmitted by the transmitting end. The above-mentioned v signals comprise the first signal, the second signal, signal #3, and signal #4.

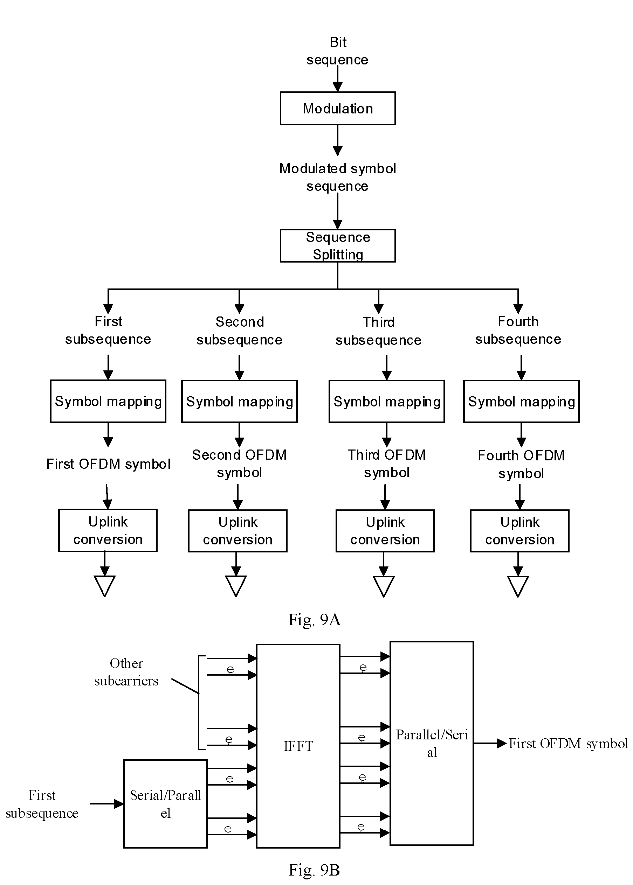

FIG. 9A is an example diagram of the process in which the transmitting end generates and transmits a group of SWIPT signals, provided by an embodiment of the present application. The process shown in FIG. 9A is one example of step 803 to step 806. As shown in FIG. 9A, the process in which the transmitting end generates and transmits a group of SWIPT signals is as follows: modulating the bit sequence (refer to step 803) to obtain the modulation symbol sequence; splitting the sequence (refer to step 804), for example, splitting the modulation symbol sequence into a first sub-sequence, a second sub-sequence, a third sub-sequence, and a fourth sub-sequence; symbol mapping (refer to step 805), i.e., generating the first OFDM symbol, the second OFDM symbol, the third OFDM symbol, and the fourth OFDM symbol based on the sub-sequences obtained by splitting; and signal transmission (refer to step 806).

FIG. 9B is a schematic flowchart of symbol mapping and OFDM symbol generation provided by an embodiment of the present application. As shown in FIG. 9B, serial-to-parallel conversion is first performed on the first sub-sequence; then, the modulation symbols in the first sub-sequence are mapped onto a first group of subcarriers, and the values of the modulation symbols placed on the other subcarriers are 0; the first group of subcarriers undergoes inverse fast Fourier transform (IFFT) and parallel-to-serial conversion, finally yielding the first OFDM symbol. FIG. 9B is described by taking the first sub-sequence as an example; the manner of generating an OFDM symbol based on other sub-sequences is similar thereto.

807. The receiving end performs energy harvesting using the third signal.

For step 807, reference may be made to step 403 in FIG. 4.

808. The receiving end obtains modulation symbols from each group of subcarriers based on the numbers of the v groups of subcarriers comprised in the time-frequency resource occupied by a group of SWIPT signals transmitted by the transmitting end, so as to obtain the above-mentioned v sub-sequences.

In one possible implementation, the modulation symbols are sequentially obtained from the subcarriers in the first group of subcarriers in ascending (or descending) order of the subcarrier numbers, to obtain the first sub-sequence; the modulation symbols are sequentially obtained from the subcarriers in the second group of subcarriers in ascending (or descending) order of the subcarrier numbers, to obtain the second sub-sequence; the modulation symbols are sequentially obtained from the subcarriers in the third group of subcarriers in ascending (or descending) order of the subcarrier numbers, to obtain the third sub-sequence; the modulation symbols are sequentially obtained from the subcarriers in the fourth group of subcarriers in ascending (or descending) order of the subcarrier numbers, to obtain the fourth sub-sequence.

809. The receiving end obtains the first modulation symbol sequence based on the above-mentioned v sub-sequences.

The statement that the receiving end obtains the first modulation symbol sequence based on the above-mentioned v sub-sequences may be replaced with: the receiving end recovers the first modulation symbol sequence based on the above-mentioned v sub-sequences. When the influence of channel transmission on the modulation symbols is not considered, the receiving end may obtain the first modulation symbol sequence based on the v sub-sequences obtained in step 808. The present application does not consider the influence of channel transmission on the modulation symbols. When the influence of channel transmission on the modulation symbols is considered, the receiving end may employ technical means already existing in the art to obtain the above-mentioned bit sequence based on the above-mentioned v sub-sequences. For example, when the influence of channel transmission on the modulation symbols is considered, the receiving end obtains an initial modulation symbol sequence based on the above-mentioned v sub-sequences; the receiving end demodulates the initial modulation symbol sequence to obtain an initial bit sequence; the receiving end performs error correction on the data information in the initial bit sequence based on the error-correction information (or check information) in the initial bit sequence, so as to recover the above-mentioned bit sequence.

In one possible implementation, the receiving end concatenates the above-mentioned v sub-sequences based on the respective positions, in the modulation symbol sequence, of the modulation symbols carried by each of the above-mentioned v groups of subcarriers, to obtain the first modulation symbol sequence. Illustratively, the positions, in the first modulation symbol sequence, of the modulation symbols carried by the respective subcarriers in the first group of subcarriers in ascending order of the numbers are, in order, the 1st position to the 256th position; the positions, in the first modulation symbol sequence, of the modulation symbols carried by the respective subcarriers in the second group of subcarriers in ascending order of the numbers are, in order, the 257th position to the 512th position; the positions, in the first modulation symbol sequence, of the modulation symbols carried by the respective subcarriers in the third group of subcarriers in ascending order of the numbers are, in order, the 513th position to the 768th position; the positions, in the first modulation symbol sequence, of the modulation symbols carried by the respective subcarriers in the fourth group of subcarriers in ascending order of the numbers are, in order, the 769th position to the 1024th position; and the receiving end sequentially concatenates the first sub-sequence, the second sub-sequence, the third sub-sequence, and the fourth sub-sequence to obtain the first modulation symbol sequence.

810. The receiving end demodulates the first modulation symbol sequence to obtain the bit sequence.

809'. The receiving end separately demodulates the above-mentioned v sub-sequences to obtain v sub-bit sequences.

The v sub-bit sequences comprise a first sub-bit sequence, a second sub-bit sequence, a third sub-bit sequence, and a fourth sub-bit sequence; the first sub-bit sequence is obtained by demodulating the first sub-sequence; the second sub-bit sequence is obtained by demodulating the second sub-sequence; the third sub-bit sequence is obtained by demodulating the third sub-sequence; and the fourth sub-bit sequence is obtained by demodulating the fourth sub-sequence.

810'. The receiving end obtains the bit sequence based on the above-mentioned v sub-bit sequences.

In one possible implementation manner, the receiving end concatenates the above-mentioned v sub-bit sequences based on the respective positions, in the modulation symbol sequence, of the modulation symbols carried by each of the above-mentioned v groups of subcarriers, to obtain the bit sequence. Illustratively, the positions, in the first modulation symbol sequence, of the modulation symbols carried by the respective subcarriers in the first group of subcarriers in ascending order of the numbers are, in order, the 1st position to the 256th position; the positions, in the first modulation symbol sequence, of the modulation symbols carried by the respective subcarriers in the second group of subcarriers in ascending order of the numbers are, in order, the 257th position to the 512th position; the positions, in the first modulation symbol sequence, of the modulation symbols carried by the respective subcarriers in the third group of subcarriers in ascending order of the numbers are, in order, the 513th position to the 768th position; the positions, in the first modulation symbol sequence, of the modulation symbols carried by the respective subcarriers in the fourth group of subcarriers in ascending order of the numbers are, in order, the 769th position to the 1024th position; and the receiving end sequentially concatenates the first sub-bit sequence (corresponding to the first group of subcarriers), the second sub-bit sequence (corresponding to the second group of subcarriers), the third sub-bit sequence (corresponding to the third group of subcarriers), and the fourth sub-bit sequence (corresponding to the fourth group of subcarriers), to obtain the bit sequence.

Step 809 to step 810 may be replaced with step 809' to step 810'. The method flow of FIG. 8 comprises either step 809 to step 810 or step 809' to step 810'.

In the embodiments of the present application, the transmitting end transmits v signals, rather than the transmitting end directly transmitting the third signal having a relatively high PAPR; both energy harvesting efficiency and data demodulation performance can thereby be achieved while implementing coexistence of wireless energy transmission and data transmission.

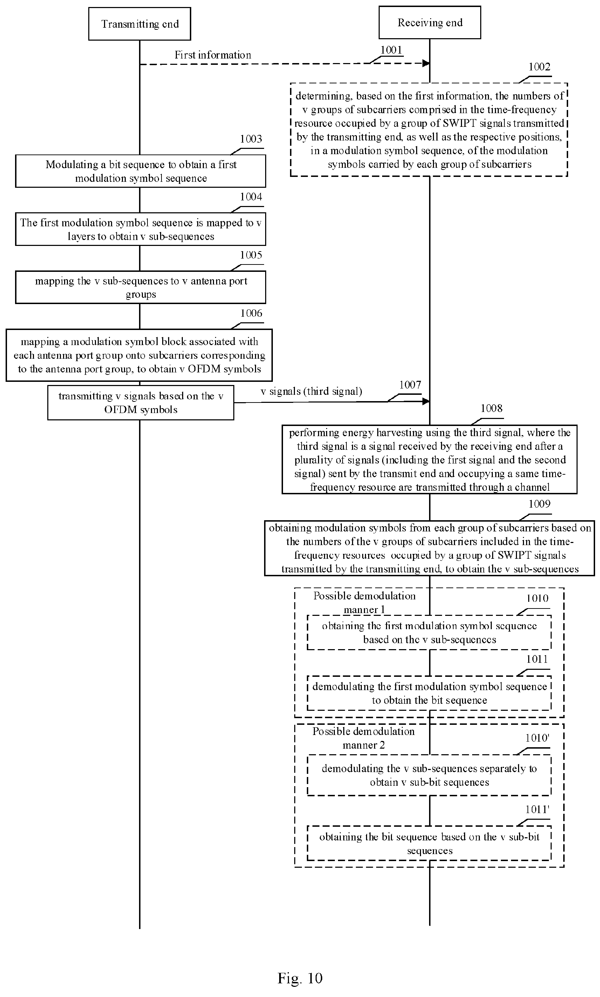

FIG. 10 is a flowchart of another communication method provided by an embodiment of the present application. The method flow in FIG. 10 is a possible implementation of the method described in FIG. 6. Specifically, FIG. 10 describes another possible manner of the process in which the transmitting end generates v OFDM symbols (comprising the above-mentioned first OFDM symbol and second OFDM symbol). As shown in FIG. 10, the method comprises:
1001. The transmitting end transmits first information to the receiving end.

Correspondingly, the receiving end receives the first information from the transmitting end.

1002. The receiving end determines, based on the first information, the numbers of v groups of subcarriers comprised in the time-frequency resource occupied by a group of SWIPT signals transmitted by the transmitting end, as well as the respective positions, in a modulation symbol sequence, of the modulation symbols carried by each group of subcarriers.

Step 1001 and step 1002 are optional. For step 1001 and step 1002, reference may be made to step 801 and step 802 in FIG. 8.

1003. The transmitting end modulates a bit sequence to obtain a first modulation symbol sequence.

For step 1003, reference may be made to step 803 in FIG. 8.

1004. The transmitting end maps the above-mentioned first modulation symbol sequence onto v layers to obtain v sub-sequences.

v is an integer greater than 1, and the above-mentioned v layers are in one-to-one correspondence with the above-mentioned v sub-sequences. Step 1004 is one possible implementation of splitting the first modulation symbol sequence into v sub-sequences. The operation performed in step 1004 is layer mapping. The vector corresponding to the above-mentioned v layers may be x(i) = [*x*⁽⁰⁾(*i*), ··· , *x*^{(v-1)}*(i)],* $i = 0 , 1 , … , {M}_{symb}^{layer} - 1 , {M}_{symb}^{layer} = {M}_{symb}$, where *M*_{symb} is the length of the first modulation symbol sequence, *x*⁽⁰⁾(*i*) is the modulation symbol of layer 0, and *x*^{(*v*-1}) (i) is the modulation symbol of layer (v - 1). v is less than or equal to the number of antenna port groups available for the above-mentioned time-frequency resource. Alternatively, v is less than or equal to the number of RF chains currently available at the transmitting end.

In one possible implementation, the above-mentioned first modulation symbol sequence and the vector *x*(*i*) corresponding to the above-mentioned v layers satisfy the following first mapping rule: $\left[\begin{matrix}{x}^{\left(0\right)} \left(vk\right) = d \left(vk\right) \\ {x}^{\left(1\right)} \left(vk+1\right) = d \left(vk+1\right) \\ … = ⋯ \\ {x}^{\left(v-1\right)} \left(vk+v-1\right) = d \left(vk+v-1\right)\end{matrix}\right]$ (5); where *d*(*vk*) denotes the (*vk*)-th modulation symbol in the above-mentioned first modulation symbol sequence, *d*(*vk +* 1) denotes the (*vk +* 1)-th modulation symbol in the above-mentioned first modulation symbol sequence, *d*(*vk + v -* 1) denotes the (*vk + v* - 1)-th modulation symbol in the above-mentioned first modulation symbol sequence, k is an integer greater than or equal to 0, the value range of k being from 0 to ((*M*_{symb}/*v*) - 1); the above-mentioned first mapping rule indicates that the (v*k* + *j*)-th modulation symbol in the above-mentioned first modulation symbol sequence is mapped onto the (*vk* + *j)*-th symbol of the j-th layer, j being an integer greater than or equal to 0; *x*⁽⁰⁾ (*vk*) denotes the (*vk*)-th symbol of layer 0, corresponding to the (*vk*)-th modulation symbol in the above-mentioned first modulation symbol sequence; *x*⁽¹⁾(*vk +* 1) denotes the (*vk +* 1)-th symbol of layer 1, corresponding to the (*vk* + 1)-th modulation symbol in the above-mentioned first modulation symbol sequence; *x*^{(*v*-1)}(*vk + v -* 1) denotes the (*vk + v* - 1)-th symbol of layer (*v* - 1), corresponding to the (*vk + v* - 1)-th modulation symbol in the above-mentioned first modulation symbol sequence. Illustratively, v is equal to 2, 3, 4, 5, 6, 8, 9, 10, 12, 16, etc., which is not limited in the present application. The embodiments of the present application are described by taking v equal to 4 as an example. Illustratively, with v equal to 4 and *M*_{symb} equal to 1024, the transmitting end maps the above-mentioned first modulation symbol sequence onto v layers based on the above-mentioned first mapping rule, so as to obtain v sub-sequences, the v sub-sequences comprising a first sub-sequence, a second sub-sequence, a third sub-sequence, and a fourth sub-sequence: the first sub-sequence comprises *x*^{(*0*)}(0)*, x*⁽⁰⁾(4), *x*⁽⁰⁾(8), ..., *x*⁽⁰⁾(1020); the second sub-sequence comprises *x*⁽¹⁾(1), *x*⁽¹⁾(5), *x*⁽¹⁾(9), ..., *x*⁽¹⁾(1021); the third sub-sequence comprises *x*⁽²⁾(2), *x*⁽²⁾(6), *x*⁽²⁾(10), ..., *x*⁽²⁾(1022); and the fourth sub-sequence comprises *x*⁽³⁾(3), *x*⁽³⁾(7), *x*⁽³⁾(11), ..., *x*⁽³⁾(1023).

In one possible implementation, the above-mentioned first modulation symbol sequence and the vector *x*(*i*) corresponding to the above-mentioned v layers satisfy the following third mapping rule: $\left[\begin{matrix}{x}^{\left(0\right)} \left(i\right) = d \left(vi\right) \\ {x}^{\left(1\right)} \left(i\right) = d \left(vi+1\right) \\ … = ⋯ \\ {x}^{\left(v-1\right)} \left(i\right) = d \left(vi+v-1\right)\end{matrix}\right]$ (6); where *d*(*vi*) denotes the (*vi*)-th modulation symbol in the above-mentioned first modulation symbol sequence, *d*(*vi +* 1) denotes the (*vi +* 1)-th modulation symbol in the above-mentioned first modulation symbol sequence, *d*(*vi + v -* 1) denotes the (*vi + v* - 1)-th modulation symbol in the above-mentioned first modulation symbol sequence, i is an integer greater than or equal to 0, the value range of i being from 0 to ${M}_{symb}^{layer} , {M}_{symb}^{layer} = {M}_{symb} / v$; the above-mentioned third mapping rule indicates that the (*vi* + *j*)-th modulation symbol in the above-mentioned first modulation symbol sequence is mapped onto the i-th symbol of the j-th layer, j being an integer greater than or equal to 0; *x*⁽⁰⁾(*i*) denotes the i-th symbol of layer 0, corresponding to the (*vi*)-th modulation symbol in the above-mentioned first modulation symbol sequence; *x*^{(*v*-1)}(*i*) denotes the i-th symbol of layer (*v* - 1), corresponding to the (*vi + v* - 1)-th modulation symbol in the above-mentioned first modulation symbol sequence. Illustratively, with v equal to 4 and *M*_{symb} equal to 1024, the transmitting end maps the above-mentioned first modulation symbol sequence onto v layers based on the above-mentioned third mapping rule, so as to obtain v sub-sequences, the v sub-sequences comprising a first sub-sequence, a second sub-sequence, a third sub-sequence, and a fourth sub-sequence: the first sub-sequence comprises *x*⁽⁰⁾(0), *x*⁽⁰⁾(1), *x*⁽⁰⁾(2), ..., *x*⁽⁰⁾(255); the second sub-sequence comprises *x*⁽¹⁾(0), *x*⁽¹⁾(1), *x*⁽¹⁾(2), ..., *x*⁽¹⁾(255); the third sub-sequence comprises *x*⁽²⁾(0), *x*⁽²⁾(1), *x*⁽²⁾(2), ..., *x*⁽²⁾(255); and the fourth sub-sequence comprises *x*⁽³⁾(0), *x*⁽³⁾(1), *x*⁽³⁾(2), ..., *x*⁽³⁾(255).

1005. The transmitting end maps the above-mentioned v sub-sequences onto v antenna port groups.

Different sub-sequences may be mapped onto different antenna port groups. In one possible implementation, the above-mentioned first modulation symbol sequence and the vector *x*(*i*) corresponding to the above-mentioned v layers satisfy the above-mentioned first mapping rule; the transmitting end maps the vector [*x*⁽⁰⁾(*i*),···,*x*^{(v-1)}(*i*)] corresponding to the above-mentioned v layers onto v antenna port groups, the vector [*x*⁽⁰⁾(*i*),···,*x*^{(*v*-1)}(*i*)] corresponding to the above-mentioned v layers and the modulation symbols corresponding to the above-mentioned v antenna port groups satisfying the following second mapping rule: $\left[\begin{matrix}{y}^{\left({p}_{0}\right)} \left(i\right) = {x}^{\left(0\right)} \left(i\right) \\ {y}^{\left({p}_{1}\right)} \left(i\right) = {x}^{\left(1\right)} \left(i\right) \\ ⋯ = ⋯ \\ {y}^{\left({p}_{v - 1}\right)} \left(i\right) = {x}^{\left(v-1\right)} \left(i\right)\end{matrix}\right]$ (7); where *x*⁽⁰⁾(*i*) denotes the i-th modulation symbol of layer 0, *y*^{(*p*⁰)}(*i*) denotes the i-th modulation symbol of antenna port group *p*₀, *x*^{(*v*-1)}(*i*) denotes the i-th modulation symbol of layer (*v* - 1), *y*^{(*pv*}-1)(*i*) denotes the i-th modulation symbol of antenna port group *p*_{*v*- 1}; the above-mentioned second mapping rule indicates that the i-th modulation symbol of layer s is mapped onto the i-th modulation symbol of antenna port group *pₛ,* s being greater than or equal to 0 and less than or equal to (*v* - 1); {*p*₀, ..., *p*_{*v*-1}} is the set of antenna port groups, $i = 0 , 1 , … , \left({M}_{symb}^{ap}-1\right)$, ${M}_{symb}^{ap} = {M}_{symb}^{layer}$. Illustratively, with v=4, the modulation symbol block to be transmitted (i.e., associated) with antenna port group *p*₀ comprises *y*⁽⁰⁾(0), *y*⁽⁰⁾(4), *y*⁽⁰⁾(8), ..., *y*⁽⁰⁾(1020); the modulation symbol block to be transmitted with antenna port group *p*₁ comprises *y*⁽¹⁾(1), *y*⁽¹⁾(5), *y*⁽¹⁾(9), ..., *y*⁽¹⁾(1021); the modulation symbol block to be transmitted with antenna port group *p*₂ comprises *y*⁽²⁾(2), *y*⁽²⁾C6), *y*⁽²⁾(10), ..., *y*⁽²⁾(1022); the modulation symbol block to be transmitted with antenna port group *p*₃ comprises *y*⁽³⁾(3), *y*⁽³⁾(7), *y*⁽³⁾(11), ..., *y*⁽³⁾(1023); where *y*⁽⁰⁾(0) corresponds to *d*(0), *y*⁽¹⁾(1) corresponds to *d*(1), *y*⁽²⁾(2) corresponds to *d*(2), *y*⁽³⁾(3) corresponds to *d*(3), *y*⁽⁰⁾(4) corresponds to *d*(4), and so on.

In one possible implementation, the above-mentioned first modulation symbol sequence and the vector *x*(*i*) corresponding to the above-mentioned v layers satisfy the above-mentioned third mapping rule; the transmitting end maps the vector [*x*⁽⁰⁾(*i*),···,*x*^{(*v*-1)}(*i*)] corresponding to the above-mentioned v layers onto v antenna port groups, the vector [*x*⁽⁰⁾(*i*),···,*x*^{(*v*-1)}(*i*)] corresponding to the above-mentioned v layers and the modulation symbols corresponding to the above-mentioned v antenna port groups satisfying the following fourth mapping rule: $\left[\begin{matrix}{y}^{\left({p}_{0}\right)} \left(vi\right) = {x}^{\left(0\right)} \left(i\right) \\ {y}^{\left({p}_{1}\right)} \left(vi+1\right) = {x}^{\left(1\right)} \left(i\right) \\ ⋯ = ⋯ \\ {y}^{\left({p}_{v - 1}\right)} \left(vi+v-1\right) = {x}^{\left(v-1\right)} \left(i\right)\end{matrix}\right]$ (8); where *x*⁽⁰⁾(*i*) denotes the i-th modulation symbol of layer 0, *y*^{(*p*⁰)}(*vi*) denotes the (*vi*)-th modulation symbol of antenna port group *p*₀, *x*^{(*v*-1)}(*i*) denotes the i-th modulation symbol of layer (*v* - 1), *y*^{(*p*^{v-1}})(*vi + v -* 1) denotes the (*vi + v* - 1)-th modulation symbol of antenna port group *p*_{*v*-1}; the above-mentioned fourth mapping rule indicates that the i-th modulation symbol of layer s is mapped onto the (vi+s)-th modulation symbol of antenna port group *pₛ*, s being greater than or equal to 0 and less than or equal to (*v* - 1); {*p*₀, ... , *p*_{*v*-1}} is the set of antenna port groups, ${M}_{symb}^{ap} = {M}_{symb}^{layer} ∗ v$. Illustratively, with v=4, the modulation symbol block to be transmitted (i.e., associated) with antenna port group *p*₀ comprises *y*⁽⁰⁾(0), *y*⁽⁰⁾(4), *y*⁽⁰⁾(8), ..., *y*⁽⁰⁾(1020); the modulation symbol block to be transmitted with antenna port group *p*₁ comprises *y*⁽¹⁾(1), *y*⁽¹⁾(5), *y*⁽¹⁾(9), ..., *y*⁽¹⁾(1021); the modulation symbol block to be transmitted with antenna port group *p*₂ comprises *y*⁽²⁾(2), *y*⁽²⁾(6), *y*⁽²⁾(10), ..., *y*⁽²⁾(1022); the modulation symbol block to be transmitted with antenna port group *p*₃ comprises *y*⁽³⁾(3), *y*⁽³⁾(7), *y*⁽³⁾(11), ..., *y*⁽³⁾(1023); where *y*⁽⁰⁾(0) corresponds to *d*(0), *y*⁽¹⁾(1) corresponds to *d*(1), *y*⁽²⁾(2) corresponds to d(2), *y*⁽³⁾(3) corresponds to *d*(3), *y*⁽⁰⁾(4) corresponds to *d*(4), and so on.

1006. The transmitting end maps the modulation symbol block associated with each antenna port group onto subcarriers corresponding to that antenna port group, to obtain v OFDM symbols.

In one possible implementation, ${y}^{\left(p\right)} \left(0\right) , … , {y}^{\left(p\right)} \left({M}_{symb}^{ap}-1\right)$ are sequentially mapped, in order, onto the $\left({M}_{symb}^{ap}\right)$ subcarriers of the corresponding p-th antenna port group, to obtain an OFDM symbol, p being greater than or equal to 0 and less than or equal to (v-1). Illustratively, the transmitting end sequentially maps, in order, *y*⁽⁰⁾(0), *y*⁽⁰⁾(4), *y*⁽⁰⁾(8), ..., *y*⁽⁰⁾(1020) in the modulation symbol block associated with antenna port group *p*₀ onto the $\left({M}_{symb}^{ap}\right)$ subcarriers of antenna port group *p*₀, to obtain the first OFDM symbol; sequentially maps, in order, *y*⁽¹⁾(1), *y*⁽¹⁾(5), *y*⁽¹⁾(9), ..., *y*⁽¹⁾(1021) in the modulation symbol block associated with antenna port group *p*₁ onto the $\left({M}_{symb}^{ap}\right)$ subcarriers of antenna port group *p*₁, to obtain the second OFDM symbol; sequentially maps, in order, *y*⁽²⁾(2) , *y*⁽²⁾(6), *y*⁽²⁾(10) , ..., *y*⁽²⁾(1022) in the modulation symbol block associated with antenna port group *p*₂ onto the $\left({M}_{symb}^{ap}\right)$ subcarriers of antenna port group *p*₂, to obtain the third OFDM symbol; sequentially maps, in order, *y*⁽³⁾(3), *y*⁽³⁾(7), *y*⁽³⁾(11), ..., *y*⁽³⁾(1023) in the modulation symbol block associated with antenna port group *p*₃ onto the $\left({M}_{symb}^{ap}\right)$ subcarriers of antenna port group *p*₃, to obtain the fourth OFDM symbol.

1007. The transmitting end transmits v signals based on the v OFDM symbols.

Correspondingly, the receiving end receives a third signal. The third signal may be a signal received by the receiving end and corresponding to the above-mentioned v signals transmitted by the transmitting end after being transmitted through a channel. Because the above-mentioned v signals occupy the same time-frequency resource, the v signals transmitted by the transmitting end will be superposed during transmission into one signal; the third signal is the signal received by the receiving end and obtained by the superposition of the above-mentioned v signals. Optionally, the above-mentioned v signals may all correspond to the information of the same logical channel or physical channel.

1008. The receiving end performs energy harvesting using the third signal.

1009. The receiving end obtains modulation symbols from each group of subcarriers based on the numbers of v groups of subcarriers comprised in the time-frequency resource occupied by a group of SWIPT signals transmitted by the transmitting end, so as to obtain the above-mentioned v sub-sequences.

For step 1007 to step 1009, reference may be made to step 806 to step 808 in FIG. 8.

1010. The receiving end obtains the first modulation symbol sequence based on the above-mentioned v sub-sequences.

The embodiments of the present application do not consider the influence of channel transmission on the modulation symbols, and are described by taking, as an example, the case in which the receiving end obtains the first modulation symbol sequence based on the above-mentioned v sub-sequences.

In one possible implementation, the receiving end splits and concatenates the above-mentioned v sub-sequences based on the respective positions, in the modulation symbol sequence, of the modulation symbols carried by each of the above-mentioned v groups of subcarriers, to obtain the first modulation symbol sequence. Illustratively, v is equal to 4; the above-mentioned v sub-sequences comprise a first sub-sequence, a second sub-sequence, a third sub-sequence, and a fourth sub-sequence; the positions, in the first modulation symbol sequence, of the modulation symbols in the first sub-sequence in order are, in order, the 1st position, the 5th position, the 9th position, ..., the 1021st position; the positions, in the first modulation symbol sequence, of the modulation symbols in the second sub-sequence in order are, in order, the 2nd position, the 6th position, the 10th position, ..., the 1022nd position; the positions, in the first modulation symbol sequence, of the modulation symbols in the third sub-sequence in order are, in order, the 3rd position, the 7th position, the 11th position, ..., the 1023rd position; the positions, in the first modulation symbol sequence, of the modulation symbols in the first sub-sequence in order are, in order, the 4th position, the 8th position, the 12th position, ..., the 1024th position; the receiving end splits and concatenates the first sub-sequence, the second sub-sequence, the third sub-sequence, and the fourth sub-sequence based on the positions of the modulation symbols in each sub-sequence in the first modulation symbol sequence, to obtain the first modulation symbol sequence.

1011. The receiving end demodulates the first modulation symbol sequence to obtain the bit sequence.

In one possible implementation, the receiving end splits and concatenates the above-mentioned v sub-bit sequences based on the respective positions, in the modulation symbol sequence, of the modulation symbols carried by each of the above-mentioned v groups of subcarriers, to obtain the first modulation symbol sequence. As in the following 1010' and 1011':
1010'. The receiving end separately demodulates the above-mentioned v sub-sequences to obtain v sub-bit sequences.

The v sub-bit sequences comprise a first sub-bit sequence, a second sub-bit sequence, a third sub-bit sequence, and a fourth sub-bit sequence; the first sub-bit sequence is obtained by demodulating the first sub-sequence; the second sub-bit sequence is obtained by demodulating the second sub-sequence; the third sub-bit sequence is obtained by demodulating the third sub-sequence; and the fourth sub-bit sequence is obtained by demodulating the fourth sub-sequence.

1011'. The receiving end obtains the bit sequence based on the above-mentioned v sub-bit sequences.

The implementation of step 1011' is similar to that of step 1011, which is not described in detail herein.

In the embodiments of the present application, the first modulation symbol sequence is mapped onto v layers through layer mapping, and then the vectors of the v layers are mapped onto v antenna port groups, which can avoid the operation of splitting the first modulation symbol sequence. In addition, the transmitting end transmits v signals, rather than the transmitting end directly transmitting the third signal having a relatively high PAPR; both energy harvesting efficiency and data demodulation performance can be achieved while implementing coexistence of wireless energy transmission and data transmission.

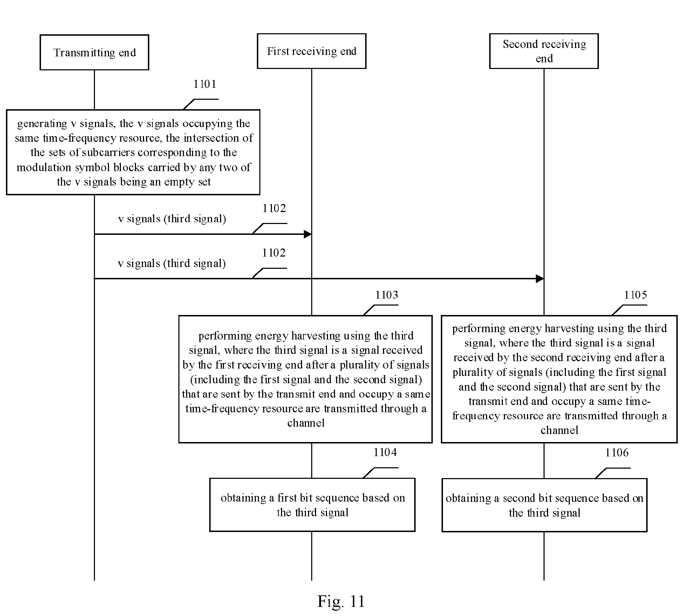

FIG. 11 is a flowchart of another communication method provided by an embodiment of the present application. The method flow in FIG. 11 is a possible implementation of the method described in FIG. 4. FIG. 11 describes a manner in which the v signals (comprising the first signal and the second signal in FIG. 4) transmitted by the transmitting end are used by a first receiving end and a second receiving end for energy harvesting and information acquisition after being transmitted through a channel, wherein the first receiving end or the second receiving end is the receiving end in FIG. 4. As shown in FIG. 11, the method comprises:
1101. The transmitting end generates v signals, the above-mentioned v signals occupying the same time-frequency resource, the intersection of the sets of subcarriers corresponding to the modulation symbol blocks carried by any two of the above-mentioned v signals being an empty set.

The embodiments of the present application are described by taking, as an example, the case where v is equal to 4 and the v signals comprise the first signal, the second signal, signal #3, and signal #4. The first signal carries OFDM symbol #1 (the first OFDM symbol); the second signal carries OFDM symbol #2 (the second OFDM symbol); signal #3 carries OFDM symbol #3; signal #4 carries OFDM symbol #4; the time-frequency resources occupied by OFDM symbol #1, OFDM symbol #2, OFDM symbol #3, and OFDM symbol #4 are the same; OFDM symbol #1 carries modulation symbol block #1 (i.e., the first modulation symbol block); OFDM symbol #2 carries modulation symbol block #2 (i.e., the second modulation symbol block); OFDM symbol #3 carries modulation symbol block #3; OFDM symbol #4 carries modulation symbol block #4; the intersection of the sets of subcarriers corresponding to any two of modulation symbol block #1, modulation symbol block #2, modulation symbol block #3, and modulation symbol block #4 is an empty set. The modulation symbol block carried by the first signal is modulation symbol block #1. The set of subcarriers corresponding to the modulation symbol block carried by the first signal is the set of subcarriers, among the subcarriers comprised in the above-mentioned time-frequency resource, that carry the modulation symbols in modulation symbol block #1.

1102. The transmitting end transmits the above-mentioned v signals.

The transmitting end transmits different signals via different antenna port groups. Illustratively, the transmitting end transmits the first signal via a first antenna port group, transmits the second signal via a second antenna port group, transmits signal #3 via a third antenna port group, and transmits signal #4 via a fourth antenna port group. The manner in which the transmitting end transmits a group of SWIPT signals to more than two receiving ends is similar to that of transmitting a group of SWIPT signals to two receiving ends. The embodiments of the present application are described by taking, as an example, the case where the transmitting end transmits a group of SWIPT signals to a first receiving end and a second receiving end, wherein the first receiving end uses the signals received from the transmitting end to perform energy harvesting and to acquire information, and the second receiving end uses the signals received from the transmitting end to acquire information and/or to perform energy harvesting. Illustratively, both the first receiving end and the second receiving end receive a third signal. The third signal is a signal received by the receiving end after the v signals occupying the same time-frequency resource and transmitted by the transmitting end, comprising the first signal and the second signal, have been transmitted through a channel. In one possible implementation, when the above-mentioned v signals correspond to two or more receiving ends, signals corresponding to different receiving ends are transmitted through different channels. In other words, when one transmitting end transmits signals to two or more receiving ends, signals corresponding to different receiving ends are transmitted through different channels. Illustratively, the above-mentioned first signal and the above-mentioned second signal correspond to the first receiving end, and signal #3 and signal #4 correspond to the second receiving end; the transmitting end transmits the above-mentioned first signal and the above-mentioned second signal via a first channel, and transmits the above-mentioned signal #3 and the above-mentioned signal #4 via a second channel.

1103. The first receiving end performs energy harvesting using the third signal.

1104. The first receiving end obtains a first bit sequence based on the third signal.

In one possible implementation, the above-mentioned first modulation symbol block and modulation symbol block #3 are obtained based on a first modulation symbol sequence; the first receiving end obtains the first modulation symbol sequence based on the above-mentioned third signal and the positions, in the first modulation symbol sequence, of the modulation symbols carried by the subcarriers comprised in the time-frequency resource occupied by the third signal; and demodulates the first modulation symbol sequence to obtain the first bit sequence. In one possible implementation, the first receiving end has predefined (or pre-configured) the numbers of a plurality of subcarriers #1, among the subcarriers comprised in the time-frequency resource occupied by a group of SWIPT signals (e.g., the third signal), that carry the modulation symbols in the first modulation symbol sequence, as well as the positions, in the first modulation symbol sequence, of the modulation symbols carried by the plurality of subcarriers #1; the modulation symbols in the first modulation symbol sequence are the modulation symbols transmitted by the transmitting end to the first receiving end, or in other words, the first modulation symbol sequence is the modulation symbol sequence that the first receiving end needs to obtain. The modulation symbols carried by the plurality of subcarriers #1 are the modulation symbols provided by the transmitting end to the first receiving end. Illustratively, the first receiving end has predefined (or pre-configured) that, among the subcarriers comprised in the time-frequency resource occupied by a group of SWIPT signals (e.g., the third signal), the subcarriers numbered 0-63, 256-319, 512-575, 768-831 carry the modulation symbols in the first modulation symbol sequence, and that the positions, in the first modulation symbol sequence, of the modulation symbols (e.g., the modulation symbols in the first modulation symbol block) carried by the subcarriers numbered 0-63, 256-319, 512-575, 768-831 in ascending order of the numbers are, in order, the first position to the 256th position.

1105. The second receiving end performs energy harvesting using the third signal.

1106. The second receiving end obtains a second bit sequence based on the third signal.

In one possible implementation, the above-mentioned second modulation symbol block and modulation symbol block #4 are obtained based on a second modulation symbol sequence; the second receiving end obtains the second modulation symbol sequence based on the above-mentioned third signal and the positions, in the second modulation symbol sequence, of the modulation symbols carried by the subcarriers comprised in the time-frequency resource occupied by the third signal; and demodulates the second modulation symbol sequence to obtain the second bit sequence. In one possible implementation, the second receiving end has predefined (or pre-configured) the numbers of a plurality of subcarriers #2, among the subcarriers comprised in the time-frequency resource occupied by a group of SWIPT signals (e.g., the third signal), that carry the modulation symbols in the second modulation symbol sequence, as well as the positions, in the second modulation symbol sequence, of the modulation symbols carried by the plurality of subcarriers #2; the modulation symbols in the second modulation symbol sequence are the modulation symbols transmitted by the transmitting end to the second receiving end, or in other words, the second modulation symbol sequence is the modulation symbol sequence that the second receiving end needs to obtain. The modulation symbols carried by the plurality of subcarriers #2 are the modulation symbols provided by the transmitting end to the second receiving end. Illustratively, the second receiving end has predefined (or pre-configured) that, among the subcarriers comprised in the time-frequency resource occupied by a group of SWIPT signals (e.g., the third signal), the subcarriers numbered 64-127, 320-383, 576-639, 832-895 carry the modulation symbols in the second modulation symbol sequence, and that the positions, in the second modulation symbol sequence, of the modulation symbols carried by the subcarriers numbered 64-127, 320-383, 576-639, 832-895 in ascending order of the numbers are, in order, the first position to the 256th position. One of step 1105 and step 1106 is optional. The order of step 1103 and step 1105 is not limited. The order of step 1105 and step 1106 is not limited.

In the embodiments of the present application, the transmitting end simultaneously transmits a group of SWIPT signals to a plurality of receiving ends, which can improve resource utilization. The transmitting end transmits a plurality of signals having a relatively low PAPR, rather than the transmitting end directly transmitting one signal having a relatively high PAPR; both energy harvesting efficiency and data demodulation performance can be achieved while implementing coexistence of wireless energy transmission and data transmission.

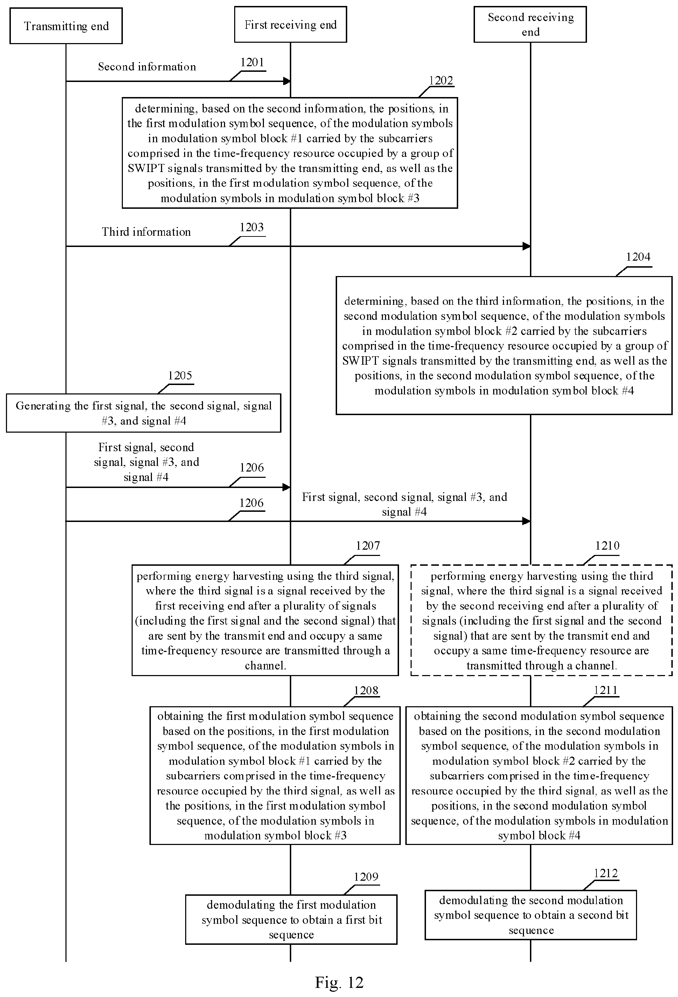

FIG. 12 is a flowchart of another communication method provided by an embodiment of the present application. The method flow in FIG. 12 is a possible implementation of the method described in FIG. 11. On the basis of FIG. 11, FIG. 12 describes how the receiving end determines, based on information transmitted by the transmitting end (e.g., second information and third information), the respective positions, in a modulation symbol sequence, of the modulation symbols carried by the subcarriers comprised in the time-frequency resource occupied by a group of SWIPT signals transmitted by the transmitting end; see step 1201 to step 1204. As shown in FIG. 12, the method comprises:
1201. The transmitting end transmits second information to the first receiving end.

Correspondingly, the first receiving end receives the second information from the transmitting end. The embodiments of the present application are described by taking, as an example, the case where the group of SWIPT signals transmitted by the transmitting end comprises the first signal, the second signal, signal #3, and signal #4, wherein the first signal carries OFDM symbol #1 (the first OFDM symbol), the second signal carries OFDM symbol #2 (the second OFDM symbol), signal #3 carries OFDM symbol #3, signal #4 carries OFDM symbol #4; OFDM symbol #1 carries modulation symbol block #1 (i.e., the first modulation symbol block), OFDM symbol #2 carries modulation symbol block #2 (i.e., the second modulation symbol block), OFDM symbol #3 carries modulation symbol block #3, OFDM symbol #4 carries modulation symbol block #4; and the intersection of the sets of subcarriers corresponding to any two of modulation symbol block #1, modulation symbol block #2, modulation symbol block #3, and modulation symbol block #4 is an empty set.

The second information is used for determination of positions, in the first modulation symbol sequence, of the modulation symbols in modulation symbol block #1 carried by the subcarriers comprised in the time-frequency resource occupied by a group of SWIPT signals transmitted by the transmitting end, and for determination of positions, in the first modulation symbol sequence, of the modulation symbols in modulation symbol block #3 carried by the subcarriers comprised in the above-mentioned time-frequency resource; modulation symbol block #1 and modulation symbol block #3 are obtained based on the above-mentioned first modulation symbol sequence, the above-mentioned first modulation symbol sequence being obtained based on a bit sequence to be transmitted to the first receiving end. Illustratively, the above-mentioned time-frequency resource comprises a total of 1024 subcarriers numbered 0-1023; the second information is used to indicate that the first group of subcarriers, numbered 0-63, 256-319, 512-575, 768-831, comprised in the above-mentioned time-frequency resource carries the modulation symbols in modulation symbol block #1, the positions, in the first modulation symbol sequence, of the modulation symbols carried by the respective subcarriers in the first group of subcarriers in ascending order of the numbers being, in order, the 1st position to the 256th position; the third group of subcarriers, numbered 128-191, 384-447, 640-703, 896-959, comprised in the above-mentioned time-frequency resource carries the modulation symbols in modulation symbol block #3, the positions, in the first modulation symbol sequence, of the modulation symbols carried by the respective subcarriers in the third group of subcarriers in ascending order of the numbers being, in order, the 257th position to the 512th position.

1202. The first receiving end determines, based on the second information, the positions, in the first modulation symbol sequence, of the modulation symbols in modulation symbol block #1 carried by the subcarriers comprised in the time-frequency resource occupied by a group of SWIPT signals transmitted by the transmitting end, as well as the positions, in the first modulation symbol sequence, of the modulation symbols in modulation symbol block #3.

1203. The transmitting end transmits third information to the second receiving end.

Correspondingly, the second receiving end receives the third information from the transmitting end. The above-mentioned third information is used for determination of positions, in the second modulation symbol sequence, of the modulation symbols in modulation symbol block #2 carried by the subcarriers comprised in the above-mentioned time-frequency resource, and for determination of positions, in the second modulation symbol sequence, of the modulation symbols in modulation symbol block #4 carried by the subcarriers comprised in the above-mentioned time-frequency resource; modulation symbol block #2 and modulation symbol block #4 are obtained based on the above-mentioned second modulation symbol sequence, the above-mentioned second modulation symbol sequence being obtained based on a bit sequence to be transmitted to the second receiving end. The above-mentioned second receiving end is different from the above-mentioned first receiving end. The order of step 1201 and step 1203 is not limited. Illustratively, the above-mentioned time-frequency resource comprises a total of 1024 subcarriers numbered 0-1023; the third information is used to indicate that the second group of subcarriers, numbered 64-127, 320-383, 576-639, 832-895, comprised in the above-mentioned time-frequency resource carries the modulation symbols in modulation symbol block #2, the positions, in the second modulation symbol sequence, of the modulation symbols carried by the respective subcarriers in the second group of subcarriers in ascending order of the numbers being, in order, the 1st position to the 256th position; the fourth group of subcarriers, numbered 192-256, 448-511, 704-767, 960-1023, comprised in the above-mentioned time-frequency resource carries the modulation symbols in modulation symbol block #4, the positions, in the second modulation symbol sequence, of the modulation symbols carried by the respective subcarriers in the fourth group of subcarriers in ascending order of the numbers being, in order, the 257th position to the 512th position.

1204. The second receiving end determines, based on the third information, the positions, in the second modulation symbol sequence, of the modulation symbols in modulation symbol block #2 carried by the subcarriers comprised in the time-frequency resource occupied by a group of SWIPT signals transmitted by the transmitting end, as well as the positions, in the second modulation symbol sequence, of the modulation symbols in modulation symbol block #4.

1205. The transmitting end generates the first signal, the second signal, signal #3, and signal #4.

For the manner in which the transmitting end generates and transmits the first signal and signal #3, reference may be made to step 803 to step 806 in FIG. 8; the manner in which the transmitting end generates and transmits the second signal and signal #4 is similar to that of generating and transmitting the first signal and signal #3, and is not repeated herein.

1206. The transmitting end transmits the first signal, the second signal, signal #3, and signal #4.

Correspondingly, both the first receiving end and the second receiving end receive a third signal. The third signal may be a signal received by the receiving ends (comprising the first receiving end and the second receiving end) and corresponding to a group of SWIPT signals transmitted by the transmitting end. Step 1205 and step 1206 may be examples of the transmitting end generating and transmitting v low-PAPR signals, v being an integer greater than or equal to 1.

1207. The first receiving end performs energy harvesting using the third signal.

1208. The first receiving end obtains the first modulation symbol sequence based on the positions, in the first modulation symbol sequence, of the modulation symbols in modulation symbol block #1 carried by the subcarriers comprised in the time-frequency resource occupied by the third signal, as well as the positions, in the first modulation symbol sequence, of the modulation symbols in modulation symbol block #3.

The embodiments of the present application do not consider the influence of channel transmission on the modulation symbols, and are described by taking, as an example, the case in which the receiving end obtains the first modulation symbol sequence based on the third signal.

The order of step 1207 and step 1208 is not limited. Illustratively, the above-mentioned time-frequency resource comprises a total of 1024 subcarriers numbered 0-1023; the second information is used to indicate that the first group of subcarriers, numbered 0-63, 256-319, 512-575, 768-831, comprised in the above-mentioned time-frequency resource carries the modulation symbols in modulation symbol block #1, the positions, in the first modulation symbol sequence, of the modulation symbols carried by the respective subcarriers in the first group of subcarriers in ascending order of the numbers being, in order, the 1st position to the 256th position; the third group of subcarriers, numbered 128-191, 384-447, 640-703, 896-959, comprised in the above-mentioned time-frequency resource carries the modulation symbols in modulation symbol block #3, the positions, in the first modulation symbol sequence, of the modulation symbols carried by the respective subcarriers in the third group of subcarriers in ascending order of the numbers being, in order, the 257th position to the 512th position; the first receiving end sequentially obtains, in ascending (or descending) order of the subcarrier numbers, the modulation symbols from the subcarriers in the first group of subcarriers to obtain the first sub-sequence; the first receiving end sequentially obtains, in ascending (or descending) order of the subcarrier numbers, the modulation symbols from the subcarriers in the third group of subcarriers to obtain the third sub-sequence; the receiving end concatenates the first sub-sequence and the third sub-sequence to obtain the first modulation symbol sequence.

1209. The first receiving end demodulates the first modulation symbol sequence to obtain the first bit sequence.

1210. The first receiving end performs energy harvesting using the third signal.

Step 1210 is optional. The order of step 1210 and step 1207 is not limited.

1211. The second receiving end obtains the second modulation symbol sequence based on the positions, in the second modulation symbol sequence, of the modulation symbols in modulation symbol block #2 carried by the subcarriers comprised in the time-frequency resource occupied by the third signal, as well as the positions, in the second modulation symbol sequence, of the modulation symbols in modulation symbol block #4.

The order of step 1210 and step 1211 is not limited. The order of step 1208 and step 1211 is not limited. Illustratively, the above-mentioned time-frequency resource comprises a total of 1024 subcarriers numbered 0-1023; the third information is used to indicate that the second group of subcarriers, numbered 64-127, 320-383, 576-639, 832-895, comprised in the above-mentioned time-frequency resource carries the modulation symbols in modulation symbol block #2, the positions, in the second modulation symbol sequence, of the modulation symbols carried by the respective subcarriers in the second group of subcarriers in ascending order of the numbers being, in order, the 1st position to the 256th position; the fourth group of subcarriers, numbered 192-256, 448-511, 704-767, 960-1023, comprised in the above-mentioned time-frequency resource carries the modulation symbols in modulation symbol block #4, the positions, in the second modulation symbol sequence, of the modulation symbols carried by the respective subcarriers in the fourth group of subcarriers in ascending order of the numbers being, in order, the 257th position to the 512th position; the second receiving end sequentially obtains, in ascending (or descending) order of the subcarrier numbers, the modulation symbols from the subcarriers in the second group of subcarriers to obtain the second sub-sequence; the second receiving end sequentially obtains, in ascending (or descending) order of the subcarrier numbers, the modulation symbols from the subcarriers in the fourth group of subcarriers to obtain the fourth sub-sequence; the receiving end concatenates the second sub-sequence and the fourth sub-sequence to obtain the second modulation symbol sequence.

1212. The second receiving end demodulates the second modulation symbol sequence to obtain the second bit sequence.

In the embodiments of the present application, the transmitting end transmits second information to the first receiving end, and transmits third information to the second receiving end; the transmitting end may flexibly adjust, according to its own demand, the positions, in the modulation symbol sequence, of the modulation symbols carried by the subcarriers comprised in the time-frequency resource occupied by a group of SWIPT signals to be transmitted. The transmitting end simultaneously transmits a group of SWIPT signals to a plurality of receiving ends, which can improve resource utilization. The transmitting end transmits a plurality of signals having a relatively low PAPR, rather than the transmitting end directly transmitting one signal having a relatively high PAPR; both energy harvesting efficiency and data demodulation performance can be achieved while implementing coexistence of wireless energy transmission and data transmission.

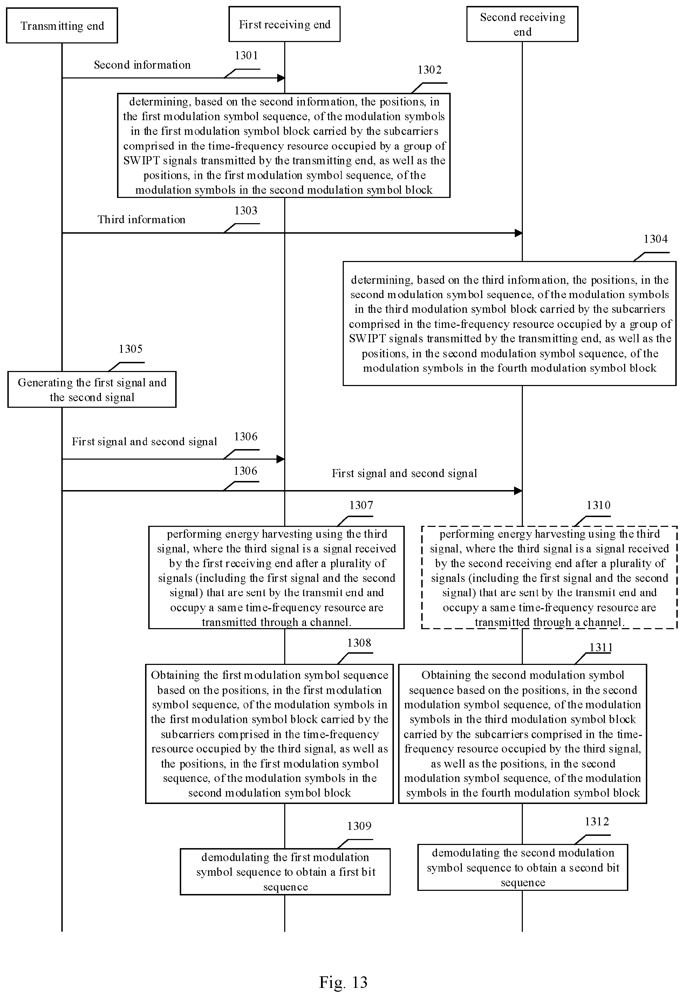

FIG. 13 is a flowchart of another communication method provided by an embodiment of the present application. The method flow in FIG. 13 is a possible implementation of the method described in FIG. 4. On the basis of FIG. 4, FIG. 13 describes how the first receiving end and the second receiving end determine, based on information transmitted by the transmitting end (e.g., second information or third information), the respective positions, in a modulation symbol sequence, of the modulation symbols carried by the subcarriers comprised in the time-frequency resource occupied by a group of SWIPT signals transmitted by the transmitting end; see step 1301 to step 1304. The first receiving end or the second receiving end in FIG. 13 is the receiving end in FIG. 4. As shown in FIG. 13, the method comprises:
1301. The transmitting end transmits second information to the first receiving end.

Correspondingly, the first receiving end receives the second information from the transmitting end. For ease of understanding, the embodiments of the present application are described by taking, as an example, the case where the group of SWIPT signals transmitted by the transmitting end comprises the first signal and the second signal, wherein the first signal carries a first OFDM symbol, the second signal carries a second OFDM symbol; the first OFDM symbol carries a first modulation symbol block and a third modulation symbol block, the second OFDM symbol carries a second modulation symbol block and a fourth modulation symbol block; the intersection of the sets of subcarriers corresponding to any two of the first modulation symbol block, the second modulation symbol block, the third modulation symbol block, and the fourth modulation symbol block is an empty set.

The second information is used for determination of positions, in the first modulation symbol sequence, of the modulation symbols in the first modulation symbol block carried by the subcarriers comprised in the time-frequency resource occupied by a group of SWIPT signals transmitted by the transmitting end, and for determination of positions, in the first modulation symbol sequence, of the modulation symbols in the second modulation symbol block carried by the subcarriers comprised in the above-mentioned time-frequency resource; the first modulation symbol block and the second modulation symbol block are obtained based on the above-mentioned first modulation symbol sequence, the above-mentioned first modulation symbol sequence being obtained based on a bit sequence to be transmitted to the first receiving end. Illustratively, the above-mentioned time-frequency resource comprises a total of 1024 subcarriers numbered 0-1023; the second information is used to indicate that the first group of subcarriers, numbered 0-63, 256-319, 512-575, 768-831, comprised in the above-mentioned time-frequency resource carries the modulation symbols in the first modulation symbol block, the positions, in the first modulation symbol sequence, of the modulation symbols carried by the respective subcarriers in the first group of subcarriers in ascending order of the numbers being, in order, the 1st position to the 256th position; the second group of subcarriers, numbered 128-191, 384-447, 640-703, 896-959, comprised in the above-mentioned time-frequency resource carries the modulation symbols in the second modulation symbol block, the positions, in the first modulation symbol sequence, of the modulation symbols carried by the respective subcarriers in the second group of subcarriers in ascending order of the numbers being, in order, the 257th position to the 512th position.

1302. The first receiving end determines, based on the second information, the positions, in the first modulation symbol sequence, of the modulation symbols in the first modulation symbol block carried by the subcarriers comprised in the time-frequency resource occupied by a group of SWIPT signals transmitted by the transmitting end, as well as the positions, in the first modulation symbol sequence, of the modulation symbols in the second modulation symbol block.

1303. The transmitting end transmits third information to the second receiving end.

Correspondingly, the second receiving end receives the third information from the transmitting end. The above-mentioned third information is used for determination of positions, in the second modulation symbol sequence, of the modulation symbols in the third modulation symbol block carried by the subcarriers comprised in the above-mentioned time-frequency resource, and for determination of positions, in the second modulation symbol sequence, of the modulation symbols in the fourth modulation symbol block carried by the subcarriers comprised in the above-mentioned time-frequency resource; the third modulation symbol block and the fourth modulation symbol block are obtained based on the above-mentioned second modulation symbol sequence, the above-mentioned second modulation symbol sequence being obtained based on a bit sequence to be transmitted to the second receiving end. The above-mentioned second receiving end is different from the above-mentioned first receiving end. The order of step 1301 and step 1303 is not limited. Illustratively, the above-mentioned time-frequency resource comprises a total of 1024 subcarriers numbered 0-1023; the third information is used to indicate that the third group of subcarriers, numbered 64-127, 320-383, 576-639, 832-895, comprised in the above-mentioned time-frequency resource carries the modulation symbols in the third modulation symbol block, the positions, in the second modulation symbol sequence, of the modulation symbols carried by the respective subcarriers in the third group of subcarriers in ascending order of the numbers being, in order, the 1st position to the 256th position; the fourth group of subcarriers, numbered 192-256, 448-511, 704-767, 960-1023, comprised in the above-mentioned time-frequency resource carries the modulation symbols in the fourth modulation symbol block, the positions, in the second modulation symbol sequence, of the modulation symbols carried by the respective subcarriers in the fourth group of subcarriers in ascending order of the numbers being, in order, the 257th position to the 512th position.

1304. The second receiving end determines, based on the third information, the positions, in the second modulation symbol sequence, of the modulation symbols in the third modulation symbol block carried by the subcarriers comprised in the time-frequency resource occupied by a group of SWIPT signals transmitted by the transmitting end, as well as the positions, in the second modulation symbol sequence, of the modulation symbols in the fourth modulation symbol block.

1305. The transmitting end generates the first signal and the second signal.

In one possible implementation, the transmitting end modulates a first bit sequence to obtain a first modulation symbol sequence; splits the first modulation symbol sequence into a first modulation symbol block and a second modulation symbol block; the transmitting end modulates a second bit sequence to obtain a second modulation symbol sequence; splits the second modulation symbol sequence into a third modulation symbol block and a fourth modulation symbol block; the transmitting end maps the modulation symbols comprised in the first modulation symbol block onto the first group of subcarriers comprised in the time-frequency resource occupied by a group of SWIPT signals to be transmitted thereby, and maps the modulation symbols comprised in the third modulation symbol block onto the third group of subcarriers comprised in the time-frequency resource, to obtain the first OFDM symbol; the transmitting end maps the modulation symbols comprised in the second modulation symbol block onto the second group of subcarriers comprised in the time-frequency resource, and maps the modulation symbols comprised in the fourth modulation symbol block onto the fourth group of subcarriers comprised in the time-frequency resource, to obtain the second OFDM symbol; generates the first signal based on the first OFDM symbol, and generates the second signal based on the second OFDM symbol.

1306. The transmitting end transmits the first signal and the second signal.

Correspondingly, both the first receiving end and the second receiving end receive a third signal. The third signal may be a signal received by the receiving ends (comprising the first receiving end and the second receiving end) and corresponding to a group of SWIPT signals transmitted by the transmitting end.

1307. The first receiving end performs energy harvesting using the third signal.

1308. The first receiving end obtains the first modulation symbol sequence based on the positions, in the first modulation symbol sequence, of the modulation symbols in the first modulation symbol block carried by the subcarriers comprised in the time-frequency resource occupied by the third signal, as well as the positions, in the first modulation symbol sequence, of the modulation symbols in the second modulation symbol block.

The embodiments of the present application do not consider the influence of channel transmission on the modulation symbols, and are described by taking, as an example, the case in which the first receiving end obtains the first modulation symbol sequence based on the third signal. The implementation of step 1308 may be similar to that of step 1208, and is not repeated herein. The order of step 1307 and step 1308 is not limited.

1309. The first receiving end demodulates the first modulation symbol sequence to obtain the first bit sequence.

1310. The second receiving end performs energy harvesting using the third signal.

Step 1310 is optional.

1311. The second receiving end obtains the second modulation symbol sequence based on the positions, in the second modulation symbol sequence, of the modulation symbols in the third modulation symbol block carried by the subcarriers comprised in the time-frequency resource occupied by the third signal, as well as the positions, in the second modulation symbol sequence, of the modulation symbols in the fourth modulation symbol block.

The embodiments of the present application do not consider the influence of channel transmission on the modulation symbols, and are described by taking, as an example, the case in which the second receiving end obtains the second modulation symbol sequence based on the third signal. The implementation of step 1311 may be similar to that of step 1211, and is not repeated herein. The order of step 1308 and step 1311 is not limited.

1312. The second receiving end demodulates the second modulation symbol sequence to obtain the second bit sequence.

In the embodiments of the present application, the transmitting end transmits second information to the first receiving end, and transmits third information to the second receiving end; the transmitting end may flexibly adjust, according to its own demand, the positions, in the modulation symbol sequence, of the modulation symbols carried by the subcarriers comprised in the time-frequency resource occupied by a group of SWIPT signals to be transmitted. The transmitting end simultaneously transmits a group of SWIPT signals to a plurality of receiving ends, which can improve resource utilization. The transmitting end transmits a plurality of signals having a relatively low PAPR, rather than the transmitting end directly transmitting one signal having a relatively high PAPR; both energy harvesting efficiency and data demodulation performance can be achieved while implementing coexistence of wireless energy transmission and data transmission.

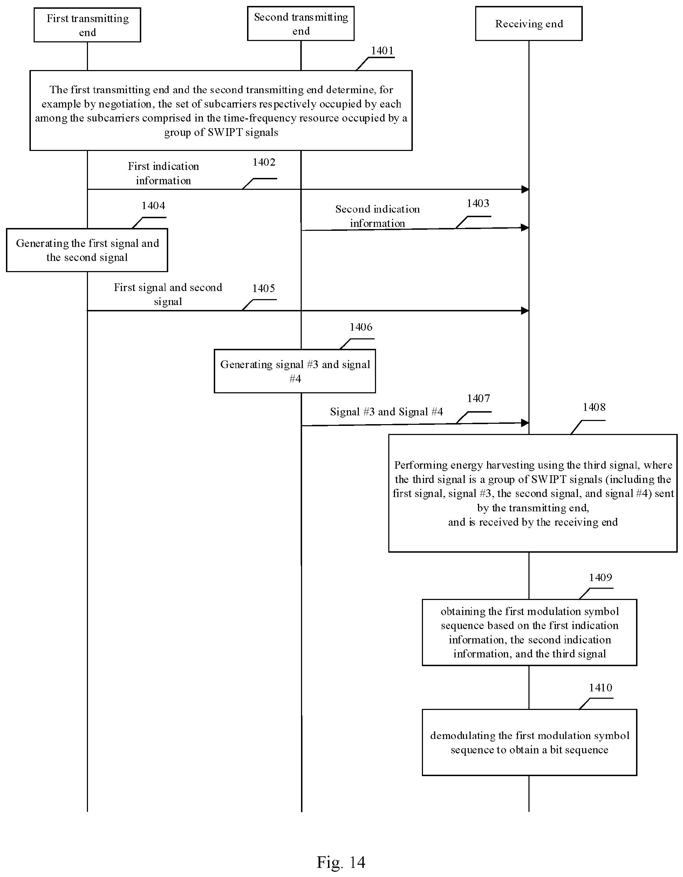

The following describes a scheme for generation and transmission of SWIPT signals provided by the present application for a multi-station scenario (i.e., a scenario where a plurality of transmitting ends jointly transmit data/signaling to the same receiving end). FIG. 14 is a flowchart of another communication method provided by an embodiment of the present application. The method flow in FIG. 14 is a possible implementation of the method described in FIG. 4. FIG. 14 describes the operations in which signals transmitted by a first transmitting end and a second transmitting end are used by a receiving end for energy harvesting and information acquisition after being transmitted through a channel, wherein the transmitting end in FIG. 4 is the first transmitting end in FIG. 14. As shown in FIG. 14, the method comprises:
1401. The first transmitting end and the second transmitting end determine, for example by negotiation, the set of subcarriers respectively occupied by each among the subcarriers comprised in the time-frequency resource occupied by a group of SWIPT signals.

The set of subcarriers may be replaced with a subcarrier range. In the embodiments of the present application, the first transmitting end and the second transmitting end jointly transmit a group of SWIPT signals to the same receiving end, wherein each of p signals transmitted by the first transmitting end carries one OFDM symbol, each of q signals transmitted by the second transmitting end carries one OFDM symbol, and the signals transmitted by the first transmitting end and the signals transmitted by the second transmitting end all occupy the same time-frequency resource. Both p and q are integers greater than 0. For ease of understanding, the embodiments of the present application are described by taking, as an example, the case where p is equal to 2 and q is equal to 2; wherein the first transmitting end transmits the first signal and the second signal, and the second transmitting end transmits signal #3 and signal #4; the first signal carries the first OFDM symbol, the second signal carries the second OFDM symbol, signal #3 carries the third OFDM symbol, and signal #4 carries the fourth OFDM symbol; the first OFDM symbol carries the first modulation symbol block, the second OFDM symbol carries the second modulation symbol block, the third OFDM symbol carries the third modulation symbol block, and the fourth OFDM symbol carries the fourth modulation symbol block; the intersection of the sets of subcarriers corresponding to any two of the first modulation symbol block, the second modulation symbol block, the third modulation symbol block, and the fourth modulation symbol block is an empty set. Because the signals transmitted by the first transmitting end and the signals transmitted by the second transmitting end occupy the same time-frequency resource, the signals transmitted by the first transmitting end and the signals transmitted by the second transmitting end need to occupy different subcarriers in the time-frequency resource. In order that the signals transmitted by the first transmitting end and the signals transmitted by the second transmitting end occupy different subcarriers in the same time-frequency resource, the first transmitting end and the second transmitting end determine, for example by negotiation, the set of subcarriers respectively occupied by each among the subcarriers comprised in the time-frequency resource occupied by a group of SWIPT signals.

In one possible implementation, the first receiving end transmits fourth information to the second receiving end, the fourth information being used to request occupancy of a first set of subcarriers in the above-mentioned time-frequency resource; in the case where the second receiving end agrees that the first receiving end occupies the first set of subcarriers in the above-mentioned time-frequency resource, the second receiving end transmits fifth information to the second receiving end, the above-mentioned fifth information being used to indicate that the second receiving end agrees that the first receiving end occupies the first set of subcarriers in the above-mentioned time-frequency resource, the fifth information may also be used to indicate that the second receiving end occupies a second set of subcarriers in the above-mentioned time-frequency resource; in the case where the second receiving end does not agree that the first receiving end occupies the first set of subcarriers in the above-mentioned time-frequency resource, the second receiving end transmits sixth information to the second receiving end, the sixth information being used to indicate that the second receiving end does not agree that the first receiving end occupies the first set of subcarriers in the above-mentioned time-frequency resource, and to indicate a third set of subcarriers in the subcarriers comprised in the above-mentioned time-frequency resource that the first receiving end is permitted to occupy; the first receiving end determines, based on the sixth information, to occupy the third set of subcarriers among the subcarriers comprised in the above-mentioned time-frequency resource. The first transmitting end and the second transmitting end may further determine the set of subcarriers respectively occupied by each among the subcarriers comprised in the time-frequency resource occupied by a group of SWIPT signals by other means, which is not limited in the present application.

1402. The first transmitting end transmits first indication information to the receiving end.

Correspondingly, the receiving end receives the first indication information from the first transmitting end. The first indication information is used by the receiving end to determine the numbers of a plurality of first subcarriers, among the subcarriers comprised in the above-mentioned time-frequency resource, that carry the modulation symbols in the first modulation symbol block, and the respective positions, in the above-mentioned first modulation symbol sequence, of the modulation symbols carried by the above-mentioned plurality of first subcarriers. The first indication information is further used by the receiving end to determine the numbers of a plurality of second subcarriers, among the subcarriers comprised in the above-mentioned time-frequency resource, that carry the modulation symbols in the second modulation symbol block, and the respective positions, in the above-mentioned first modulation symbol sequence, of the modulation symbols carried by the above-mentioned plurality of second subcarriers.

1403. The second transmitting end transmits second indication information to the receiving end.

Correspondingly, the receiving end receives the second indication information from the second transmitting end. The second indication information is used by the receiving end to determine the numbers of a plurality of third subcarriers, among the subcarriers comprised in the above-mentioned time-frequency resource, that carry the modulation symbols in the third modulation symbol block, and the respective positions, in the above-mentioned first modulation symbol sequence, of the modulation symbols carried by the above-mentioned plurality of third subcarriers. The second indication information is further used by the receiving end to determine the numbers of a plurality of fourth subcarriers, among the subcarriers comprised in the above-mentioned time-frequency resource, that carry the modulation symbols in the fourth modulation symbol block, and the respective positions, in the above-mentioned first modulation symbol sequence, of the modulation symbols carried by the above-mentioned plurality of fourth subcarriers. The order of step 1402 and step 1403 is not limited.

1404. The first transmitting end generates the first signal and the second signal.

In one possible implementation, the first transmitting end modulates a bit sequence to obtain a first modulation symbol sequence; splits the first modulation symbol sequence into a first sub-sequence (i.e., the above-mentioned first modulation symbol block), a second sub-sequence (i.e., the above-mentioned second modulation symbol block), a third sub-sequence (i.e., the above-mentioned third modulation symbol block), and a fourth sub-sequence (i.e., the above-mentioned fourth modulation symbol block); the first transmitting end maps the modulation symbols comprised in the first sub-sequence onto the first group of subcarriers (i.e., the plurality of first subcarriers) comprised in the time-frequency resource occupied by a group of SWIPT signals to be transmitted thereby, to obtain the first OFDM symbol; maps the modulation symbols comprised in the second sub-sequence onto the second group of subcarriers (i.e., the plurality of second subcarriers) comprised in the time-frequency resource, to obtain the second OFDM symbol; generates the first signal based on the first OFDM symbol, and generates the second signal based on the second OFDM symbol.

1405. The first transmitting end transmits the first signal and the second signal.

The first signal and the second signal are transmitted via different antenna port groups. The PAPR of the first signal and the PAPR of the second signal are both lower than a preset threshold.

1406. The second transmitting end generates signal #3 and signal #4.

In one possible implementation, the second transmitting end modulates a bit sequence to obtain a first modulation symbol sequence; splits the first modulation symbol sequence into a first sub-sequence, a second sub-sequence, a third sub-sequence, and a fourth sub-sequence; the second transmitting end maps the modulation symbols comprised in the third sub-sequence onto the third group of subcarriers (i.e., the plurality of third subcarriers) comprised in the time-frequency resource occupied by a group of SWIPT signals to be transmitted thereby, to obtain the third OFDM symbol; maps the modulation symbols comprised in the fourth sub-sequence onto the fourth group of subcarriers (i.e., the plurality of fourth subcarriers) comprised in the time-frequency resource, to obtain the fourth OFDM symbol; generates signal #3 based on the second OFDM symbol, and generates signal #4 based on the fourth OFDM symbol. The bit sequence in step 1406 is the same as the bit sequence in step 1404, and the first modulation symbol sequence in step 1406 is the same as the first modulation symbol sequence in step 1404. In one possible implementation, the first transmitting end and the second transmitting end determine, by negotiation, that the first transmitting end transmits one portion of the above-mentioned bit sequence (corresponding to the above-mentioned first sub-sequence and the above-mentioned second sub-sequence), and that the first transmitting end transmits another portion of the above-mentioned bit sequence (corresponding to the above-mentioned third sub-sequence and the above-mentioned third sub-sequence).

1407. The second transmitting end transmits signal #3 and signal #4.

For the manner in which the second transmitting end generates and transmits signal #3 and signal #4, reference may be made to step 803 to step 806 in FIG. 8. The PAPR of signal #3 and the PAPR of signal #4 are both lower than a preset threshold. Correspondingly, the receiving end receives a third signal. The third signal may be a signal received by the receiving end and corresponding to a group of SWIPT signals (comprising the first signal, signal #3, the second signal, and signal #4) transmitted by the transmitting ends. The PAPR of the third signal is higher than a preset threshold.

It can be understood that in this embodiment, the first transmitting end and the second transmitting end modulate the same bit sequence to obtain the first modulation symbol sequence, and then split the first modulation symbol sequence, the first transmitting end transmitting one portion of the first modulation symbol sequence, and the first transmitting end transmitting another portion of the first modulation symbol sequence.

Furthermore, in the present application, when two or more transmitting ends transmit different signals to the same receiving end, these signals may correspond to the information of the same logical channel or physical channel, or may correspond to the information of different logical channels or physical channels. In one possible implementation, the first signal, the second signal, signal #3, and signal #4 all correspond to the information of the same logical channel or physical channel. In other words, the first modulation symbol block, the second modulation symbol block, the third modulation symbol block, and the fourth modulation symbol block correspond to the information of the same logical channel or physical channel. In one possible implementation, the first signal and the second signal correspond to the information of a first logical channel or physical channel, and signal #3 and signal #4 correspond to the information of a second logical channel or physical channel, the first logical channel and the second logical channel being different, and/or the first physical channel and the second physical channel being different. In other words, the first modulation symbol block and the second modulation symbol block correspond to a first logical channel or physical channel, and the third modulation symbol block and the fourth modulation symbol block correspond to a second logical channel or physical channel, the first logical channel and the second logical channel being different, and/or the first physical channel and the second physical channel being different.

1408. The receiving end performs energy harvesting using the third signal.

1409. The receiving end obtains the first modulation symbol sequence based on the first indication information, the second indication information, and the third signal.

1410. The receiving end demodulates the first modulation symbol sequence to obtain the bit sequence.

In the embodiments of the present application, the first transmitting end and the second transmitting end jointly transmit a group of SWIPT signals to the same receiving end, and the PAPR of the third signal received by the receiving end is higher than a preset threshold, the energy harvesting efficiency being relatively high. The PAPRs of the signals transmitted by the first transmitting end and the signals transmitted by the second transmitting end are both lower than a preset threshold, rather than a transmitting end directly transmitting one signal having a relatively high PAPR; both energy harvesting efficiency and data demodulation performance can be achieved while implementing coexistence of wireless energy transmission and data transmission.

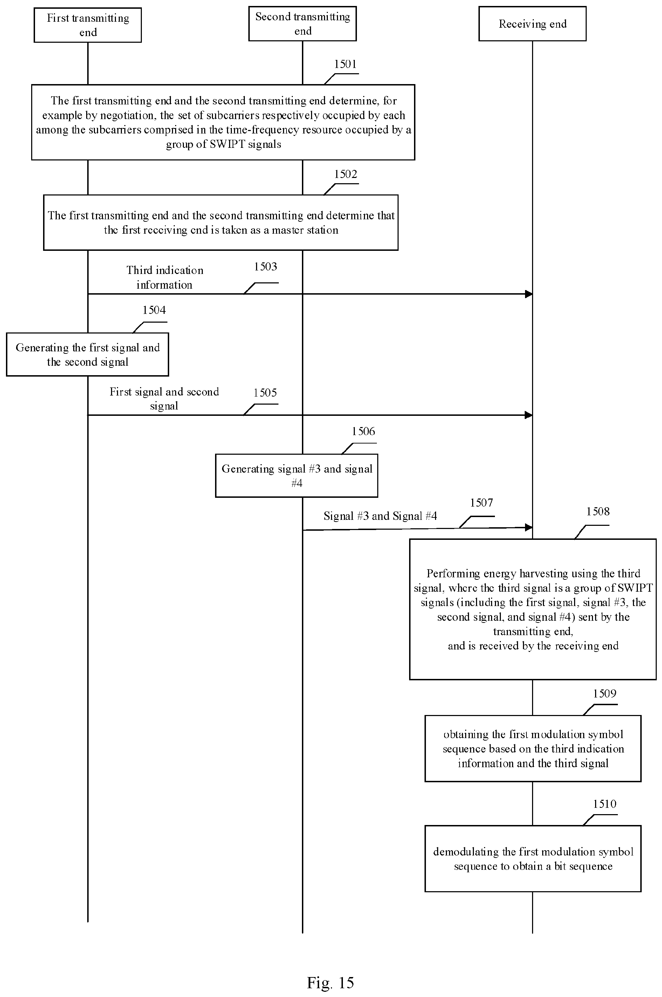

FIG. 15 is a flowchart of another communication method provided by an embodiment of the present application. FIG. 15 describes the operations in which signals transmitted by a first transmitting end and signals transmitted by a second transmitting end are used by a receiving end for energy harvesting and information acquisition after being transmitted through a channel, wherein the first transmitting end is the transmitting end in FIG. 4. As shown in FIG. 15, the method comprises:
1501. The first transmitting end and the second transmitting end determine, for example by negotiation, the set of subcarriers respectively occupied by each among the subcarriers comprised in the time-frequency resource occupied by a group of SWIPT signals.

For step 1501, reference may be made to step 1401 in FIG. 14.

1502. The first transmitting end and the second transmitting end determine that the first receiving end is taken as a master station.

The master station here may transmit indication information to the receiving end to indicate the set of subcarriers respectively occupied by each transmitting end among the subcarriers comprised in the above-mentioned time-frequency resource. Illustratively, the first transmitting end and the second transmitting end take, as the master station, the first transmitting end whose signal quality with the receiving end is better.

1503. The first transmitting end transmits third indication information to the receiving end.

Correspondingly, the receiving end receives the third indication information from the first transmitting end. The third indication information is used by the receiving end to determine the numbers of a plurality of first subcarriers, among the subcarriers comprised in the above-mentioned time-frequency resource, that carry the modulation symbols in the first modulation symbol block; the numbers of a plurality of second subcarriers that carry the modulation symbols in the second modulation symbol block; the numbers of a plurality of third subcarriers that carry the modulation symbols in the third modulation symbol block; the numbers of a plurality of fourth subcarriers that carry the modulation symbols in the fourth modulation symbol block; the respective positions, in the first modulation symbol sequence, of the modulation symbols carried by the above-mentioned plurality of first subcarriers; the respective positions, in the first modulation symbol sequence, of the modulation symbols carried by the above-mentioned plurality of second subcarriers; the respective positions, in the first modulation symbol sequence, of the modulation symbols carried by the above-mentioned plurality of third subcarriers; and the respective positions, in the first modulation symbol sequence, of the modulation symbols carried by the above-mentioned plurality of fourth subcarriers.

1504. The first transmitting end generates the first signal and the second signal.

For step 1504 to step 1508, reference may be made to step 1404 to step 1408 in FIG. 14.

1505. The first transmitting end transmits the first signal and the second signal.

1506. The second transmitting end generates signal #3 and signal #4.

1507. The second transmitting end transmits signal #3 and signal #4.

1508. The receiving end performs energy harvesting using the third signal.

1509. The receiving end obtains the first modulation symbol sequence based on the third indication information and the third signal.

1510. The receiving end demodulates the first modulation symbol sequence to obtain the bit sequence.

In the embodiments of the present application, the first transmitting end and the second transmitting end jointly transmit a group of SWIPT signals to the same receiving end, and the PAPR of the third signal received by the receiving end is higher than a preset threshold, the energy harvesting efficiency being relatively high. The PAPRs of the signals transmitted by the first transmitting end and the signals transmitted by the second transmitting end are both lower than a preset threshold, rather than a transmitting end directly transmitting one signal having a relatively high PAPR; both energy harvesting efficiency and data demodulation performance can be achieved while implementing coexistence of wireless energy transmission and data transmission.

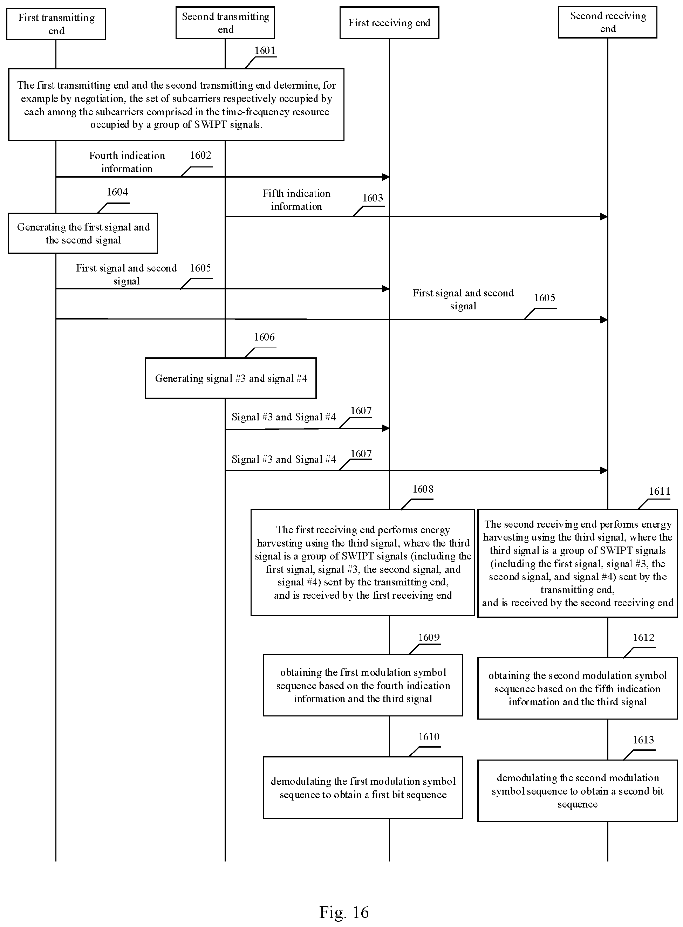

FIG. 16 is a flowchart of another communication method provided by an embodiment of the present application. The method flow of FIG. 16 may be applied to a scenario where a plurality of transmitting ends transmit SWIPT signals to a plurality of receiving ends. The method flow in FIG. 16 is a possible implementation of the method described in FIG. 4. As shown in FIG. 16, the method comprises:
1601. The first transmitting end and the second transmitting end determine, for example by negotiation, the set of subcarriers respectively occupied by each among the subcarriers comprised in the time-frequency resource occupied by a group of SWIPT signals.

For step 1601, reference may be made to step 1401 in FIG. 14.

1602. The first transmitting end transmits fourth indication information to the first receiving end.

Correspondingly, the first receiving end receives the fourth indication information from the first transmitting end. The fourth indication information is used by the first receiving end to determine the numbers of a plurality of first subcarriers, among the subcarriers comprised in the above-mentioned time-frequency resource, that carry the modulation symbols in the first modulation symbol block, and the respective positions, in the first modulation symbol sequence, of the modulation symbols carried by the above-mentioned plurality of first subcarriers. The fourth indication information is further used by the first receiving end to determine the numbers of a plurality of second subcarriers, among the subcarriers comprised in the above-mentioned time-frequency resource, that carry the modulation symbols in the second modulation symbol block, and the respective positions, in the above-mentioned first modulation symbol sequence, of the modulation symbols carried by the above-mentioned plurality of second subcarriers.

1603. The second transmitting end transmits fifth indication information to the second receiving end.

Correspondingly, the second receiving end receives the fifth indication information from the second transmitting end. The fifth indication information is used by the second receiving end to determine the numbers of a plurality of third subcarriers, among the subcarriers comprised in the above-mentioned time-frequency resource, that carry the modulation symbols in the third modulation symbol block, and the respective positions, in the second modulation symbol sequence, of the modulation symbols carried by the above-mentioned plurality of third subcarriers. The fifth indication information is further used by the second receiving end to determine the numbers of a plurality of fourth subcarriers, among the subcarriers comprised in the above-mentioned time-frequency resource, that carry the modulation symbols in the fourth modulation symbol block, and the respective positions, in the above-mentioned second modulation symbol sequence, of the modulation symbols carried by the above-mentioned plurality of fourth subcarriers. The order of step 1602 and step 1603 is not limited.

In one possible implementation, step 1602 to step 1603 are replaced with: the first transmitting end and the second transmitting end determine that the first receiving end is taken as a master station; the first transmitting end transmits the above-mentioned fourth indication information to the first receiving end, and transmits the above-mentioned fifth indication information to the second receiving end.

1604. The first transmitting end generates the first signal and the second signal.

In one possible implementation, the first transmitting end modulates a first bit sequence to obtain a first modulation symbol sequence; splits the first modulation symbol sequence into a first sub-sequence and a second sub-sequence; the first transmitting end maps the modulation symbols comprised in the first sub-sequence onto the first group of subcarriers (i.e., the plurality of first subcarriers) comprised in the time-frequency resource occupied by a group of SWIPT signals to be transmitted thereby, to obtain the first OFDM symbol; maps the modulation symbols comprised in the second sub-sequence onto the second group of subcarriers (i.e., the plurality of second subcarriers) comprised in the time-frequency resource, to obtain the second OFDM symbol; generates the first signal based on the first OFDM symbol, and generates the second signal based on the second OFDM symbol. The first sub-sequence is an example of the above-mentioned first modulation symbol block, and the second sub-sequence is an example of the above-mentioned second modulation symbol block.

1605. The first transmitting end transmits the first signal and the second signal.

The first signal and the second signal are transmitted via different antenna port groups. The PAPR of the first signal and the PAPR of the second signal are both lower than a preset threshold.

1606. The second transmitting end generates signal #3 and signal #4.

In one possible implementation, the second transmitting end modulates a second bit sequence to obtain a second modulation symbol sequence; splits the second modulation symbol sequence into a third sub-sequence and a fourth sub-sequence; the second transmitting end maps the modulation symbols comprised in the third sub-sequence onto the third group of subcarriers (i.e., the plurality of third subcarriers) comprised in the time-frequency resource occupied by a group of SWIPT signals to be transmitted thereby, to obtain the third OFDM symbol; maps the modulation symbols comprised in the fourth sub-sequence onto the fourth group of subcarriers (i.e., the plurality of fourth subcarriers) comprised in the time-frequency resource, to obtain the fourth OFDM symbol; generates signal #3 based on the third OFDM symbol, and generates signal #4 based on the fourth OFDM symbol. The time-frequency resources occupied by the first signal, the second signal, signal #3, and signal #4 are the same. The third sub-sequence is an example of the above-mentioned third modulation symbol block, and the fourth sub-sequence is an example of the above-mentioned fourth modulation symbol block.

1607. The second transmitting end transmits signal #3 and signal #4.

For the manner in which the second transmitting end generates and transmits signal #3 and signal #4, reference may be made to step 803 to step 806 in FIG. 8. The PAPR of signal #3 and the PAPR of signal #4 are both lower than a preset threshold. Correspondingly, both the first receiving end and the second receiving end receive a third signal. The third signal may be a signal received by the first receiving end and the second receiving end and corresponding to a group of SWIPT signals (comprising the first signal, the second signal, signal #3, and signal #4) jointly transmitted by the first transmitting end and the second transmitting end. The PAPR of the third signal is higher than a preset threshold.

1608. The first receiving end performs energy harvesting using the third signal.

1609. The first receiving end obtains the first modulation symbol sequence based on the fourth indication information and the third signal.

The embodiments of the present application do not consider the influence of channel transmission on the modulation symbols, and are described by taking, as an example, the case in which the first receiving end obtains the first modulation symbol sequence based on the fourth indication information and the third signal.

1610. The first receiving end demodulates the first modulation symbol sequence to obtain the first bit sequence.

1611. The second receiving end performs energy harvesting using the third signal.

1612. The second receiving end obtains the second modulation symbol sequence based on the fifth indication information and the third signal.

The embodiments of the present application do not consider the influence of channel transmission on the modulation symbols, and are described by taking, as an example, the case in which the second receiving end obtains the second modulation symbol sequence based on the fifth indication information and the third signal.

1613. The second receiving end demodulates the second modulation symbol sequence to obtain the second bit sequence.

In the embodiments of the present application, the first transmitting end and the second transmitting end jointly transmit a group of SWIPT signals, and the PAPR of the third signal received by the first receiving end and the second receiving end is higher than a preset threshold, the energy harvesting efficiency being relatively high. The PAPRs of the signals transmitted by the first transmitting end and the signals transmitted by the second transmitting end are both lower than a preset threshold, rather than a transmitting end directly transmitting one signal having a relatively high PAPR; both energy harvesting efficiency and data demodulation performance can be achieved while implementing coexistence of wireless energy transmission and data transmission.

The following describes, in conjunction with the accompanying drawings, the structure of a communication apparatus that can implement the communication method provided by the embodiments of the present application. The following provides only a brief description of the communication apparatus; for solution implementation details, reference may be made to the description of the foregoing method embodiments, which is not repeated below.

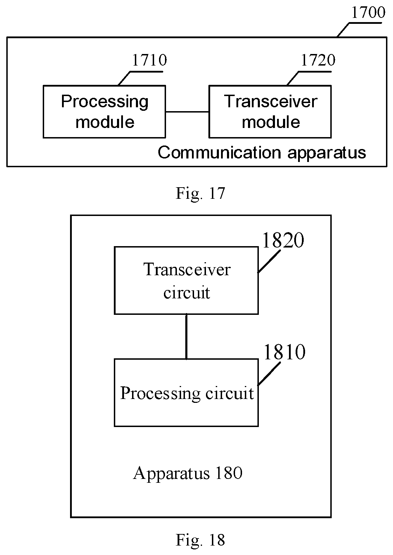

FIG. 17 is a schematic structural diagram of a communication apparatus 1700 provided by an embodiment of the present application. The communication apparatus 1700 may correspondingly implement the functions or steps implemented by the transmitting end in the foregoing respective method embodiments, and may also correspondingly implement the functions or steps implemented by the receiving end in the foregoing respective method embodiments. The communication apparatus may comprise a processing module 1710 and a transceiver module 1720. In one possible implementation manner, the communication apparatus may further comprise a storage unit, which may be configured to store instructions (code or programs) and/or data. The processing module 1710 and the transceiver module 1720 may be coupled with the storage unit; for example, the processing module 1710 may read the instructions (code or programs) and/or data in the storage unit so as to implement the corresponding methods. The respective units described above may be provided independently, or may be partially or wholly integrated. For example, the transceiver module 1720 may comprise a transmitting module and a receiving module. The transmitting module may be a transmitter, and the receiving module may be a receiver. The entity corresponding to the transceiver module 1720 may be a transceiver circuit, such as a transceiver or a communication interface.

In some possible implementations, the communication apparatus 1700 is capable of correspondingly implementing the actions and functions of the transmitting end in the foregoing method embodiments. For example, the communication apparatus 1700 may be the transmitting end, or may be a component (e.g., a chip or a circuit) applied to the transmitting end. The transceiver module 1720 may be configured, for example, to perform all the receiving or transmitting operations performed by the transmitting end in the embodiments of FIG. 4, FIG. 6, FIG. 8, and FIG. 10 to FIG. 16. The processing module 1710 may be configured, for example, to perform all the operations other than the transceiving operations performed by the transmitting end in the embodiments of FIG. 4, FIG. 6, FIG. 8, and FIG. 10 to FIG. 16.

In some possible implementations, the communication apparatus 1700 is capable of correspondingly implementing the actions and functions of the receiving end in the foregoing method embodiments. For example, the communication apparatus 1700 may be the receiving end, or may be a component (e.g., a chip or a circuit) applied to the receiving end. The transceiver module 1720 may be configured, for example, to perform all the receiving or transmitting operations performed by the receiving end in the embodiments of FIG. 4, FIG. 6, FIG. 8, and FIG. 10 to FIG. 16. The processing module 1710 may be configured, for example, to perform all the operations other than the transceiving operations performed by the receiving end in the embodiments of FIG. 4, FIG. 6, FIG. 8, and FIG. 10 to FIG. 16.

FIG. 18 is a schematic structural diagram of another apparatus 180 provided by an embodiment of the present application. The apparatus in FIG. 18 may be the above-mentioned transmitting end or a chip for the above-mentioned transmitting end, or may be the above-mentioned receiving end or a chip for the above-mentioned receiving end. As shown in FIG. 18, the apparatus 180 comprises a processing circuit 1810 and a transceiver circuit 1820.

In some embodiments of the present application, the processing circuit 1810 and the transceiver circuit 1820 may be configured to perform the functions or operations performed by the transmitting end, etc. The transceiver circuit 1820 is configured, for example, to perform all the receiving or transmitting operations performed by the transmitting end in the embodiments of FIG. 4, FIG. 6, FIG. 8, and FIG. 10 to FIG. 16. The processing circuit 1810 is configured, for example, to perform all the operations other than the transceiving operations performed by the transmitting end in the embodiments of FIG. 4, FIG. 6, FIG. 8, and FIG. 10 to FIG. 16.

In some embodiments of the present application, the processing circuit 1810 and the transceiver circuit 1820 may be configured to perform the functions or operations performed by the receiving end, etc. The transceiver circuit 1820 is configured, for example, to perform all the receiving or transmitting operations performed by the receiving end in the embodiments of FIG. 4, FIG. 6, FIG. 8, and FIG. 10 to FIG. 16. The processing circuit 1810 is configured, for example, to perform all the operations other than the transceiving operations performed by the receiving end in the embodiments of FIG. 4, FIG. 6, FIG. 8, and FIG. 10 to FIG. 16.

In one possible implementation manner, the apparatus is the above-mentioned transmitting end or receiving end, the transceiver circuit 1820 comprises at least one transceiver, the processing circuit 1810 comprises at least one processor, or a circuit for processing or controlling among the at least one processor.

The transceiver is configured to communicate with other devices/apparatuses through a transmission medium. The processor utilizes the transceiver to transmit and receive data and/or signaling, and is configured to implement the methods in the foregoing method embodiments. The processor may implement the functions of the processing module 1710, and the transceiver may implement the functions of the transceiver module 1720. Optionally, the transceiver may comprise a radio frequency circuit and an antenna, the radio frequency circuit being mainly used for conversion between baseband signals and radio frequency signals and for processing of the radio frequency signals. The antenna is mainly used for transmitting and receiving radio frequency signals in the form of electromagnetic waves. Input/output devices, such as a touch screen, a display screen, a keyboard, etc., are mainly used for receiving data inputted by a user and for outputting data to the user.

Optionally, the apparatus 180 may further comprise at least one memory configured to store program instructions and/or data. The memory is coupled with the processor. The coupling in the embodiments of the present application refers to an indirect coupling or communication connection between apparatuses, units, or modules, which may be electrical, mechanical, or in other forms, for information exchange between the apparatuses, units, or modules. The processor may cooperate with the memory. The processor may execute the program instructions stored in the memory. At least one of the at least one memory may be included in the processor.

The processor may read the software program in the memory, execute the instructions of the software program, and process the data of the software program. When data is to be transmitted wirelessly, the processor performs baseband processing on the data to be transmitted and then outputs a baseband signal to the radio frequency circuit, the radio frequency circuit performs radio frequency processing on the baseband signal and then transmits the radio frequency signal in the form of electromagnetic waves via the antenna. When data is transmitted to the apparatus 180, the radio frequency circuit receives a radio frequency signal via the antenna, converts the radio frequency signal into a baseband signal, and outputs the baseband signal to the processor, the processor converts the baseband signal into data and processes the data.

In another implementation, the above-mentioned radio frequency circuit and antenna may be provided independently of the processor performing the baseband processing. For example, in a distributed scenario, the radio frequency circuit and the antenna may be arranged remotely, independent of the apparatus 180.

The embodiments of the present application do not limit the specific connection medium among the above-mentioned transceiver, processor, and memory.

In the embodiments of the present application, the processor may be one of the following devices: a general-purpose processor, a digital signal processor, an application-specific integrated circuit, a field programmable gate array or other programmable logic device, a discrete gate or transistor logic device, a discrete hardware component, or all or part of a circuit for processing functions among the foregoing devices, which can implement or perform the various methods, steps, and logical block diagrams disclosed in the embodiments of the present application. The general-purpose processor may be a microprocessor or any conventional processor or the like. The steps of the methods disclosed in conjunction with the embodiments of the present application may be directly embodied as being performed by a hardware processor, or performed by a combination of hardware and software modules in a processor.

In one possible implementation manner, the apparatus is a chip for the above-mentioned transmitting end or receiving end, the processing circuit 1810 comprises at least one logic circuit, and the transceiver circuit 1820 comprises at least one interface. The processing module 1710 in FIG. 17 may be implemented by a logic circuit, and the transceiver module 1720 in FIG. 17 may be implemented by an interface. Here, the logic circuit may be a chip, a processing circuit, an integrated circuit, or a system on chip (SoC) chip, etc., and the interface may be a communication interface, an input/output interface, etc. In the embodiments of the present application, the logic circuit and the interface may further be coupled with each other. The specific connection manner of the logic circuit and the interface is not limited in the embodiments of the present application.

The present application further provides a computer-readable storage medium having stored therein a computer program or instructions which, when run on a computer, cause the computer to perform the methods of the foregoing embodiments.

The present application further provides a computer program product comprising instructions or a computer program which, when run on a computer, cause the methods in the foregoing embodiments to be performed.

The present application further provides a communication system, comprising the above-mentioned transmitting end and the above-mentioned receiving end.

The present application further provides a communication system, comprising the above-mentioned transmitting end, the above-mentioned first receiving end, and the above-mentioned second receiving end.

The present application further provides a communication system, comprising the above-mentioned first transmitting end, the above-mentioned second transmitting end, and the above-mentioned receiving end.

The present application further provides a communication system, comprising the above-mentioned first transmitting end, the above-mentioned second transmitting end, the above-mentioned first receiving end, and the above-mentioned second receiving end.

The present application further provides a chip comprising a communication interface and a processor; the communication interface is configured for signal transmission and reception of the above-mentioned chip; the processor is configured to execute computer program instructions so as to cause a communication apparatus comprising the above-mentioned chip to perform the methods in the foregoing embodiments.

In the foregoing embodiments, implementation may be made wholly or partially by software, hardware, firmware, or any combination thereof. When implemented by software, implementation may be made wholly or partially in the form of a computer program product. The above-mentioned computer program product comprises one or more computer programs or instructions. When the above-mentioned computer programs or instructions are loaded and executed on a computer, the processes or functions described in the embodiments of the present application are performed wholly or partially. The above-mentioned computer may be a general-purpose computer, a specialpurpose computer, a computer network, a network device, a user device, or other programmable apparatus. The above-mentioned computer programs or instructions may be stored in a computer-readable storage medium, or transmitted from one computer-readable storage medium to another computer-readable storage medium. For example, the above-mentioned computer programs or instructions may be transmitted from one website, computer, server, or data center to another website, computer, server, or data center in a wired or wireless manner. The above-mentioned computer-readable storage medium may be any usable medium that a computer can access, or a data storage device such as a server or a data center that integrates one or more usable media. The above-mentioned usable medium may be a magnetic medium, e.g., a floppy disk, a hard disk, a magnetic tape; or may be an optical medium, e.g., a digital video disc; or may also be a semiconductor medium, e.g., a solid-state hard disk. The computer-readable storage medium may be a volatile or non-volatile storage medium, or may comprise both volatile and non-volatile types of storage media.

In the various embodiments of the present application, unless otherwise specified or unless there is a logical conflict, the terms and/or descriptions in different embodiments are consistent and may be referenced to each other, and the technical features in different embodiments may be combined according to their inherent logical relationships to form new embodiments.

## Claims

1. A communication method, comprising:
receiving a third signal, the third signal comprising a first orthogonal frequency division multiplexing (OFDM) symbol and a second OFDM symbol, the time-frequency resource occupied by the first OFDM symbol and the time-frequency resource occupied by the second OFDM symbol being the same, the first OFDM symbol carrying a first modulation symbol block, the second OFDM symbol carrying a second modulation symbol block, a set of subcarriers corresponding to modulation symbols in the first modulation symbol block being a part of the subcarriers comprised in the time-frequency resource, a set of subcarriers corresponding to modulation symbols in the second modulation symbol block being a part of the subcarriers comprised in the time-frequency resource, and an intersection of the set of subcarriers corresponding to the modulation symbols in the first modulation symbol block and the set of subcarriers corresponding to the modulation symbols in the second modulation symbol block being an empty set, the first modulation symbol block and the second modulation symbol block each carrying at least one of data information and control information;
performing energy harvesting using the third signal; and
obtaining, based on the third signal, a bit sequence, the bit sequence comprising the data information or the control information carried by the first modulation symbol block.

2. The method according to claim 1, wherein the modulation symbol sequence corresponding to the first modulation symbol block and the modulation symbol sequence corresponding to the second modulation symbol block are each a part of a first modulation symbol sequence; or, the modulation symbol sequence corresponding to the first modulation symbol block and the modulation symbol sequence corresponding to the second modulation symbol block each correspond to a first logical channel or physical channel.

3. The method according to claim 1 or 2, wherein the bit sequence further comprises the data information or the control information carried by the second modulation symbol block, and the bit sequence corresponding to the first modulation symbol block and the bit sequence corresponding to the second modulation symbol block are each a part of the bit sequence.

4. The method according to any one of claims 1 to 3, wherein the modulation symbols corresponding to the bit sequence are all or part of the modulation symbols carried by the subcarriers comprised in the time-frequency resource.

5. The method according to claim 2 or 3, wherein the obtaining, based on the third signal, the bit sequence comprises:
obtaining the bit sequence based on the third signal and positions, in a first modulation symbol sequence, of the modulation symbols carried by the subcarriers comprised in the time-frequency resource, the modulation symbols carried by the subcarriers comprised in the time-frequency resource comprising the modulation symbols in the first modulation symbol block and the modulation symbols in the second modulation symbol block.

6. The method according to any one of claims 1 to 5, further comprising:
receiving first information; and
determining, based on the first information, positions, in the first modulation symbol sequence, of the modulation symbols carried by the subcarriers comprised in the time-frequency resource.

7. The method according to claim 5, wherein the first information comprises a first index value, the first index value being used to indicate respective positions, in the first modulation symbol sequence, of the modulation symbols carried by the subcarriers comprised in the time-frequency resource;
or, the first index value is used to indicate at least one of: numbers of a plurality of first subcarriers among the subcarriers comprised in the time-frequency resource that carry the modulation symbols in the first modulation symbol block, and respective positions, in the first modulation symbol sequence, of the modulation symbols carried by the plurality of first subcarriers.

8. The method according to claim 5, wherein the first information comprises a first transmission parameter, the first transmission parameter being used for at least one of: determination of numbers of a plurality of first subcarriers among the subcarriers comprised in the time-frequency resource that carry the modulation symbols in the first modulation symbol block, and determination of respective positions, in the first modulation symbol sequence, of the modulation symbols carried by the plurality of first subcarriers.

9. The method according to claim 8, wherein the first transmission parameter comprises at least one of: a number of the plurality of first subcarriers, and an order parameter, the order parameter being used for determination of positions, in the first modulation symbol sequence, of the modulation symbols in the first modulation symbol block.

10. The method according to claim 9, wherein the first transmission parameter further comprises numbering information, the numbering information and the number of the plurality of first subcarriers being used for determination of the numbers of the plurality of first subcarriers among the subcarriers comprised in the time-frequency resource that carry the modulation symbols in the first modulation symbol block.

11. The method according to claim 1, further comprising:
receiving first indication information from a first transmitting end; and
determining, based on the first indication information, numbers of a plurality of first subcarriers among the subcarriers comprised in the time-frequency resource that carry the modulation symbols in the first modulation symbol block, and respective positions, in a first modulation symbol sequence, of the modulation symbols carried by the plurality of first subcarriers.

12. The method according to claim 3, further comprising:
receiving first indication information from a first transmitting end;
determining, based on the first indication information, numbers of a plurality of first subcarriers among the subcarriers comprised in the time-frequency resource that carry the modulation symbols in the first modulation symbol block, and respective positions, in a first modulation symbol sequence, of the modulation symbols carried by the plurality of first subcarriers;
receiving second indication information from a second transmitting end; and
determining, based on the second indication information, numbers of a plurality of second subcarriers among the subcarriers comprised in the time-frequency resource that carry the modulation symbols in the second modulation symbol block, and respective positions, in the first modulation symbol sequence, of the modulation symbols carried by the plurality of second subcarriers.

13. The method according to claim 12, wherein the first indication information comprises a second index value, the second index value being used to indicate at least one of: the numbers of the plurality of first subcarriers among the subcarriers comprised in the time-frequency resource that carry the modulation symbols in the first modulation symbol block, and the respective positions, in the first modulation symbol sequence, of the modulation symbols carried by the plurality of first subcarriers.

14. The method according to claim 12, wherein the first indication information comprises a second transmission parameter, the second transmission parameter being used for at least one of: determination of the numbers of the plurality of first subcarriers among the subcarriers comprised in the time-frequency resource that carry the modulation symbols in the first modulation symbol block, and determination of the respective positions, in the first modulation symbol sequence, of the modulation symbols carried by the plurality of first subcarriers; the second transmission parameter comprising at least one of: a number of the plurality of first subcarriers, and an order parameter, the order parameter being used for determination of positions, in the first modulation symbol sequence, of the modulation symbols in the first modulation symbol block.

15. The method according to any one of claims 12 to 14, wherein the second indication information comprises a third index value, the third index value being used to indicate at least one of: the numbers of the plurality of second subcarriers among the subcarriers comprised in the time-frequency resource that carry the modulation symbols in the second modulation symbol block, and the respective positions, in the first modulation symbol sequence, of the modulation symbols carried by the plurality of second subcarriers.

16. The method according to any one of claims 12 to 14, wherein the second indication information comprises a third transmission parameter, the third transmission parameter being used for at least one of: determination of the numbers of the plurality of second subcarriers among the subcarriers comprised in the time-frequency resource that carry the modulation symbols in the second modulation symbol block, and determination of the respective positions, in the first modulation symbol sequence, of the modulation symbols carried by the plurality of second subcarriers; the third transmission parameter comprising at least one of: a number of the plurality of second subcarriers, and an order parameter, the order parameter being used for determination of positions, in the first modulation symbol sequence, of the modulation symbols in the second modulation symbol block.

17. The method according to any one of claims 1 to 16, wherein the obtaining, based on the third signal, the bit sequence comprises:
obtaining the bit sequence based on numbers of a plurality of first subcarriers among the subcarriers comprised in the time-frequency resource that carry the modulation symbols in the first modulation symbol block, and respective positions, in a first modulation symbol sequence, of the modulation symbols carried by the plurality of first subcarriers, the first modulation symbol block being obtained based on the first modulation symbol sequence.

18. The method according to claim 17, wherein, before obtaining the bit sequence based on the numbers of the plurality of first subcarriers among the subcarriers comprised in the time-frequency resource that carry the modulation symbols in the first modulation symbol block, and the respective positions, in the first modulation symbol sequence, of the modulation symbols carried by the plurality of first subcarriers, the method further comprises:
receiving second information; and determining, based on the second information, positions, in the first modulation symbol sequence, of the modulation symbols in the first modulation symbol block carried by the subcarriers comprised in the time-frequency resource.

19. The method according to claim 18, wherein the second information comprises a second index value, the second index value being used to indicate at least one of: the numbers of the plurality of first subcarriers among the subcarriers comprised in the time-frequency resource that carry the modulation symbols in the first modulation symbol block, and the respective positions, in the first modulation symbol sequence, of the modulation symbols carried by the plurality of first subcarriers.

20. The method according to claim 18, wherein the second information comprises a second transmission parameter, the second transmission parameter being used for at least one of: determination of the numbers of the plurality of first subcarriers among the subcarriers comprised in the time-frequency resource that carry the modulation symbols in the first modulation symbol block, and determination of the respective positions, in the first modulation symbol sequence, of the modulation symbols carried by the plurality of first subcarriers; the second transmission parameter comprising at least one of: a number of the plurality of first subcarriers, and an order parameter, the order parameter being used for determination of positions, in the first modulation symbol sequence, of the modulation symbols in the first modulation symbol block.

21. The method according to any one of claims 1 to 20, wherein the peak-to-average power ratio (PAPR) of the third signal is higher than a preset threshold.

22. A communication method, comprising:
generating a first signal and a second signal, the first signal carrying a first orthogonal frequency division multiplexing (OFDM) symbol, the second signal carrying a second OFDM symbol, the time-frequency resource occupied by the first OFDM symbol and the time-frequency resource occupied by the second OFDM symbol being the same, the first OFDM symbol carrying a first modulation symbol block, the second OFDM symbol carrying a second modulation symbol block, a set of subcarriers corresponding to modulation symbols in the first modulation symbol block being a part of the subcarriers comprised in the time-frequency resource, a set of subcarriers corresponding to modulation symbols in the second modulation symbol block being a part of the subcarriers comprised in the time-frequency resource, and an intersection of the set of subcarriers corresponding to the modulation symbols in the first modulation symbol block and the set of subcarriers corresponding to the modulation symbols in the second modulation symbol block being an empty set, the first modulation symbol block and the second modulation symbol block each carrying at least one of data information and control information; and
transmitting the first signal and the second signal.

23. The method according to claim 22, wherein the first signal corresponds to a first antenna port group, the second signal corresponds to a second antenna port group, the first antenna port group comprises one or more first antenna ports, the second antenna port group comprises one or more second antenna ports, and the first antenna ports are different from the second antenna ports.

24. The method according to claim 22, wherein the first signal and the second signal correspond to different radio frequency (RF) chains.

25. The method according to any one of claims 22 to 24, wherein the first signal and the second signal are used for energy harvesting.

26. The method according to any one of claims 22 to 25, wherein the PAPR of the first signal and the PAPR of the second signal are each lower than a preset threshold.

27. The method according to any one of claims 22 to 26, wherein, among the subcarriers comprised in the time-frequency resource, at most h subcarriers carry the modulation symbols in the first modulation symbol block, where h is equal to (n/m + r) or the ceiling of (n/m + r), m is an integer greater than 1, m is less than or equal to the number of antenna port groups available for the time-frequency resource, r is an integer greater than or equal to 0, n is the total number of subcarriers comprised in the time-frequency resource, and the antenna port groups corresponding to the time-frequency resource comprise the first antenna port group and the second antenna port group.

28. The method according to any one of claims 22 to 27, wherein the modulation symbols in the first modulation symbol block and the modulation symbols in the second modulation symbol block are obtained based on a same bit sequence; or, the modulation symbols in the first modulation symbol block and the modulation symbols in the second modulation symbol block are obtained based on bit sequences to be transmitted to different receiving ends.

29. The method according to any one of claims 22 to 28, wherein the first OFDM symbol further carries a third modulation symbol block, the third modulation symbol block and the first modulation symbol block being obtained based on bit sequences to be transmitted to different receiving ends.

30. The method according to any one of claims 22 to 29, wherein the modulation symbols in the first modulation symbol block and the modulation symbols in the second modulation symbol block are obtained based on a same bit sequence; the method further comprising:
transmitting first information, the first information being used for determination of positions, in a first modulation symbol sequence, of the modulation symbols carried by the subcarriers comprised in the time-frequency resource, the modulation symbols carried by the subcarriers comprised in the time-frequency resource comprising the modulation symbols in the first modulation symbol block and the modulation symbols in the second modulation symbol block, the first modulation symbol block and the second modulation symbol block being obtained based on the first modulation symbol sequence.

31. The method according to claim 30, wherein the first information comprises a first index value, the first index value being used to indicate respective positions, in the first modulation symbol sequence, of the modulation symbols carried by the subcarriers comprised in the time-frequency resource; or, the first index value is used to indicate at least one of: numbers of a plurality of first subcarriers among the subcarriers comprised in the time-frequency resource that carry the modulation symbols in the first modulation symbol block, and respective positions, in the first modulation symbol sequence, of the modulation symbols carried by the plurality of first subcarriers.

32. The method according to claim 30, wherein the first information comprises a first transmission parameter, the first transmission parameter being used for at least one of: determination of numbers of a plurality of first subcarriers among the subcarriers comprised in the time-frequency resource that carry the modulation symbols in the first modulation symbol block, and determination of respective positions, in the first modulation symbol sequence, of the modulation symbols carried by the plurality of first subcarriers.

33. The method according to claim 32, wherein the first transmission parameter comprises at least one of: a number of the plurality of first subcarriers, and an order parameter, the order parameter being used for determination of positions, in the first modulation symbol sequence, of the modulation symbols in the first modulation symbol block.

34. The method according to claim 33, wherein the first transmission parameter further comprises numbering information, the numbering information and the number of the plurality of first subcarriers being used for determination of the numbers of the plurality of first subcarriers among the subcarriers comprised in the time-frequency resource that carry the modulation symbols in the first modulation symbol block.

35. The method according to any one of claims 22 to 34, wherein the modulation symbols in the first modulation symbol block and the modulation symbols in the second modulation symbol block are obtained based on bit sequences to be transmitted to different receiving ends; the method further comprising:
transmitting second information, the second information being used for determination of positions, in a first modulation symbol sequence, of the modulation symbols in the first modulation symbol block carried by the subcarriers comprised in the time-frequency resource, the first modulation symbol block being obtained based on the first modulation symbol sequence, the first modulation symbol sequence being obtained based on a bit sequence to be transmitted to a first receiving end; and
transmitting third information, the third information being used for determination of positions, in a second modulation symbol sequence, of the modulation symbols in the second modulation symbol block carried by the subcarriers comprised in the time-frequency resource, the second modulation symbol block being obtained based on the second modulation symbol sequence, the second modulation symbol sequence being obtained based on a bit sequence to be transmitted to a second receiving end, the second receiving end being different from the first receiving end.

36. The method according to claim 35, wherein the second information comprises a second index value, the second index value being used to indicate at least one of: numbers of a plurality of first subcarriers among the subcarriers comprised in the time-frequency resource that carry the modulation symbols in the first modulation symbol block, and respective positions, in the first modulation symbol sequence, of the modulation symbols carried by the plurality of first subcarriers.

37. The method according to claim 35, wherein the second information comprises a second transmission parameter, the second transmission parameter being used for at least one of: determination of numbers of a plurality of first subcarriers among the subcarriers comprised in the time-frequency resource that carry the modulation symbols in the first modulation symbol block, and determination of respective positions, in the first modulation symbol sequence, of the modulation symbols carried by the plurality of first subcarriers; the second transmission parameter comprising at least one of: a number of the plurality of first subcarriers, and an order parameter, the order parameter being used for determination of positions, in the first modulation symbol sequence, of the modulation symbols in the first modulation symbol block.

38. The method according to any one of claims 22 to 37, further comprising:
obtaining a first modulation symbol sequence;
splitting the first modulation symbol sequence into v sub-sequences, v being an integer greater than 1, v being less than or equal to the number of antenna port groups available for the time-frequency resource, the v sub-sequences comprising a first sub-sequence and a second sub-sequence, the first sub-sequence corresponding to the first modulation symbol block, the second sub-sequence corresponding to the second modulation symbol block; and
obtaining the first OFDM symbol based on the first modulation symbol block, and obtaining the second OFDM symbol based on the second modulation symbol block.

39. The method according to claim 38, wherein the splitting the first modulation symbol sequence into v sub-sequences comprises:
mapping the first modulation symbol sequence onto v layers (spatial layers) to obtain the v sub-sequences, the vector corresponding to the v layers being x(i) = [*x*⁽⁰⁾(*i*),···, *x*^{(*v*-1)}(*i*)], $i = 0 , 1 , … , {M}_{symb}^{layer} - 1 , {M}_{symb}^{layer} = {M}_{symb}$ , where *M*_{symb} is the length of the first modulation symbol sequence (i.e., the number of modulation symbols in the first modulation symbol sequence), v is an integer greater than 1, the v layers are in one-to-one correspondence with the v sub-sequences, *x*⁽⁰⁾(*i*) is the modulation symbol of layer 0, and *x*^{(*v*-1)}(*i*) is the modulation symbol of layer (*v* - 1).

40. The method according to claim 39, wherein the first modulation symbol sequence and the vector *x*(*i*) corresponding to the v layers satisfy the following first mapping rule: $\left[\begin{matrix}{x}^{\left(0\right)} \left(vk\right) = d \left(vk\right) \\ {x}^{\left(1\right)} \left(vk+1\right) = d \left(vk+1\right) \\ … = ⋯ \\ {x}^{\left(v-1\right)} \left(vk+v-1\right) = d \left(vk+v-1\right)\end{matrix}\right]$ (1); where *d*(*vk*) denotes the (*vk*)-th modulation symbol in the first modulation symbol sequence, *d*(*vk +* 1) denotes the (*vk +* 1)-th modulation symbol in the first modulation symbol sequence, *d*(*vk + v -* 1) denotes the (*vk + v* - 1)-th modulation symbol in the first modulation symbol sequence, k is an integer greater than or equal to 0, the value range of k being from 0 to ((*M*_{symp}/*v*) - 1), the first mapping rule indicates that the (*vk* + *j*)-th modulation symbol in the first modulation symbol sequence is mapped onto the (*vk* + *j*)-th symbol of the j-th layer, j is an integer greater than or equal to 0, *x*⁽⁰⁾(*vk*) denotes the (*vk*)-th symbol of layer 0, corresponding to the (*vk*)-th modulation symbol in the first modulation symbol sequence, *x*⁽¹⁾(*vk +* 1) denotes the (*vk +* 1)-th symbol of layer 1, corresponding to the (*vk* + 1)-th modulation symbol in the first modulation symbol sequence, and *x*^{(*v*-1)}(*vk + v -* 1) denotes the (*vk + v* - 1)-th symbol of layer (*v* - 1), corresponding to the (*vk + v* - 1)-th modulation symbol in the first modulation symbol sequence.

41. The method according to any one of claims 38 to 40, wherein the obtaining the first OFDM symbol based on the first modulation symbol block comprises:
mapping the modulation symbols in the first modulation symbol block (antenna port mapping) onto the first antenna port group; and sequentially mapping, in order, the modulation symbols corresponding to the first antenna port group (mapping to a resource block) onto a plurality of subcarriers of the first antenna port group, to obtain the first OFDM symbol.

42. The method according to any one of claims 38 to 40, wherein the obtaining the first OFDM symbol based on the first modulation symbol block comprises:
mapping the vector [*x*⁽⁰⁾(*i*)*,*···*,x*^{(*v*-1)}(*i*)] corresponding to the v layers onto v antenna port groups, the vector [*x*⁽⁰⁾(*i*)*,*···*,x*^{(*v*-1)}(*i*)] corresponding to the v layers and the modulation symbols corresponding to the v antenna port groups satisfying the following second mapping rule: $\left[\begin{matrix}{y}^{\left({p}_{0}\right)} \left(i\right) = {x}^{\left(0\right)} \left(i\right) \\ {y}^{\left({p}_{1}\right)} \left(i\right) = {x}^{\left(1\right)} \left(i\right) \\ ⋯ = ⋯ \\ {y}^{\left({p}_{v - 1}\right)} \left(i\right) = {x}^{\left(v-1\right)} \left(i\right)\end{matrix}\right]$ (2);
where *x*⁽⁰⁾(*i*) denotes the i-th modulation symbol of layer 0, *y*^{(*p*⁰)}(*i*) denotes the i-th modulation symbol of antenna port group *p*₀*, x*^{(*v*-1)}(*i*) denotes the i-th modulation symbol of layer (*v - 1), y*^{(*pv*}-1)(*i*) denotes the i-th modulation symbol of antenna port group *p*_{*v*-1}, the second mapping rule indicates that the i-th modulation symbol of layer s is mapped onto the i-th modulation symbol of antenna port group *pₛ*, s is greater than or equal to 0 and less than or equal to (*v* - 1), {*p*₀*,* ... , *p*_{*v-*1}} is the set of antenna port groups, $i = 0 , 1 , … , {M}_{symb}^{ap} - 1 , {M}_{symb}^{ap} = {M}_{symb}^{layer}$; and the ${y}^{\left(p\right)} \left(0\right) , … , {y}^{\left(p\right)} \left({M}_{symb}^{ap}-1\right)$, totaling ${M}_{symb}^{ap}$ symbols, are sequentially mapped, in order, onto the ${M}_{symb}^{ap}$ subcarriers of the corresponding p-th antenna port group, to obtain the first OFDM symbol, p being greater than or equal to 0 and less than or equal to (*v* - 1).

43. The method according to claim 42, wherein the first modulation symbol sequence and the vector *x*(*i*) corresponding to the v layers satisfy the following third mapping rule: $\left[\begin{matrix}{x}^{\left(0\right)} \left(i\right) = d \left(vi\right) \\ {x}^{\left(1\right)} \left(i\right) = d \left(vi+1\right) \\ … = ⋯ \\ {x}^{\left(v-1\right)} \left(i\right) = d \left(vi+v-1\right)\end{matrix}\right]$ (3); where *d*(*vi*) denotes the (*vi*)-th modulation symbol in the first modulation symbol sequence, *d*(*vi +* 1) denotes the (*vi +* 1)-th modulation symbol in the first modulation symbol sequence, *d*(*vi + v -* 1) denotes the (*vi + v* - 1)-th modulation symbol in the first modulation symbol sequence, i is an integer greater than or equal to 0, the value range of i being from 0 to ${M}_{symb}^{layer}$, ${M}_{symb}^{layer} = {M}_{symb} / v$, the third mapping rule indicates that the (*vi* + *j*)-th modulation symbol in the first modulation symbol sequence is mapped onto the i-th symbol of the j-th layer, j is an integer greater than or equal to 0, *x*⁽⁰⁾(*i*) denotes the i-th symbol of layer 0, corresponding to the (*vi*)-th modulation symbol in the first modulation symbol sequence, and *x*^{(*v*-1)}(*i*) denotes the i-th symbol of layer (*v* - 1), corresponding to the (*vi + v* - 1)-th modulation symbol in the first modulation symbol sequence.

44. The method according to any one of claims 38 to 40, wherein the obtaining the first OFDM symbol based on the first modulation symbol block comprises: mapping the vector [*x*⁽⁰⁾(*i*)*,*···*,x*^{(*v*-1)}(*i*)] corresponding to the v layers onto v antenna port groups, the vector [*x*⁽⁰⁾(*i*)*,*···*,x*^{(*v*-1)}(*i*)] corresponding to the v layers and the modulation symbols corresponding to the v antenna port groups satisfying the following fourth mapping rule: $\left[\begin{matrix}{y}^{\left({p}_{0}\right)} \left(vi\right) = {x}^{\left(0\right)} \left(i\right) \\ {y}^{\left({p}_{1}\right)} \left(vi+1\right) = {x}^{\left(1\right)} \left(i\right) \\ ⋯ = ⋯ \\ {y}^{\left({p}_{v - 1}\right)} \left(vi+v-1\right) = {x}^{\left(v-1\right)} \left(i\right)\end{matrix}\right]$ (4); where *x*⁽⁰⁾(*i*) denotes the i-th modulation symbol of layer 0, *y*^{(*p*⁰)}(*vi*) denotes the (*vi*)-th modulation symbol of antenna port group *p*₀*, x*^{(*v*-1)}(*i*) denotes the i-th modulation symbol of layer (*v -* 1), *y*^{(*pv-*}1)(*vi + v -* 1) denotes the (*vi + v* - 1)-th modulation symbol of antenna port group *p*_{*v-*1}*,* i is an integer greater than or equal to 0, $i = 0 , 1 , … , \left({M}_{symb}^{layer}-1\right)$, the fourth mapping rule indicates that the i-th modulation symbol of layer s is mapped onto the (*vi*+*s*)-th modulation symbol of antenna port group *pₛ*, s is greater than or equal to 0 and less than or equal to (*v* - 1), {*p*₀, ... , *p*_{*v*-1}} is the set of antenna port groups, ${M}_{symb}^{ap} = {M}_{symb}^{layer} ∗ v$; and the ${y}^{\left(p\right)} \left(0\right) , … , {y}^{\left(p\right)} \left({M}_{symb}^{ap}-1\right)$ , totaling ${M}_{symb}^{ap}$ symbols, are sequentially mapped, in order, onto the ${M}_{symb}^{ap}$ subcarriers of the corresponding p-th antenna port group, to obtain the first OFDM symbol, p being greater than or equal to 0 and less than or equal to (*v* - 1).

45. The method according to any one of claims 38 to 44, further comprising:
transmitting fourth information, the fourth information being used for determination of a set of subcarriers, among the subcarriers comprised in the time-frequency resource, that carry the first modulation symbol block and the second modulation symbol block.

46. A communication apparatus, **characterized by** comprising modules for implementing the method according to any one of claims 1 to 21 or any one of claims 22 to 45.

47. A computer program product, **characterized in that**, when the computer program product is run on a computer, the computer is caused to perform the method according to any one of claims 1 to 45.

48. A computer-readable storage medium, **characterized in that** a computer program or instructions are stored on the computer-readable storage medium, and when the computer program or instructions are run on a computer, the computer is caused to perform the method according to any one of claims 1 to 45.

49. A chip, **characterized by** comprising: a communication interface and a processor; the communication interface being configured for signal transmission and reception of the chip; the processor being configured to execute a computer program or instructions, so as to cause a communication apparatus comprising the chip to perform the method according to any one of claims 1 to 45.
